(19) Europäisches Patentamt
European Patent Office
Office européen des brevets

(11) EP 2 088 558 B1

# (12) EUROPEAN PATENT SPECIFICATION

(45) Date of publication and mention of the grant of the patent:
**27.03.2013 Bulletin 2013/13**

(21) Application number: **07745013.8**

(22) Date of filing: **11.06.2007**

(51) Int Cl.:
***G06T 7/20*** *(2006.01)*
***H04N 5/232*** *(2006.01)*
***H04N 7/26*** *(2006.01)*
***H04N 7/36*** *(2006.01)*
*H04N 7/01* *(2006.01)*

(86) International application number:
**PCT/JP2007/061723**

(87) International publication number:
**WO 2008/065764 (05.06.2008 Gazette 2008/23)**

## (54) MOTION VECTOR DETECTING DEVICE

BEWEGUNGSVEKTOR-DETEKTIONSEINRICHTUNG

DISPOSITIF DE DÉTECTION DE VECTEUR DE MOUVEMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.11.2006 JP 2006323056**
**19.01.2007 JP 2007009732**

(43) Date of publication of application:
**12.08.2009 Bulletin 2009/33**

(73) Proprietor: **Mitsubishi Electric Corporation**
**Chiyoda-ku**
**Tokyo 100-8310 (JP)**

(72) Inventors:
- **SUKENO, Junji**
  **Tokyo 100-8310 (JP)**
- **SOTODA, Shuji**
  **Tokyo 100-8310 (JP)**
- **HATANO, Yoshiko**
  **Tokyo 100-8310 (JP)**
- **ONO, Yoshiki**
  **Tokyo 100-8310 (JP)**
- **SUGIYAMA, Kazuhiro**
  **Tokyo 100-8310 (JP)**

(74) Representative: **HOFFMANN EITLE**
**Patent- und Rechtsanwälte**
**Arabellastrasse 4**
**81925 München (DE)**

(56) References cited:
**WO-A1-2006/101032**
**JP-A- 2002 279 430**
**JP-A- 2004 343 483**
**JP-A- 2006 268 413**
**US-A1- 2004 258 307**

- **JOON KI PAIK ET AL: "AN ADAPTIVE MOTION DECISION SYSTEM FOR DIGITAL IMAGE STABILIZER BASED ON EDGE PATTERN MATCHING", IEEE TRANSACTIONS ON CONSUMER ELECTRONICS, IEEE SERVICE CENTER, NEW YORK, NY, US, vol. 38, no. 3, 1 August 1992 (1992-08-01) , pages 607-615, XP000311901, ISSN: 0098-3063, DOI: DOI: 10.1109/30.156744**
- **SEKINE M ET AL: "Motion Vector Detecting System for Video Image Stabilizers", 19940621; 19940621 - 19940623, 21 June 1994 (1994-06-21), pages 268-269, XP010218362,**
- **KENYA UOMORI ET AL: "AUTOMATIC IMAGE STABILIZING SYSTEM BY FULL-DIGITAL SIGNAL PROCESSING", IEEE TRANSACTIONS ON CONSUMER ELECTRONICS, IEEE SERVICE CENTER, NEW YORK, NY, US, vol. 36, no. 3, 1 August 1990 (1990-08-01) , pages 510-519, XP000162883, ISSN: 0098-3063, DOI: DOI: 10.1109/30.103167**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 088 558 B1

Printed by Jouve, 75001 PARIS (FR)

## Description

Technical Field

The present invention relates to a motion-vector detection device for detecting a motion vector between frame images of a preceding frame and a succeeding frame adjacent to each other in time sequence.

Background Art

As a conventional technique for detecting a motion vector, as described in Patent document 1, there is a method for dividing an image into a plurality of blocks, detecting an edge per block, and following the shift of edges, thereby detecting the motion vector. This method estimates the reliability by giving weight with the number of edges per block in order to reduce misjudgments in the case of a low spatial frequency without characteristic images such as sky or the case of a high spatial frequency with many characteristic points such as a lattice door. Further, as an edge detection method, the zero crossing method or the like is used.

Patent document 1: Patent gazette No. 3164121

The motion vector detection method disclosed in Patent document 1 reduces misjudgments by giving weight to the reliability of a motion vector calculated per block with the number of edges per block, but has a problem in that it is difficult to estimate the reliability of a motion vector in some detecting conditions.

For instance, even for the same periodic image, the difference arises in the reliability of the calculated motion vector, depending on the relation between its period and a motion detecting range. If the motion detecting range is smaller than the period, it appears to be easy to calculate a motion vector having reliability, however, if the motion detecting range is larger than the period, it appears to be difficult to calculate a motion vector having reliability. Further, even if a different motion is seen in a part of a subject photographed, the difference arises in the reliability of the calculated motion vector, depending on the extent of the motion. That is, when the motion of the part is small, a motion of the whole subject photographed can be properly detected, however, when a part of the motion is large, the motion of the whole subject photographed cannot be properly detected without being bothered by its motion, being affected by the motion.

Techniques for detecting a motion vector between frame images for use in hand shake correction or the like include one, as described in Patent document 2, that compares a pixel value with an adjacent pixel per pixel from a difference image per a plurality of time sequentially images, estimates a direction of a motion per direction, and calculates an average of the sum of a motion vector thereof to obtain a motion vector per pixel, thereby calculating a local motion vector (an optical flow).

At the same time, a smoothing process is performed to an optical flow obtained per pixel in order to lower (reduce) an influence of noise, such as averaging the sum of initially-estimated motion vectors including peripheral eight pixels.

Alternatively, Patent document 3 discloses the same smoothing method as Patent document 2 applied to a projection data, dividing an input image into each partial region, and calculating a motion vector of the entire image using a motion vector calculated per a plurality of partial regions.

Generally, as a method to remove noise, a low-pass filter of 3-tap consisted of 1/4, 1/2 and 1/4 as shown in Fig. 2 of Patent document 4 is often used.

Patent document 2: Japanese Patent Application Laid-Open No. H10-240945

Patent document 3: Japanese Patent Application Laid-Open No. 2002-63578

Patent document 4: Patent gazette No. 3314556

In the smoothing methods disclosed in Patent document 2 and Patent document 3, the calculated motion vector is smoothed by taking the average between the calculated motion vector and the results of peripheral pixels, and noise is not removed in an original image used for calculating a motion vector, and in a projection data itself. Therefore, the problem arises that the motion vector is not accurately calculated if noise affects even peripheral pixels because a motion vector is calculated by using data including noise.

Further, in the smoothing method using a low pass filter as disclosed in Patent document 4, a high-frequency component (characteristics) of the applied original image and a projection data is remarkably damaged so that even necessary characteristics (amount of characteristic) may be possibly-lost in calculating a motion vector.

WO 2006/101032 A1 relates to an image motion vector detecting device. The line memory 4H stores the output of the edge extraction filtering means corresponding to the one frame, and outputs data on the previous frame earlier by one frame to threshold intersection decision means. This means finds points intersected between a signal and the input threshold. Signal integration means generates a signal obtained by shifting the row data of the current frame by the amount of t+1, t+2, and so on. The generated signals are then used to calculate an average. When peak decision means determines a peak in a curved line, there may occur a situation in which a plurality of small peaks appears and a single peak does not appear.

Joon Ki Paik et al, "An adaptive motion decision system for digital image stabilizer based on edge pattern matching", IEEE Transactions on consume electronics, IEEE service center, New York, US 1 August 1992 relates to the effect of various environmental conditions which degrade the performance of a digital image stabilization system in a video camera. A new DIS system with an adaptive motion decision system, based on the analysis, is proposed. The proposed DIS system is composed of: (i) a local motion vector generation unit, (ii) a field motion vector generation unit, (iii) and accumulated motion vector generation unit, and (iv) field memory address control and digital zooming unit.

Sekine M et al, "Motion Vector Detecting System for Video Image Stabilizers", 21 June 1994 relates to a motion vector detecting system that computes 50 vectors from the video signal by the binary image matching method. It detects accurate motion vectors in various light conditions, and a vector integration technique enables the stabilizer to work naturally during zooming, rolling and tracking.

Disclosure of Invention

The invention is defined by the appended claims.

Brief Description of Drawings

[Fig.1] is a block diagram showing an essential configuration of a motion-vector detection device 1 (1A, 1B, 1C) according to a first embodiment of the present invention.
[Fig. 2] is a diagram for explaining pixel scanning directions in a frame image.
[Fig.3] is a block diagram showing an essential configuration of a horizontal-motion-vector detecting section 2.
[Fig.4] is a block diagram showing an essential configuration of a vertical-block projecting part 23.
[Fig.5] is a block diagram showing an essential configuration of a vertical-block horizontal-motion-vector calculating part 31.
[Fig.6] is a block diagram showing an essential configuration of a vertical-motion-vector detecting section 4.
[Fig.7] is a block diagram showing an essential configuration of a horizontal-block projecting part 43.
[Fig.8] is a block diagram showing an essential configuration of a horizontal-block vertical-motion-vector calculating part 50.
[Fig.9] shows diagrams for explaining the operations of a vertical image-dividing part 21 and the vertical-block projecting part 23.
[Fig. 10] is a diagram for explaining an n-arization process in n-arization parts 314(504).
[Fig.11] shows diagrams for explaining the operations of a first-threshold intersection searching part 29, a vertical-block projection-data reading part 30, and the vertical-block horizontal-motion-vector calculating part 31.
[Fig.12] shows diagrams for explaining the operations of an adder 315 and a peak detector 317.
[Fig.13] shows diagrams for explaining the operations of a horizontal image-dividing part 41 and the horizontal-block projecting part 43.
[Fig.14] shows diagrams for explaining the operations of a third-threshold intersection searching part 48, a horizontal-block projection-data reading part 49, and the horizontal-block vertical-motion-vector calculating part 50.
[Fig. 15] shows diagrams for explaining the operations of an adder 505 and a peak detector 507.
[Fig. 16] is a diagram for explaining a "crest" in the peak detector 317 (507).
[Fig. 17] is a diagram for explaining a first peak value (P1st) and a second peak value (P2nd) in the peak detector 317 (505).
[Fig.18] is a block diagram showing an essential configuration of a horizontal-motion-vector detecting section 2A in the motion-vector detection device 1A according to a second embodiment of the present invention.
[Fig.19] is a block diagram showing an essential configuration of a vertical-motion-vector detecting section 4A in the motion-vector detection device 1A.
[Fig.20] is a block diagram showing an essential configuration of a honzontal-motion-vector detecting section 2B.
[Fig.21] is a block diagram showing an essential configuration of a vertical-motion-vector detecting section 4B
[Fig. 22] is a diagram for explaining a smoothing process in a vertical-block projection-data smoothing part 34 (horizontal-block projection-data smoothing part 53).
[Fig. 23] is a diagram for explaining a smoothing process in the vertical-block projection-data smoothing part 34 (horizontal-block projection-data smoothing part 53).
[Fig. 24] is a diagram for explaining a smoothing process in the vertical-block projection-data smoothing part 34 (horizontal-block projection-data smoothing part 53).
[Fig. 25] is a diagram for explaining a smoothing process in the vertical-block projection-data smoothing part 34 (horizontal-block projection-data smoothing part 53).
[Fig. 26] is a diagram showing an example of a waveform of projection data for explaining a smoothing process in the vertical-block projection-data smoothing part 34 (horizontal-block projection-data smoothing part 53).
[Fig.27] is a diagram showing an example of a waveform of projection data for explaining a smoothing process in the vertical-block projection-data smoothing part 34 (horizontal-block projection-data smoothing part 53).
[Fig. 28] is a diagram showing an example of a waveform of projection data for explaining a smoothing process in the vertical-block projection-data smoothing part 34 (horizontal-block projection-data smoothing part 53).

[Fig. 29] is a diagram showing an example of a waveform of a vertical-block n-arized data (horizontal-block n-arized data) in the case of performing a smoothing process and in the case of not performing a smoothing process in the vertical-block projection-data smoothing part 34 (horizontal-block projection-data smoothing part 53).

[Fig.30] is a block diagram showing an essential configuration of a horizontal-motion-vector detecting section 2C in the motion-vector detection device 1C according to a fourth embodiment of the present invention.

[Fig.31] is a block diagram showing an essential configuration of a vertical-motion-vector detecting section 4C in the motion-vector detection device 1C.

Best Mode for Carrying Out the Invention

First embodiment

<Configuration of motion-vector detection device>

Fig. 1 is a block diagram showing an essential configuration of a motion-vector detection device 1 according to a first embodiment of the present invention.

The motion-vector detection device 1 is intended to detect an image motion vector indicative of the motion of a subject in a screen in moving images, for example, and detects a motion vector between frame images of a preceding frame and a succeeding frame adjacent to each other in time sequence. The motion vector detected in this motion-vector detection device I is used for hand shake correction in a video camera or the like. Frame images input to the motion-vector detection device 1 shall be read by carrying out pixel scanning in the horizontal direction and line scanning in the vertical direction, as shown in Fig. 2.

The motion-vector detection device 1 includes an input terminal 11, a horizontal-motion-vector detecting section 2, a vertical-motion-vector detecting section 4, and two output terminals 12, 13. Regarding these horizontal-motion-vector detecting section 2 and vertical-motion-vector detecting section 4, their functions may be achieved by software by a microprocessor, for example, or most part thereof may be achieved by hardware (other part by software). It is needless to say that all the functions may be achieved by hardware.

For example, image data (moving images) acquired by an imaging device within a video camera or image data such as vide- signals is input to the input terminal 11. A horizontal motion vector of the image data input to the input terminal 11 is detected in the horizontal-motion-vector detecting section 2, and the detected horizontal motion vector is output through the output terminal 12.

On the other hand, the vertical-motion-vector detecting section 4 detects a vertical motion vector of the image data input to the input terminal 11. This vertical motion vector detected by the vertical-motion-vector detecting section 4 is output through the output terminal 13.

The configurations of the horizontal-motion-vector detecting section 2 and vertical-motion-vector detecting section 4 will be described below in this order.

Fig. 3 is a block diagram showing an essential configuration of the horizontal-motion-vector detecting section 2. The horizontal-motion-vector detecting section 2 includes an input terminal 20, a vertical image-dividing part 21, a vertical-edge detection filtering part 22, a vertical-block projecting part 23, a first vertical-block projection-data maximum-value storage part 24, a bit-number reducing part 25, a first vertical-block projection line memory 26. The horizontal-motion-vector detecting section 2 further includes a second vertical-block projection line memory 27, a second vertical-block projection-data maximum-value storage part 28, a first-threshold intersection searching part 29, a vertical-block projection-data reading part 30, a vertical-block horizontal-motion-vector calculating part 31, a horizontal-motion-vector determining part 32, and an output terminal 33. Functions of the respective parts of the horizontal-motion-vector detecting section 2 will be described briefly (specific operations will be described later in detail).

The vertical image-dividing part 21 divides a frame image input to the input terminal 20 in the vertical direction, and outputs blocks divided vertically (hereinafter also called "vertical blocks").

The vertical-edge detection filtering part 22 carries out a filtering process for performing edge detection in each of the blocks divided by the vertical image-dividing part 21.

The vertical-block projecting part 23 obtains a vertical projection of an edge-enhanced vertical block output from the vertical-edge detection filtering part 22, and outputs projection data for each vertical block.

The first vertical-block projection-data maximum-value storage part 24 stores the maximum value of projection data of vertical blocks of the current frame output from the vertical-block projecting part 23 (hereinafter also referred to as "current-frame vertical-block projection-data maximum value" or "first vertical-block projection-data maximum value"). Further, the first vertical-block projection-data maximum-value storage part 24 calculates a second threshold value which will be described later on the basis of the first vertical-block projection-data maximum value.

The bit-number reducing part 25 reduces the number of bits of projection data of vertical blocks output from the vertical-block projecting part 23 on the basis of the first vertical-block projection-data maximum value stored in the first vertical-block projection-data maximum-value storage part 24. Vertical-block projection data with the number of bits reduced is called "first vertical-block projection data".

The first vertical-block projection line memory 26 stores the first vertical-block projection data with the number of bits having been reduced by the bit-number reducing part 25.

The second vertical-block projection line memory 27 stores the vertical-block projection data sent from the first vertical-block projection line memory 26 as vertical-block projection data of the preceding frame (hereinafter also referred to as "second vertical-block projection data").

The second vertical-block projection-data maximum-value storage part 28 stores the first vertical-block projection-data maximum value output from the first vertical-block projection-data maximum-value storage part 24 as "second vertical-block projection-data maximum value" of the preceding frame (also referred to as "preceding-frame vertical-block projection-data maximum value"). Further, the second vertical-block projection-data maximum-value storage part 28 calculates a first threshold value which will be described later on the basis of the second vertical-block projection-data maximum value.

The first-threshold intersection searching part 29 obtains an intersection of the waveform of the second vertical-block projection data of the preceding frame stored in the second vertical-block projection line memory 27 and the first threshold value calculated by the second vertical-block projection-data maximum-value storage part 28, and outputs information on this intersection (hereinafter also referred to as "a first threshold intersection").

The vertical-block projection-data reading part 30 reads the first vertical-block projection data falling within a predetermined range (motion vector detection range) with the first threshold intersection obtained by the first-threshold intersection searching part 29 placed at its center, from the first vertical-block projection line memory 26.

The vertical-block horizontal-motion-vector calculating part 31 n-arizes (where n is an integer not less than 2) each piece of the first vertical-block projection data read by the vertical-block projection-data reading part 30 using the second threshold value output from the first vertical-block projection-data maximum-value storage part 24, thereby reducing the number of bits, and adds the n-arized projection data per distance from the first threshold intersection.

The horizontal-motion-vector determining part 32 determines the horizontal motion vector of an image on the basis of the output from the vertical-block horizontal-motion-vector calculating part 31. The horizontal motion vector of the image determined here is output through the.output terminal 33.

Fig. 4 is a block diagram showing an essential configuration of the vertical-block projecting part 23. The vertical-block projecting part 23 includes an input terminal 231, an adder 232 for carrying out data addition per horizontal line, a vertical-projection temporary storage memory 233 as a buffer memory for successively storing data added by the adder 232, and an output terminal 234.

An image whose vertical edge has been enhanced by the vertical-edge detection filtering part 22 is input to the input terminal 231 per vertical block. A vertical projection of the image input to the input terminal 231 is obtained by the adder 232 and vertical-projection temporary storage memory 233 per vertical block. Specifically, data for one horizontal line of a vertical block and data for one horizontal line read from the vertical-projection temporary storage memory 233 are added in the adder 232, and the result of addition is returned again to the vertical-projection temporary storage memory 233 for storage. When addition of all the horizontal lines in the vertical block is completed by repeating such adding operation, added data of all the horizontal lines, that is, projection data in the vertical direction is to be output through the output terminal 234.

Fig. 5 is a block diagram showing an essential configuration of the vertical-block horizontal-motion-vector calculating part 31.

The vertical-block horizontal-motion-vector calculating part 31 includes three input terminals 311 to 313, an n-arization part 314, an adder 315 for adding the first vertical-block projection data having been n-arized in the n-arization part 314, a horizontal-motion-vector adding memory 316 as a buffer memory for successively storing data added by the adder 315, a peak detector 317, and an output terminal 318.

The first vertical-block projection data output from the vertical-block projection-data reading part 30 is input to the input terminal 311. The second threshold value output from the first vertical-block projection-data maximum-value storage part 24 is input to the input terminal 312. Further, the information on the first threshold intersection output from the first-threshold intersection searching part 29 is input to the input terminal 313.

The n-arization part 314 n-arizes (e.g., ternarizes) the first vertical-block projection data input through the input terminal 311 on the basis of the second threshold value input through the input terminal 312.

The adder 315 adds the first vertical-block projection data n-arized by the n-arization part 314 and the data read from the horizontal-motion-vector adding memory 316 with the first threshold intersection placed at its center, and the result of addition is stored again in the horizontal-motion-vector adding memory 316. When addition of all the first threshold intersections for the vertical blocks is completed by repeating such adding operation, added data for the vertical blocks is output to the peak detector 317.

The peak detector 317 detects the peak position (a horizontal motion vector which will be described later) and the peak value in the added data output from the adder 315. This peak position detected by the peak detector 317 is to be input to the horizontal-motion-vector determining part 32 through the output terminal 318.

Next, the configuration of the vertical-motion-vector detecting section 4 will be described. Fig. 6 is a block diagram showing an essential configuration of the vertical-motion-vector detecting section 4.

The vertical-motion-vector detecting section 4 includes an input terminal 40, a horizontal image-dividing part 41, a horizontal-edge detection filtering part 42, a horizontal-block projecting part 43, a first horizontal-block projection line memory 44, and a first horizontal-block projection-data maximum-value storage part 45. Further, the vertical-motion-vector detecting section 4 includes a second horizontal-block projection line memory 46, a second horizontal-block projection-data maximum-value storage part 47, a third-threshold intersection searching part 48, a horizontal-block projection-data reading part 49, a horizontal-block vertical-motion-vector calculating part 50, a vertical-motion-vector determining part 51, and an output terminal 52. Functions of the respective parts of the vertical-motion-vector detecting section 4 will be described briefly (specific operations will be described later in detail).

The horizontal image-dividing part 41 divides a frame image input to the input terminal 40 in the horizontal direction, and outputs blocks divided horizontally (hereinafter also called "horizontal blocks").

The horizontal-edge detection filtering part 42 carries out a filtering process for performing edge detection in each of the blocks divided by the horizontal image-dividing part 41.

The horizontal-block projecting part 43 obtains a horizontal projection of an edge-enhanced horizontal block output from the horizontal-edge detection filtering part 42, and outputs projection data for each horizontal block.

The first horizontal-block projection line memory 44 stores the horizontal-block projection data output from the horizontal-block projecting part 43 as horizontal-block projection data of the current frame (hereinafter also referred to as "first horizontal-block projection data").

The first horizontal-block projection-data maximum-value storage part 45 stores the maximum value of projection data of horizontal blocks of the current frame output from the horizontal-block projecting part 43 (hereinafter also referred to as "current-frame horizontal-block projecting-data maximum value" or "first horizontal-block projection-data maximum value").

The second horizontal-block projection line memory 46 stores the horizontal-block projection data sent from the first horizontal-block projection line memory 44 as horizontal-block projection data of the preceding frame (hereinafter also referred to as "second horizontal-block projection data").

The second horizontal-block projection-data maximum-value storage part 47 stores the first horizontal-block projection-data maximum value output from the first horizontal-block projection-data maximum-value storage part 45 as "second horizontal-block projection-data maximum value" of the preceding frame (also referred to as "preceding-frame horizontal-block projection-data maximum value"). Further, the second horizontal-block projection-data maximum-value storage part 47 calculates third and fourth threshold values which will be described later on the basis of the second horizontal-block projection-data maximum value.

The third-threshold intersection searching part 48 obtains an intersection of the second horizontal-block projection data of the preceding frame stored in the second horizontal-block projection line memory 46 and the third threshold value calculated by the second horizontal-block projection-data maximum-value storage part 47, and outputs the information on this intersection (hereinafter also referred to as "a third threshold intersection").

The horizontal-block projection-data reading part 49 reads the first horizontal-block projection data falling within a predetermined range (motion vector detection range) with the third threshold intersection obtained by the third-threshold intersection searching part 48 placed at its center, from the first horizontal-block projection line memory 44.

The horizontal-block vertical-motion-vector calculating part 50 n-arizes (where n is an integer not less than 2) each piece of the first horizontal-block projection data read by the horizontal-block projection-data reading part 49 using the fourth threshold value output from the second horizontal-block projection-data maximum-value storage part 47, thereby reducing the number of bits, and adds the n-arized projection data per distance from the third threshold intersection.

The vertical-motion-vector determining part 51 determines the vertical motion vector of an image on the basis of the output from the horizontal-block vertical-motion-vector calculating part 50. The vertical motion vector of the image determined here is output through the output terminal 52.

Fig. 7 is a block diagram showing an essential configuration of the horizontal-block projecting part 43. The horizontal-block projecting part 43 includes an input terminal 431, an adder 432 for carrying out addition of horizontal line data of horizontal blocks, a horizontal-projection temporary storage memory 433 as a buffer memory for successively storing data added by the adder 432, and an output terminal 434.

An image whose horizontal edge has been enhanced by the horizontal-edge detection filtering part 42 is input to the input terminal 431. A horizontal projection of the image input to the input terminal 431 is obtained per horizontal block by the adder 432 and horizontal-projection temporary storage memory 433. Specifically, with regard to pixels of one horizontal line in horizontal blocks, a pixel input through the input terminal 431 and the result of addition added in the adder 432 up to the preceding pixel and stored in the horizontal-projection temporary storage memory 433 are added in the adder 432, and the result of addition is returned again to the horizontal-projection temporary storage memory 433 for storage. When addition of one horizontal line in a horizontal block is completed by repeating such adding operation, added data of all the pixels in one horizontal line of that horizontal block, that is, projection data in the horizontal direction is to be output through the output terminal 434. Thereafter, projection data in the horizontal direction of the succeeding horizontal block is processed similarly, and when processing of all the horizontal blocks for one horizontal line is completed, the succeeding one horizontal line is processed.

Fig. 8 is a block diagram showing an essential configuration of the horizontal-block vertical-motion-vector calculating part 50.

The horizontal-block vertical-motion-vector calculating part 50 includes three input terminals 501 to 503, an n-arization part 504, an adder 505 for adding the first horizontal-block projection data having been n-arized in the n-arization part 504, a vertical-motion-vector adding memory 506 as a buffer memory for successively storing data added by the adder 505, a peak detector 507, and an output terminal 508.

The first horizontal-block projection data output from the horizontal-block projection-data reading part 49 is input to the input terminal 501. The fourth threshold value output from the second horizontal-block projection-data maximum-value storage part 47 is input to the input terminal 502. Further, the information on the third threshold intersection output from the third-threshold intersection searching part 48 is input to the input terminal 503.

The n-arization part 504 n-arizes (e.g., ternarizes) the first horizontal-block projection data input through the input terminal 501 on the basis of the fourth threshold value input through the input terminal 502.

The adder 505 adds the first horizontal-block projection data n-arized by the n-arization part 504 and the data read from the vertical-motion-vector adding memory 506 with the third threshold intersection placed at its center, and the result of addition is stored again in the vertical-motion-vector adding memory 506. When addition of all the third threshold intersections for the horizontal blocks is completed by repeating such adding operation, added data for the horizontal blocks is output to the peak detector 507.

The peak detector 507 detects the peak position (vertical motion vector which will be described later) and the peak value in the added data output from the adder 505. This peak position detected by the peak detector 507 is input to the vertical-motion-vector determining part 51 through the output terminal 508.

The operation of the motion-vector detection device 1 having the above-described configuration will be described below.

<Operation of motion-vector detection device 1>

<Operation of horizontal-motion-vector detecting section 2>

First, the operation of the horizontal-motion-vector detecting section 2 for detecting a horizontal motion vector of an image in the motion-vector detection device I will be described.

When a frame image read by sequentially repeating pixel scanning of horizontal lines in the vertical direction as shown in Fig. 2 is input to the input terminal 20 of the horizontal-motion-vector detecting section 2 shown in Fig. 3, it is divided into blocks in the vertical direction by the vertical image-dividing part 21. That is, the vertical image-dividing part 21 defines a plurality of image regions (vertical blocks) obtained by vertically dividing the frame image. In subsequent processes, processing and control is thereby carried out per vertical block.

In the vertical image-dividing part 21, image data of 640 pixels, by 480 pixels as shown in, for example, (a) portion of Fig. 9 is divided into seven vertical blocks vb0 to vb6 having a width of 64 pixels (division width) in the vertical direction. Image data of the lowermost layer, vertical block vb7, in the vertical direction is not to be used in detection of a horizontal motion vector, but no particular problem arises in detection accuracy since seven vertical blocks vb0 to vb6 which occupy the most part of the frame image are used in detection of the horizontal motion vector. Here, setting the division width and number of divisions as shown in (a) portion of Fig. 9 is not always necessary.

The image divided into the seven vertical blocks vb0 to vb6 in the vertical image-dividing part 21 as shown in (a) portion of Fig. 9 is subjected to detection of an edge component extending in the vertical direction, in other words, a filtering process for enhancing an image portion abruptly changing in the horizontal direction, in the vertical-edge detection filtering part 22.

As a filter for use in this filtering process, a (1, -1) 2-tap filter for simply obtaining the difference from an adjacent pixel in the horizontal direction, a (-1, 2, -1) 3-tap filter corresponding to a second derivative or the like can be employed. The use of such filter is not always necessary, and a filter that increases the output value in an image portion whose change in luminance increases in the horizontal direction will do.

Image data whose vertical edge has been enhanced for each of the vertical blocks (image regions) vb0 to vb6 in the vertical-edge detection filtering part 22 is input to the vertical-block projecting part 23, and projected in the vertical direction by the vertical-block projecting part 23. With this projection, a noise component (between lines) in the vertical direction can be reduced, and the vertical edge component can further be enhanced, so that the vertical edge corresponding to a characteristic point is made distinctive, which achieves improved motion-vector detection accuracy. The operation of the vertical-block projecting part 23 will be described with reference to the conceptual drawing shown in (b) portion of Fig. 9.

In the vertical-block projecting part 23, all arrayed elements are generated for each piece of vertical-block projection data vn0 to vn6 ((b) portion of Fig. 9) having a data array Mv for one horizontal line at the time when input of the respective vertical blocks vb0 to vb6 shown in (a) portion of Fig. 9 is completed, that is at the time when the last pixel on the last line in each of the edge-enhanced vertical blocks vb0 to vb6 is input. While the data array Mv contains arrayed elements of the total pixel number of a horizontal line (e.g., 640), valid elements in a 2-tap filter such as (1, -1) is the total pixel number of the horizontal line minus 1 (e.g., 639), and valid elements in a 3-tap filter such as (-1, 2, -1) is the total pixel number of the horizontal line minus 2 (e.g., 638).

Specifically, image data of the respective vertical blocks vb0 to vb6 (image data whose vertical edge has been enhanced) input through the input terminal 231 as shown in Fig. 4 is sequentially input to the adder 232.

The adder 232, first, writes the leading horizontal line of the input vertical block into the vertical-projection temporary storage memory 233 without reading data within the vertical-projection temporary storage memory 233. Next, the adder 232 reads the result of addition up to the preceding line stored in the vertical-projection temporary storage memory 233, and carries out an addition with one horizontal line of the vertical block input through the input terminal 231, and writes back the result of addition into the vertical-projection temporary storage memory 233.

Then, when the last horizontal line of the vertical block is input to the adder 232, the result of addition up to the preceding line stored in the vertical-projection temporary storage memory 233 is read, and an addition with the last line of the vertical block input through the input terminal 231 is carried out, and the result of addition, that is, data obtained by adding all the horizontal lines of the vertical block is output to the first vertical-block projection-data maximum-value storage part 24 and bit-number reducing part 25 through the output terminal 234, as vertical-block projection data.

In the adder 232, the projection data obtained by adding all the horizontal lines of the vertical block may be once stored in the vertical-projection temporary storage memory 233, and when the leading line of the succeeding vertical block is input, the projection data within the vertical-projection temporary storage memory 233 may be read to be output through the output terminal 234.

The first vertical-block projection-data maximum-value storage part 24 calculates the maximum value of the projection data output from the vertical-block projecting part 23, and stores it as the first vertical-block projection-data maximum value (current-frame vertical-block projection-data maximum value). That is, the first vertical-block projection-data maximum-value storage part 24 obtains the maximum value of arrayed elements of the data array Mv ((b) portion of Fig. 9) of the projection data of the current frame (succeeding frame), and stores this maximum value.

Further, the first vertical-block projection-data maximum-value storage part 24 calculates the second threshold value on the basis of the calculated current-frame vertical-block projection-data maximum value. For instance, defining the current-frame vertical-block projection-data maximum value as P1max, the second threshold value a2 is calculated by the following equation (1):

$$\alpha 2 = P1max \times k1 \ \dots (1)$$

where k1 is a previously-determined coefficient satisfying $0<k1<1$.

The calculation of the second threshold value a2 is not limited to the above equation (1), but may be anything that makes the second threshold value $\alpha 2$ larger as the current-frame vertical-block projection-data maximum value P1max increases, or alternatively, a conversion table may be used.

The bit-number reducing part 25 determines a valid bit range of projection data on the basis of the current-frame vertical-block projection-data maximum value (first vertical-block projection-data maximum value) input from the first vertical-block projection-data maximum-value storage part 24. Then, higher-order invalid bits and lower-order invalid bits defined on the basis of this valid bit range are omitted from the vertical-block projection data input from the vertical-block projecting part 23, and the current-frame vertical-block projection data composed only of valid bits is output to the first vertical-block projection line memory 26.

The first vertical-block projection line memory 26 stores the current-frame vertical-block projection data with the number of bits having been reduced by the bit-number reducing part 25, as the first vertical-block projection data, for each vertical block. That is, the projection data of the current frame (succeeding frame) with the number of bits (data length of each arrayed element) having been reduced by the bit-number reducing part 25 on the basis of the first vertical-block projection-data maximum value obtained in the first vertical-block projection-data maximum-value storage part 24 is stored in the first vertical-block projection line memory 26.

The first vertical-block projection line memory 26 reads the preceding-frame vertical-block projection data at the time when a new piece of first vertical-block projection data of the current frame is input, and supplies it to the second vertical-block projection line memory 27. The second vertical-block projection line memory 27 stores the preceding-frame vertical-block projection data read from the first vertical-block projection line memory 26, as the second vertical-block projection data.

Similarly, the first vertical-block projection-data maximum-value storage part 24 reads the first vertical-block projection-data maximum value already stored at the time when the new first vertical-block projection-data maximum value of the current frame is updated, and supplies it to the second vertical-block projection-data maximum-value storage part 28. The second vertical-block projection-data maximum-value storage part 28 stores the first vertical-block projection-data maximum value read from the first vertical-block projection-data maximum-value storage part 24, as the second vertical-block projection-data maximum value of the preceding frame (preceding-frame vertical-block projection-data maximum value).

In other words, the current-frame vertical-block projection-data maximum value stored in the first vertical-block projection-data maximum-value storage part 24 is to be stored as the preceding-frame vertical-block projection-data maximum value in the second vertical-block projection-data maximum-value storage part 28 in the succeeding frame.

The second vertical-block projection-data maximum-value storage part 28 defines the first threshold value (predetermined constant value) on the basis of the second vertical-block projection-data maximum value of the preceding frame. For instance, defining the preceding-frame vertical-block projection-data maximum value as P2max, the first threshold value $\alpha1$ is calculated by the following equation (2):

$$\alpha1 = P2max \times k2 \ldots (2)$$

where k2 is a previously-determined coefficient satisfying 0<k2<1.

The calculation of the first threshold value $\alpha1$ is not limited to the above equation (2), but may be anything that makes the first threshold value $\alpha1$ larger as the preceding-frame vertical-block projection-data maximum value P2max increases, or alternatively, a conversion table may be used.

The first-threshold intersection searching part 29 searches an intersection (first threshold intersection) of the second vertical-block projection data read from the second vertical-block projection line memory 27 and the first threshold value output from the second vertical-block projection-data maximum-value storage part 28, in the horizontal direction. Information on first threshold intersections obtained in this first-threshold intersection searching part 29 is output to the vertical-block projection-data reading part 30 and vertical-block horizontal-motion-vector calculating part 31.

The vertical-block projection-data reading part 30 reads the current-frame (first) vertical-block projection data corresponding to the motion vector detection range with the first threshold intersection output from the first-threshold intersection searching part 29 placed at its center, from the first vertical-block projection line memory 26. That is, letting the first threshold intersection be A(i) (where i = 1, 2, ... p: p is the total number of first threshold intersections as detected), and the motion vector detection range be (-V) to (+V) (where V is a positive integer) with the first threshold intersection placed at its center, the projection data read from the first vertical-block projection line memory 26 is to be partial data of the first vertical-block projection data falling within the range of (A(i)-V) to (A(i)+V) in the horizontal direction.

The first vertical-block projection data read from the first vertical-block projection line memory 26 by this vertical-block projection-data reading part 30 is output to the vertical-block horizontal-motion-vector calculating part 31.

The first vertical-block projection data output from the vertical-block projection-data reading part 30 is input to the n-arization part 314 through the input terminal 311 of the vertical-block horizontal-motion-vector calculating part 31 shown in Fig. 5. This n-arization part 314 n-arizes the first vertical-block projection data on the basis of the second threshold value output from the first vertical-block projection-data maximum-value storage part 24 and input through the input terminal 312. That is, the n-arization part 314 subjects the data length of each arrayed element of the data array Mv ((b) portion of Fig. 9) of the current-frame projection data extracted in the vertical-block projection-data reading part 30 to a ternarization process, for example, for compression. The process in this n-arization part 314 will be described with reference to Fig. 10.

Fig. 10 is a diagram for explaining an n-arization process in the n-arization part 314. Fig. 10 shows one example of a ternarization process where n = 3.

L**etting** the first vertical-block projection data input to the n-arization **part** 314 be D and the second threshold value input through the input terminal 312 be $\alpha2$ ($\alpha2$ is a positive integer), the n-arization part 314 outputs (-1) when $D<(-\alpha2)$, outputs 0 when $(-\alpha2)\leq D\leq\alpha2$. and outputs 1 when $D>\alpha2$, thereby performing a ternarization process. That is, in the ternarization process in the n-arization part 314, relating to the second threshold value $\alpha2$ ($\alpha2>0$) defined on the basis of the maximum value of the arrayed elements of the data array Mv in the current-frame (succeeding-frame) projection data, ternarization is performed in three levels of: the case where the value of an arrayed element of the current-frame projection data extracted in the vertical-block projection-data reading part 30 is smaller than ($-\alpha2$); the case where it is not smaller than ($-\alpha2$) and not larger than a2; and the case where it is larger than $\alpha2$.

In the n-arization process in this n-arization part 314, what positional relationship a partial waveform of the current-frame first vertical-block projection data output from the vertical-block projection-data reading part 30 has with respect to the first threshold intersection, that is, what tendency the waveform shows is of importance, and therefore, it is sufficient if such a bit accuracy that crests and troughs can be distinguished is ensured in the waveform of the first vertical-block projection data.

On the other hand, employing the very value of the first vertical-block projection data output from the vertical-block projection-data reading part 30 without performing the reduction of the number of bits in the n-arization part 314 might cause crests and troughs of small amplitude at which characteristics of an image appear to become lost in crests of large amplitude corresponding to the first vertical-block projection data D>a2 and troughs of large amplitude corresponding to D<(-$\alpha$2), which is not appropriate. Further, small crests and troughs corresponding to (-$\alpha$2)≤D≤$\alpha$2 are susceptible to noise and their number is large, in which crests and troughs of moderate amplitude at which characteristics of the image appear are to become lest.

Therefore, the n-arization part 314 achieves improved motion-vector detection accuracy by subjecting the first vertical-block projection data to an appropriate n-arization process.

Operations of the above-explained first-threshold intersection searching part 29, vertical-block projection-data reading part 30 and vertical-block horizontal-motion-vector calculating part 31 will be specifically explained referring to Fig. 11. The abscissa in (a) portion of Fig. 11 and (b) portion of Fig. 11 indicates the position of arrayed elements of the data array Mv ((b) portion of Fig. 9) of projection data. (a) portion of Fig. 11 indicates first threshold intersections A(1) to A(8) by circles, respectively.

The first-threshold intersection searching part 29 obtains the first threshold intersections A(1) to A(8) which intersect the first threshold value $\alpha$1 output from the second vertical-block projection-data maximum-value storage part 28 in the waveform of the second vertical-block projection data W2 of the preceding frame, as shown in (a) portion of Fig. 11. That is, the first-threshold intersection searching part 29 specifies the position of the arrayed elements of the respective first threshold intersections at which the waveform W2 obtained by graphing the values of the arrayed elements in the order of elements of the data array Mv ((b) portion of Fig. 9) of projection data relating to the projection data obtained in the vertical-block projecting part 23 for the preceding frame and the line on which the values of the arrayed elements stand at the first threshold value (predetermined constant value) $\alpha$1 intersect.

Next, the vertical-block projection-data reading part 30 reads the current-frame vertical-block projection data from the first vertical-block projection line memory 26 with respect to the predetermined motion vector detection range with the first threshold intersections A(1) to A(8) shown in (a) portion of Fig. 11 placed at its center. That is, the vertical-block projection-data reading part 30 extracts data arrays in the predetermined range with the position of arrayed elements of projection data (data array) in the respective first threshold intersections placed at its center, from the current-frame (succeeding-frame) projection data output from the vertical-block projecting part 23 with the number of bits having been reduced by the bit-number reducing part 25. For instance, with respect to the first threshold intersection A(7), first vertical-block projection data W1 corresponding to the range (the waveform portion within a rectangle indicated by broken lines) from (A(7)-V) to (A(7)+V) with the first threshold intersection A(7) as shown in (b) portion of Fig. 11 placed at its center is read.

Then, the first vertical-block projection data read by the vertical-block projection-data reading part 30 is subjected to the n-arization process in the n-arization part 314 of the vertical-block horizontal-motion-vector calculating part 31 using the second threshold value $\alpha$2 output from the first vertical-block projection-data maximum-value storage part 24. For instance, with respect to the first threshold intersection A(7), the first vertical-block projection data is subjected to the ternarization process as shown in (c) portion of Fig. 11 in the range (the waveform portion within a rectangle indicated by broken lines) from (A(7)-V) to (A(7)+V) with the first threshold intersection A(7) placed at its center, on the basis of the large-and-small relation between the first vertical-block projection data W 1 with respect to the second threshold values $\alpha$2 and (-$\alpha$2) shown in (b) portion of Fig. 11. Accordingly, the current-frame vertical-block projection data is to be expressed by "-1", "0" or "+1".

The n-arization part 314 performs an n-arization process as shown in (c) portion of Fig. 11 for all the first threshold intersections output from the first-threshold intersection searching part 29.

Next, the adder 315 (Fig. 5) adds the first vertical-block projection data n-arized by the n-arization pan 314 and the added values of the first vertical-block projection data n-arized up to the last one read from the horizontal-motion-vector adding memory 316 with the first threshold intersection output from the first-threshold intersection searching part 29 through the input terminal 313 placed at its center, and the result of addition is stored again in the horizontal-motion-vector adding memory 316. Then, the first vertical-block projection data n-arized relating to the last one of all the first threshold intersections detected by the first-threshold intersection searching part 29 is added by the adder 315, and when the addition process for one vertical block is finished, the result of addition is to be output to the peak detector 317. After the completion of the addition process in the adder 315, the result of addition may be read by the peak detector 317 from the horizontal-motion-vector adding memory 316 which stores the results of addition for all the first threshold intersections.

Data obtained by adding the first vertical-block projection data having been n-arized corresponding to the motion vector detection range (aforementioned range of ± V) with each first threshold intersection placed at its center, to all the first threshold intersections detected by the first-threshold intersection searching part 29 (hereinafter also referred to as "vertical-block n-arized data") is input to the peak detector 317, and a peak value of this vertical-block n-arized data is detected by the peak detector 317. The peak position of the vertical-block n-arized data detected in the peak detector 317 is to be a horizontal motion vector obtained from that vertical block, and output to the horizontal-motion-vector determining part 32 through the output terminal 318.

Operations of the above-explained adder 315 and peak detector 317 will be specifically explained referring to Fig. 12. (a) portion of Fig. 12 conceptually shows the first vertical-block projection data temarized in the motion vector detection range (range of ± V) with the first threshold intersections A(1) to A(8) shown in (a) portion of Fig. 11 placed at its center.

When the ternarized data around the first threshold intersections A(1) to A(8) shown in (a) portion of Fig. 12 is sequentially input, the adder 315 adds these pieces of data, and the vertical-block n-arized data as shown in (b) portion of Fig. 12 is generated. Specifically, the adder 315 adds values of arrayed elements having the same relative position with respect to the position of arrayed element of each first threshold intersection, for each data array in the motion vector detection range (predetermined range) of the current frame extracted by the vertical-block projection-data reading part 30 from the vertical-block projection data (data array Mv ((b) portion of Fig. 9) and compressed in data length in the n-arization part 314.

When the vertical-block n-arized data generated in the adder 315 is input to the peak detector 317, the peak position hv in the horizontal direction shown in (b) portion of Fig. 12 is detected as the horizontal motion vector of that vertical block. That is, the peak detector 317 detects the motion vector in the horizontal direction of a frame image on the basis of the result of addition added in the adder 315.

The peak detector 317 basically searches a peak position in which the vertical-block n-arized data is to be its maximum value in the motion vector detection range (range of ± V), but the peak with superiority may not sometimes appear for an image with periodicity, an image in which a subject has a motion and an unclear image. At this time, the reliability of the horizontal motion vector calculated from its vertical block is low, thereby to be determined as an invalid block, so that it should not be used for calculation of the horizontal motion vector of the entire image in the horizontal-motion-vector determining part 32.

Then, estimation of the reliability of the horizontal motion vector required for the peak detector 317 will be described below.

A word of "crest" is defined here to simplify the explanation. Fig. 16 is a view corresponding to (b) portion of Fig. 12, plotting a motion vector in abscissa and the vertical-block n-arized data in ordinate and showing one "crest" for descriptive purposes.

In Fig. 16, the respective vertical-block n-arized data at each relative position (horizontal motion vector) is marked with v1 to v10 in this order from the minus side. Data v1 is an "end of crest" of the previous crest, and also a "start of crest" which is searched from now on. As is not shown, the first "start of crest" is to be the vertical-block n-arized data of the horizontal motion vector residing at the utmost minus side (within range of -V to +V).

The peak detector 317 sequentially shifts a relative position to be a comparison target for a relative position to be a reference position (horizontal motion vector) from the minus side to the plus side, and on each time, compares the size of the vertical-block n-arized data at both relative positions. In this case, the peak detector 317 changes the vertical-block n-arized data, which is determined to be larger by the comparison, to the reference value (or maintains as the reference value), and compares with a relative position to be a succeeding comparison target. The reference value is referred to as a provisional peak value Vp here.

Specifically, data v1 which is a "start of crest" is made to be the reference value, that is, the provisional peak value Vp=v1, and compared with data v2 to begin with. Since it is v1>v2 as shown in Fig. 16, it is Vp>v2, and Vp=v1 is maintained. Next, the provisional peak value Vp is compared with data v3, which results in Vp>v3, and Vp=v1 is maintained.

Next, the provisional peak value Vp is compared with data v4, which results in Vp<v4, and Vp=v4, so that the provisional peak value Vp is changed. Similarly, the provisional peak value Vp is compared with data v5, which results in Vp<v5, and Vp=v5, so that the provisional peak value Vp is changed. Further, the provisional peak value Vp is compared with data v6, which results in Vp<v6, and Vp=v6, so that the provisional peak value Vp is changed.

The comparison between the provisional peak value Vp and data V7 results in Vp>v7, so that Vp=v6 is maintained, and the comparison between the provisional peak value Vp and data v8 results in Vp>v8, so that Vp=v6 is maintained. The comparison between the provisional peak value Vp and data V9 results in Vp>v9, so that Vp=v6 is maintained, and the comparison between the provisional peak value Vp and data v10 results in Vp>v10, so that Vp=v6 is maintained.

The horizontal motion vector exists further after data v10, but for setting a breakpoint here, the maximum value of the vertical-block n-arized data in one "crest" is defined as the maximum value Pn, and the horizontal motion vector having the vertical-block n-arized data smaller than the value which is set by multiplying the maximum value Pn by a predetermined coefficient is defined as a vector showing an "end of crest".

The predetermined coefficient to multiply the maximum value Pn is set as β (second coefficient satisfying 0<β<1), and data v10 is smaller than Vp×β so that data v10 is defined as a vector showing an "end of crest" ("start of next crest"). The predetermined coefficient β is empirically set as 1/2 or less, preferably within the range of 1/4 to 1 /8.

When the vertical-block n-arized data larger than the reference value is found by sequentially shifting the relative position to be a comparison target for the relative position to be a reference position (horizontal motion vector), as described above, the maximum value Pn (peak value) can be obtained by repeating update of the vertical-block n-arized data defined as the provisional peak value Vp of a "crest".

Then, one "crest" can be specified by defining the horizontal motion vector having the vertical-block n-arized data which is smaller than the value set by multiplying the maximum value Pn by a predetermined coefficient as a vector showing an "end of crest" ("start of next crest").

The above explanation shows the example to sequentially, shift the relative position to be a comparison target from the minus side to the plus side. In contrast, the maximum value Pn may be obtained by sequentially shifting the relative position to be a comparison target from the plus side to the minus side.

"Crest" may be treated as being of existence by simply defining the part in which the vertical-block n-arized data is shifted from increase to decrease as the maximum value Pn, but it is preferable to define an "end of crest" with the horizontal motion vector having the vertical-block n-arized data which is smaller than the value set by multiplying the maximum value Pn of the vertical-block n-arized data by a predetermined coefficient to capture the waveform as a whole.

The maximum value Pn of the vertical-block n-arized data obtained for one "crest" is stored, and the similar process is carried out to the next "crest". "Crest" can be specified over the entire motion vector detection range, and the maximum value Pn (peak value) of the vertical-block n-arized data can be obtained, by repeating this operation.

Fig. 17 shows the vertical-block n-arized data to each motion vector over the entire motion-vector detection range, and the waveform in which five "crests" of M1, M2, M3, M4 and M5 exist.

Each peak value of the crests M1 to M5 is P1 to P5, and the maximum value of these peak values is referred to as a first peak value (P1st) and the next maximum value is referred to as a second peak value (P2nd), and thereby the first peak value is to be the maximum value of the vertical-block n-arized data of the crest M3 and P1st=P3. Also, the second peak value is to be the maximum value of the vertical block n-arized data of the crest M2 and P2nd=P2.

As the first peak value (P1st) becomes larger than the peak values of the other "crests", the motion vector corresponding thereto is to show the demanded vertical-block motion, meaning high reliability of the calculated motion vector. Accordingly, the reliability is estimated by comparing the first peak value (P1st) and the second peak value (P2nd). Specifically, it is estimated by the following equation (3):

[0134] $$P2nd > P1st \times \gamma \ldots (3)$$

where $\gamma$ is a previously-determined coefficient (first coefficient) satisfying $0<\gamma<1$.

When the above equation (3) is established, the obtained motion vector is determined not to have the reliability so that the result of calculation is treated as invalid. It is needless to say that the equation (3) may include =.

As $\gamma$ draws closer to 1 in the equation (3), the difference between the first peak value (P1st) and the second peak value (P2nd) gets smaller, meaning to allow large variations. Under this condition, the result of calculation is to be determined as valid within a large range as much as possible even for the cases other than the ideal case where the image is clear and has no periodicity, and the subject is still, so that the result of calculation can be treated as valid, allowing certain degree of erroneous detection (misjudgment).

To the contrary, as $\gamma$ draws closer to 0, the first peak value (P1st) must be large enough to the second peak value (P2nd), meaning not to allow variations. Under this condition, a motion vector can be calculated with great accuracy only in the ideal case where the image is clear and has no periodicity, and the subject is still. On the other hand, the probability of treating the result of calculation as invalid increases in the cases other than the ideal case.

The coefficient $\gamma$ may be constituted so that a user of a moving image taking device to which the present invention is applied may decide, or a manufacturer of the moving image taking device to which the present invention is applied may decide.

Furthermore, the peak detector 317 treats the result of calculation as invalid when the maximum value of the peak value Pn of a "crest" is not larger than the previously-determined value, specifically when the peak value Pn is remarkably small to the total pixel number of a horizontal line. A small peak value Pn means less valid first threshold intersections.

When the valid first threshold intersections are remarkably less to the total pixel number of a horizontal line, for example, when the peak value Pn=3 to the total pixel number of 640 pixels, it means poor characteristics in a horizontal direction as an image, and the result of calculation obtained on the basis of this poor information is not employed, which is extremely effective in obtaining the horizontal motion vector with high accuracy.

The previously-determined value in this process is, for example, set within the range less than 1/50 of the total pixel number of a horizontal line, and more realistically almost 1/100.

The horizontal motion vectors (vectors at peak positions) calculated per vertical block in the peak detector 317 are input to the horizontal-motion-vector determining part 32 through the output terminal 318.

The horizontal-motion-vector determining part 32 determines the horizontal motion vector of the entire image on the basis of the horizontal motion vectors of the respective vertical blocks sequentially output from the vertical-block horizontal-motion-vector calculating part 31. Specifically, a histogram is created to employ one with the greatest number of the vertical-block n-arized data.

As described in the above, the peak detector 317 can estimate the reliability of the peak position (motion vector) to be the first peak value P1st by the large-and-small relation between the first peak value P1st and the second peak value P2nd, and as a result, vertical blocks having low reliability can be omitted so that the horizontal motion vector of the entire image can be determined on the basis of vertical blocks having high reliability.

<Operalion of vertical-motion-vector detecting section 4>

Next, the operation of the vertical-motion-vector detecting section 4 for detecting a vertical motion vector of the image in the motion-vector detection device 1 will be explained.

When a frame image read by sequentially repeating pixel scanning of horizontal lines in the vertical direction as shown in Fig. 2 is input to the input terminal 40 of the vertical-motion-vector detecting section 4 shown in Fig. 6, it is divided into blocks in the horizontal direction by the horizontal image-dividing part 41. That is, the horizontal image-dividing part 41 defines a plurality of image regions (horizontal blocks) obtained by horizontally dividing the frame image. In subsequent processes, processing and control is thereby carried out per horizontal block.

In the horizontal image-dividing part 41, image data of 640 pixels by 480 pixels as shown in, for example, (a) portion of Fig. 13 is divided into ten horizontal blocks hb0 to hb9 having a width of 64 pixels (division width) in the horizontal direction. Here, setting the division width and number of divisions as shown in (a) portion of Fig. 13 is not always necessary.

The image divided into the ten vertical blocks hb0 to hb9 in the horizontal image-dividing part 41 as shown in (a) portion of Fig. 13 is subjected to detection of an edge component extending in the horizontal direction, in other words, a filtering process for enhancing an image portion abruptly changing in the vertical direction, in the horizontal-edge detection filtering part 42.

As a filter for use in this filtering process, a (1, -1) 2-tap filter for simply obtaining the difference from an adjacent pixel in the vertical direction, a (-1, 2, -1) 3-tap filter corresponding to a second derivative or the like can be employed. The use of such filter is not always necessary, and a filter that increases the output value in an image portion whose change in luminance increases in the vertical direction will do.

image data whose horizontal edge has been enhanced for each of the horizontal blocks (image regions) hb0 to hb9 in the horizontal-edge detection filtering part 42 is input to the horizontal-block projecting part 43, and projected in the horizontal direction by the horizontal-block projecting part 43. With this projection, a noise component (between lines) in the horizontal direction can be reduced, and the horizontal edge component can further be enhanced, so that the horizontal edge corresponding to a characteristic point is made distinctive, which achieves improved motion-vector detection accuracy. The operation of the horizontal-block projecting part 43 will be described with reference to the conceptual drawing shown in (b) portion of Fig. 13.

In the horizontal-block projecting part 43, one arrayed element of horizontal-block projection data hn0 to hn9 ((b) portion of Fig. 13) having a data array Mh for one vertical line is generated at the time when input of the respective horizontal blocks hb0 to hb9 shown in (a) portion of Fig. 13 is completed. Accordingly, all arrayed elements are completed at the time when input of the last horizontal line of the respective horizontal blocks hb0 to hb9 is completed. While the data array Mh contains arrayed elements of the total pixel number of a vertical line (e.g., 480), valid elements in a 2-tap filter such as (1, -1) is the total pixel number of the vertical line minus 1 (e.g., 479), and valid elements in a 3-tap filter such as (-1,2,-1) is the total pixel number of the vertical line minus 2 (e.g., 478).

Specifically, image data of the respective horizontal blocks hb0 to hb9 (image data whose horizontal edge has been enhanced) input through the input terminal 431 as shown in Fig. 7 is input to the adder 432.

The adder 432, first, writes the leading horizontal line of the input horizontal block into the horizontal-projection temporary storage memory 433 without reading data within the horizontal-projection temporary storage memory 433.

Next, the adder 432 reads the result of addition up to the preceding pixel of one horizontal line stored in the horizontal-projection temporary storage memory 433, and carries out an addition with the current pixel of one horizontal line of the horizontal block input through the input terminal 431, and writes back the result of addition into the horizontal-projection temporary storage memory 433. Then, when the last pixel of one horizontal line in the horizontal block is input to the adder 432, the result of addition up to the preceding pixel stored in the horizontal-projection temporary storage memory 433 is read, and an addition with the last pixel of one horizontal line of the horizontal block input through the input terminal 431 is carried out, and the result of addition, that is, data obtained by adding all the pixels of one horizontal line of the horizontal block is output to the first horizontal-block projection line memory 44 and first horizontal-block projection-data maximum-value storage part 45 through the output terminal 434, as projection data for one horizontal line of the horizontal block.

In the adder 432, the projection data obtained by adding all the pixels of one horizontal line of the horizontal block may be once stored in the horizontal-projection temporary storage memory 433, and when the leading pixel of one horizontal line of the succeeding horizontal block is input, the projection data within the horizontal-projection temporary storage memory 433 may be read to be output through the output terminal 434.

The first horizontal-block projection line memory 44 stores the current-frame horizontal-block projection data input from the horizontal-block projecting part 43 as the first horizontal-block projection data, per horizontal block.

The first horizontal-block projection-data maximum-value storage part 45 calculates the maximum value of the horizontal-block projection data input from the horizontal-block projecting part 43 and stores it as the first horizontal-block projection-data maximum value (current-frame horizontal-block projection-data maximum value).

The second horizontal-block projection line memory 46 stores the horizontal-block projection data read from the first horizontal-block projection line memory 44 as the second horizontal-block projection data of the preceding frame.

Similarly, the second horizontal-block projection-data maximum-value storage part 47 stores the first horizontal-block projection-data maximum value output from the first horizontal-block projection-data maximum-value storage part 45 as the second horizontal-block projection-data maximum value of the preceding frame (preceding-frame horizontal-block projection-data maximum value).

In other words, the current-frame horizontal-block projection-data maximum value stored in the first horizontal-block projection-data maximum-value storage part 45 is to be stored in the second horizontal-block projection-data maximum-value storage part 47 in the succeeding frame as the preceding-frame horizontal-block projection-data maximum value.

Further, the second horizontal-block projection-data maximum-value storage part 47 calculates the fourth threshold value on the basis of the calculated preceding-frame horizontal-block projection-data maximum value. For instance, defining the preceding-frame horizontal-block projection-data maximum value as P4max, the fourth threshold value $\alpha 4$ is calculated by the following equation (4):

$$\alpha 4 = P4max \times k4 \ldots (4)$$

where k4 is a previously-determined coefficient satisfying 0<k4<1.

The calculation of the fourth threshold value $\alpha 4$ is not limited to the above equation (4), but may be anything that makes the fourth threshold value $\alpha 4$ larger as the preceding-frame horizontal-block projection-data maximum value P4max increases, or alternatively, a conversion table may be used. Further, it is not always necessary to use the second horizontal-block projection-data maximum value of each horizontal block for the fourth threshold value $\alpha 4$, but the fourth threshold value may be calculated using the horizontal-block projection-data maximum value of the entire image of the preceding frame, and the same fourth threshold value may be employed for the entire image.

The second horizontal-block projection-data maximum-value storage part 47 determines the third threshold value (predetermined constant value) on the basis of the second horizontal-block projection-data maximum value of the preceding frame. For instance, defining the preceding-frame horizontal-block projection-data maximum value as P3max, the third threshold value $\alpha 3$ is calculated by the following equation (5):

$$\alpha 3 = P3max \times k3 \ldots (5)$$

where k3 is a previously-determined coefficient satisfying 0<k3<1.

The calculation of the third threshold value $\alpha 3$ is not limited to the above equation (5), but may be anything that makes the third threshold value $\alpha 3$ larger as the preceding-frame horizontal-block projection-data maximum value P3max increases, or alternatively, a conversion table may be used. Further, it is not always necessary to use the second horizontal-block projection-data maximum value of each horizontal block for the third threshold value $\alpha 3$, but the third threshold value may be calculated using the horizontal-block projection-data maximum value of the entire image of the preceding frame, and the same third threshold value may be employed for the entire image.

The third-threshold intersection searching part 48 searches an intersection (third threshold intersection) of the second horizontal-block projection data read from the second horizontal-block projection line memory 46 and the third threshold value output from the second horizontal-block projection-data maximum-value storage part 47, in the vertical direction. Information on this third threshold intersection obtained in this third-threshold intersection searching part 48 is input to the horizontal-block projection-data reading part 49 and horizontal-block vertical-motion-vector calculating part 50.

The horizontal-block projection-data reading part 49 reads the current-frame (first) horizontal-block projection data corresponding to the motion vector detection range with the third threshold intersection output from the third-threshold intersection searching part 48 placed at its center, from the first horizontal-block projection line memory 44. That is, letting the third threshold intersection be B(i) (where i = 1, 2, ... q; q is the total number of third threshold intersections as detected), and the motion vector detection range be (-U) to (+U) (where U is a positive integer) with the third threshold intersection placed at its center, the projection data read from the first horizontal-block projection line memory 44 is to be partial data of the first horizontal-block projection data falling within the range of (B(i)-U) to (B(i)+U) in the vertical direction.

The first horizontal-block projection data read from the first horizontal-block projection line memory 44 by this horizontal-block projection-data reading part 49 is output to the horizontal-block vertical-motion-vector calculating part 50.

The first horizontal-block projection data output from the horizontal-block projection-data reading part 49 is input to the n-arization part 504 through the input terminal 501 of the horizontal-block vertical-motion-vector calculating part 50 shown in Fig. 8.

This n-arization part 504 n-arizes the first horizontal-block projection data on the basis of the fourth threshold value output from the second horizontal-block projection-data maximum-value storage part 47 and input through the input terminal 502. That is, the n-arization part 504 compresses the data length of each arrayed element of the data array Mh ((b) portion of Fig. 13) of the current-frame projection data extracted in the horizontal-block projection-data reading part 49.

The n-arization part 504 performs processing similar to the aforementioned n-arization part 314, where a ternarization process, for example, is executed. That is, in the ternarization process in the n-arization part 504, relating to the fourth threshold value $\alpha4$ ($\alpha4>0$) defined on the basis of the maximum value of the arrayed elements of the data array Mh in the preceding-frame projection data, ternarization is performed in three levels of: the case where the value of an arrayed element of the current-frame projection data extracted in the horizontal-block projection-data reading part 49 is smaller than ($-\alpha4$); the case where it is not smaller than ($-\alpha4$) and not larger than ($\alpha4$; and the case where it is larger than $\alpha4$. It is not absolutely necessary that the n-arization part 504 have the same characteristics as the n-arization part 314, but it may have different characteristics from the n-arization part 314.

Operations of the above-explained third-threshold intersection searching part 48, and horizontal-block projection-data reading part 49 and horizontal-block vertical-motion-vector calculating part 50 will be specifically explained referring to Fig. 14. The abscissa in (a) portion of Fig. 14 and (b) indicates the position of arrayed elements of the data array Mh ((b) portion of Fig. 13) of projection data. (a) portion of Fig. 14 indicates third threshold intersections B(1) to B(6) by circles, respectively.

The third-threshold intersection searching part 48 obtains the third threshold intersections B(i) to B(6) which intersect the third threshold value $\alpha3$ output from the second horizontal-block projection-data maximum-value storage part 47 in the waveform of second vertical-block projection data W4 of the preceding frame, as shown in (a) portion of Fig. 14. That is, the third-threshold intersection searching part 48 specifies the position of the arrayed elements of the respective third threshold intersections at which the waveform W4 obtained by graphing the values of the arrayed elements in the order of elements of the data array Mh ((b) portion of Fig. 13) of projection data relating to the projection data obtained in the horizontal-block projecting part 43 for the preceding frame and the line on which the values of the arrayed elements stand at the third threshold value (predetermined constant value) $\alpha3$ intersect.

Next, the horizontal-block projection-data reading part 49 reads the current-frame horizontal-block projection data from the first horizontal-block projection line memory 44 with respect to the predetermined motion vector detection range with the third threshold intersections B(1) to B(6) shown in (a) portion of Fig. 14 placed at its center. That is, the horizontal-block projection-data reading part 49 extracts data arrays in the predetermined range with the position of arrayed elements of projection data (data array) in each third threshold intersection placed at its center, from the current-frame (succeeding-frame) projection data obtained from the horizontal-block projecting part 43. For instance, with respect to the third threshold intersection B(4), first horizontal-block projection data W3 corresponding to the range (the waveform portion within a rectangle indicated by broken lines) from (B(4)-U) to (B(4)+U) with the third threshold intersection B(4) as shown in (b) portion of Fig. 14 placed at its center is read.

Then, the first horizontal-block projection data read by the horizontal-block projection-data reading part 49 is subjected to the n-arization process in the n-arization part 504 of the horizontal-block vertical-motion-vector calculating part 50 using the fourth threshold value $\alpha4$ output from the second horizontal-block projection-data maximum-value storage part 47. For instance, with respect to the third threshold intersection B(4), the first horizontal-block projection data is subjected to the ternarization process as shown in (c) portion of Fig. 14 in the range (the waveform portion within a rectangle indicated by broken lines) from (B(4)-U) to (B(4)+U) with the third threshold intersection B(4) placed at its center, on the basis of the large-and-small relation between the first horizontal-block projection data W3 with respect to the fourth threshold values $\alpha4$ and ($-\alpha4$) shown in (b) portion of Fig. 14. Accordingly, the current-frame horizontal-block projection data is to be expressed by "-1", "0" or "+1".

The n-arization part 504 performs an n-arization process as shown in (c) portion of Fig. 14 for all the third threshold intersections output from the third-threshold intersection searching part 48.

Next, the adder 505 (Fig. 8) adds the first horizontal-block projection data n-arized by the n-arization part 504 and the added values of the first horizontal-block projection data n-arized up to the last one read from the vertical-motion-vector adding memory 506 with the third threshold intersection output from the third-threshold intersection searching part 48 through the input terminal 503 placed at its center, and the result of addition is stored again in the vertical-motion-vector adding memory 506. Then, the first horizontal-block projection data n-arized relating to the last one of all the third threshold intersections detected by the third-threshold intersection searching part 48 is added by the adder 505, and when the addition process for one horizontal block is finished, the result of addition is to be output to the peak detector 507. After the completion of the addition process in the adder 505, the result of addition may be read by the peak detector 507 from the vertical-motion-vector adding memory 506 which stores the results of addition for all the third threshold intersections.

Data obtained by adding the first horizontal-block projection data having been n-arized corresponding to the motion vector detection range (aforementioned range of ± U) with each third threshold intersection placed at its center, to all the third threshold intersections detected by the third-threshold intersection searching part 48 (hereinafter also referred to as "horizontal-block n-arized data") is input to the peak detector 507, and a peak value of this horizontal-block n-arized data is detected by the peak detector 507. The peak position of the horizontal-block n-arized data detected in the peak detector 507 is to be a vertical motion vector obtained from that horizontal block, and output to the vertical-motion-vector determining part 51 through the output terminal 508.

Operations of the above-explained adder 505 and peak detector 507 will be specifically explained referring to Fig. 15. (a) portion of Fig. 15 conceptually shows the first horizontal-block projection data temarized in the motion vector detection range (aforementioned range of ± U) with the third threshold intersections B(1) to B(6) shown in (a) portion of Fig. 14 placed at its center.

When the temarized data around the third threshold intersections B(1) to B(6) shown in (a) portion of Fig. 15 is sequentially input, the adder 505 adds these pieces of data, and the horizontal-block n-arized data as shown in (b) portion of Fig. 15 is generated. Specifically, the adder 505 adds values of arrayed elements having the same relative position with respect to the position of arrayed element of each third threshold intersection, for each data array in the motion vector detection range (predetermined range) of the current frame extracted from the horizontal-block projection data (data array Mh ((b) portion of Fig. 13)) by the horizontal-block projection-data reading part 49 and compressed in data length in the n-arization part 504.

When the horizontal-block n-arized data generated in the adder 505 is input to the peak detector 507, the peak position vv in the vertical direction shown in (b) portion of Fig. 15 is detected as the vertical motion vector of that horizontal block. That its, the peak detector 507 detects the motion vector in the vertical direction of a frame image on the basis of the result of addition added in the adder 505.

The peak detector 507 basically searches a peak position in which the horizontal-block n-arized data is to be its maximum value in the motion vector detection range (range of ± U), but the peak with superiority may not sometimes appear for an image with periodicity, an image in which a subject has a motion and an unclear image. At this time, the reliability of the vertical motion vector calculated from its horizontal block is low, thereby to be determined as an invalid block, so that it should not be used for calculation of the vertical motion vector of the entire image in the vertical-motion-vector determining part 51.

Then, estimation of the reliability of the vertical motion vector required for the peak detector 507 will be described hereinbelow. The operation of the estimation of the reliability in the peak detector 507 is basically same as the peak detector 317 explained referring to Figs. 16 and 17. Accordingly, it will be described incorporating Figs. 16 and 17.

Fig. 16 is a view corresponding to (b) portion of Fig. 15, plotting a motion vector in abscissa and the horizontal-block n-arized data in ordinate and showing one "crest" for descriptive purposes.

In Fig. 16, the respective horizonatl-block n-arized data at each relative position (vertical motion vector) is marked with v1 to v10 in this order from the minus side. Data v1 is an "end of crest" of the previous crest, and also a "start of crest" which is searched from now on. As is not shown, the first "start of crest" is to be the horizontal-block n-arized data of the vertical motion vector residing at the utmost minus side (within range of-U to +U).

The peak detector 507 sequentially shifts a relative position to be a comparison target for a relative position to be a reference position (vertical motion vector) from the minus side to the plus side, and on each time, compares the size of the horizontal-block n-arized data at both relative positions. In this case, the peak detector 507 changes the horizontal-block n-arized data, which is determined to be larger by the comparison, to the reference value (or maintains as the reference value), and compares with a relative position to be a succeeding comparison target. The reference value is referred to as a provisional peak value Vp here.

Specifically, data v1 which is a "start of crest" is made to be the reference value, that is, the provisional peak value Vp=v1, and compared with data v2 to begin with. Since it is v1>v2 as shown in Fig. 16, it is Vp>v2, and Vp=v1 is maintained. Next, the provisional peak value Vp is compared with data v3, which results in Vp>v3. and Vp=v1 is maintained.

Next, the provisional peak value Vp is compared with data v4, which results in Vp<v4, and Vp=v4, so that the provisional peak value Vp is changed. Similarly, the provisional peak value Vp is compared with data v5, which results in Vp<v5, and Vp=v5, so that the provisional peak value Vp is changed. Further, the provisional peak value Vp is compared with data v6, which results in Vp<v6, and Vp=v6, so that the provisional peak value Vp is changed.

The comparison between the provisional peak value Vp and data V7 results in Vp>v7, so that Vp=v6 is maintained, and the comparison between the provisional peak value Vp and data v8 results in Vp>v8, so that Vp=v6 is maintained. The comparison between the provisional peak value Vp and data V9 results in Vp>v9, so that Vp=v6 is maintained, and the comparison between the provisional peak value Vp and data v10 results in Vp>v10, so that V p=v6 is maintained.

The vertical motion vector exists further after data v10, but for setting a breakpoint here, the maximum value of the horizontal-block n-arized data in one "crest" is defined as the maximum value Pn, and the vertical motion vector having the horizontal-block n-arized data smaller than the value which is set by multiplying the maximum value Pn by a predetermined coefficient is defined as a vector showing an "end of crest".

The predetermined coefficient to multiply the maximum value Pn is set as $\beta$ ($0<\beta<1$), and data v10 is smaller than $Vp\times\beta$ so that data v10 is defined as a vector showing an "end of crest" ("start of next crest"). The predetermined coefficient $\beta$ is empirically set as 1/2 or less, preferably within the range of 1/4 to 1/8.

When the horizontal-block n-arized data larger than the reference value is found by sequentially shifting the relative position to be a comparison target for the relative position to be a reference position (vertical motion vector), as described above, the maximum value Pn (peak value) can be obtained by repeating update of the horizontal-block n-arized data defined as the provisional peak value Vp of a "crest".

Then, one "crest" can be specified by defining the vertical motion vector having the horizontal-block n-arized data which is smaller than the value set by multiplying the maximum value Pn by a predetermined coefficient as a vector showing an "end of crest" ("start of next crest").

The above explanation shows the example to sequentially shift the relative position to be a comparison target from the minus side to the plus side. In contrast, the maximum value Pn may be obtained by sequentially shifting the relative position to be a comparison target from the plus side to the minus side.

"Crest" may be treated as being of existence by simply defining the part in which the horizontal-block n-arized data is shifted from increase to decrease as the maximum value Pn, but it is preferable to define an end of crest" with the vertical motion vector having the horizontal-block n-arized data which is smaller than the value set by multiplying the maximum value Pn of the horizontal-block n-arized data by a predetermined coefficient to capture the waveform as a whole.

The maximum value Pn of the horizontal-block n-arized data obtained for one "crest" is stored, and the similar process is carried out to the next "crest". "Crest" can be specified over the entire motion-vector detection range, and the maximum value Pn (peak value) of the horizontal-block n-arized data can be obtained by repeating this operation.

Fig. 17 shows the horizontal-block n-arized data to each motion vector over the entire motion-vector detection range, and the waveform in which five "crests" of M1, M2, M3, M4 and M5 exist.

Each peak value of the crests M1 to M5 is P1 to P5, the maximum value of these peak values is referred to as a first peak value (P1st) and the next maximum value is referred to as a second peak value (P2nd), and thereby the first peak value is to be the maximum value of the horizontal-block n-arized data of the crest M3 and P1st=P3. Also, the second peak value is to be the maximum value of the horizontal-block n-arized data of the crest M2 and P2nd=P2.

As the first peak value (P1st) becomes larger than the peak values of the other "crests", the motion vector corresponding thereto is to show the demanded horizontal-block motion, meaning high reliability of the calculated motion vector. Accordingly, the reliability is estimated by comparing the first peak value (P1st) and the second peak value (P2nd). Specifically, it is estimated by the aforementioned equation (3).

When the equation (3) is established, the obtained motion vector is determined not to have the reliability so that the result of calculation is treated as invalid. It is needless to say that the equation (3) may include=.

As $\gamma$ draws closer to 1 in the equation (3), the difference between the first peak value (P1st) and the second peak value (P2nd) gets smaller, meaning to allow large variations. Under this condition, the result of calculation is to be determined as valid within a large range as much as possible even for the cases other than the ideal case where the image is clear and has no periodicity, and the subject is still, so, that the result of calculation can be treated as valid, allowing certain degree of erroneous detection (misjudgment).

To the contrary, as $\gamma$ draws closer to 0, the first peak value (P1st) must be large enough to the second peak value (P2nd), meaning not to allow variations. Under this condition, a motion vector can be calculated with great accuracy only in the ideal case where the image is clear and has no periodicity, and the subject is still. On the other hand, the probability of treating the result of calculation as invalid increases in the cases other than the ideal case.

Furthermore, the peak detector 507 treats the result of calculation as invalid when the maximum value of the peak value Pn of a "crest" is not larger than the previously-determined value, specifically when the peak value Pn is remarkably small to the total pixel number of a vertical line. A small peak value Pn means less valid third threshold intersections.

When the valid third threshold intersections are remarkably less to the total pixel number of a vertical line, for example, when the peak value Pn=2 to the total pixel number of a vertical line of 480 pixels, it means poor characteristics in a vertical direction as an image, and the result of calculation obtained on the basis of this poor information is not employed, which is extremely effective in obtaining the vertical motion vector with high accuracy.

The previously-determined value in this process is, for example, set within the range less than 1/50 of the total pixel number of a vertical line, and more realistically almost 1/100.

The vertical motion vectors (vectors at peak positions) calculated per horizontal block in the peak detector 507 are input to the vertical-motion-vector determining part 51 through the output terminal 508.

The vertical-motion-vector determining part 51 (Fig. 6) determines the vertical motion vector of the entire image on the basis of the vertical motion vectors of the respective horizontal blocks sequentially output from the horizontal-block vertical-motion-vector calculating part 50. Specifically, a histogram is created to adopt one with the greatest numbers of the horizontal-block n-arized data.

As described in the above, the peak detector 507 can estimate the reliability of the peak position (motion vector) to be the first peak value P 1 st by the large-and-sinall relation between the first peak value P1st and the second peak value P2nd, and as a result, horizontal blocks having low reliability can be omitted so that the vertical motion vector of the entire image can be determined on the basis of horizontal blocks having high reliability.

<Effects>

As described in the above, the peak detector 317 of the vertical-block horizontal-motion-vector calculating part 31 in the horizontal-motion-vector detecting section 2 of the motion-vector detection device 1 according to the first embodiment obtains the maximum value of the vertical-block n-arized data, making the maximum value as the first peak value (Plst), and estimates reliability of the horizontal motion vector obtained in the vertical block by the large-and-small relation with the second peak value (P2nd), thereby allowing to determine if it is valid or invalid. Therefore, the result of a vertical block having low reliability, such as a block in which an image is unclear, and has periodicity, and a subject has a motion, is thus omitted in the horizontal-motion-vector determining part 32, which in turn allows a horizontal motion vector of the entire frame image to be determined on the basis of the result of the vertical block having high reliability.

The first peak value (P1st) and the second peak value (P2nd) can be easily calculated by sequentially reading out the vertical-block n-arized data of each relative position and comparing them. Therefore the process can be performed even for short blanking period, thereby it is effective for real time process.

The peak detector 507 of the horizontal-block vertical-motion-vector calculating part 50 in the vertical-motion-vector detecting section 4 of the motion-vector detection device 1 according to the first embodiment obtains the maximum value of the horizontal-block n-arized data, making the maximum value as the first peak value (P1st), and estimates the reliability of the vertical motion vector obtained in the horizontal block by the large-and-small relation with the second peak value (P2nd), thereby allowing to determine if it is valid or invalid. Therefore, the result of a horizontal block having low reliability, such as a block in which an image is unclear, and has periodicity, and a subject has a motion, is thus omitted in the vertical-motion-vector determining part 51, which in turn allows a vertical motion vector of the entire frame image to be determined on the basis of the result of the horizontal block having high reliability.

The first peak value (P1st) and the second peak value (P2nd) can be easily calculated by sequentially reading out the horizontal-block n-arized data of each relative position and comparing them. Therefore the process can be performed even for short blanking period, thereby it is effective for real time process.

Since the motion-vector detection device 1 enhances the vertical edge of each divided image (vertical block) after dividing a frame image in the vertical direction by the vertical image-dividing part 21, a divided image whose vertical edge has been enhanced can be generated simply.

Similarly, since the horizontal edge of each divided image (horizontal block) is enhanced after dividing a frame image in the horizontal direction by the horizontal image-dividing part 41, a divided image whose horizontal edge has been enhanced can be generated simply.

Second embodiment

<Configuration of motion-vector detection device>

A motion-vector detection device 1A according to a second embodiment of the present invention has a similar configuration to the motion-vector detection device 1 according to the first embodiment as shown in Fig. 1, but is different in configuration of the horizontal motion vector detecting section and vertical motion vector detecting section. The configurations of a horizontal-motion-vector detecting section 2A and a vertical-motion-vector detecting section 4A in the motion-vector detection device 1 A will be described referring to Figs. 18 and 19.

Fig. 18 is a block diagram showing an essential configuration of the horizontal-motion-vector detecting section 2A. In Fig. 18, sections having similar functions as described in the first embodiment are indicated by the same characters.

In the horizontal-motion-vector detecting section 2A, the vertical image-dividing part 21 and vertical-edge detection filtering part 22 are disposed in reverse order with respect to the horizontal-motion-vector detecting section 2 of the first embodiment. The operation of the horizontal-motion-vector detecting section 2A will be described hereinbelow.

When a frame image read by sequentially repeating pixel scanning of horizontal lines in the vertical direction as shown in Fig. 2 is input to the input terminal 20 of the horizontal-motion-vector detecting section 2A, it is subjected to detection of an edge component extending in the vertical direction, in other words, a filtering process for enhancing an image portion abruptly changing in the horizontal direction, in the vertical-edge detection filtering part 22.

When the frame image whose vertical edge has been enhanced in the vertical-edge detection filtering part 22 is input to the vertical image-dividing part 21, it is divided into blocks in the vertical direction. That is, the vertical image-dividing part 21 defines a plurality of image regions (vertical blocks) obtained by vertically dividing the edge-enhanced frame image. In subsequent processes, processing and control is thereby carried out per vertical block.

The image data divided in the vertical image-dividing part 21 is input to the vertical-block projecting part 23, and the process in the vertical-block projecting part 23 and subsequent processes are carried out similarly to the horizontal-motion-vector detecting section 2 of the first embodiment.

Fig. 19 is a block diagram showing an essential configuration of the vertical-motion-vector detecting section 4A. In Fig. 19, sections having similar functions as described in the first embodiment are indicated by the same characters.

In the vertical-motion-vector detecting section 4A, the horizontal image-dividing part 41 and horizontal-edge detection filtering part 42 are disposed in reverse order with respect to the vertical-motion-vector detecting section 4 of the first embodiment. The operation of the vertical-motion-vector detecting section 4A will be described hereinbelow.

When a frame image read by sequentially repeating pixel scanning of horizontal lines in the vertical direction as shown in Fig. 2 is input to the input terminal 40 of the vertical-motion-vector detecting section 4A, it is subjected to detection of an edge component extending in the horizontal direction, in other words, a filtering process for enhancing an image portion abruptly changing in the vertical direction, in the horizontal-edge detection filtering part 42.

When the frame image whose horizontal edge has been enhanced in the horizontal-edge detection filtering part 42 is input to the horizontal image-dividing part 41, it is divided into blocks in the horizontal direction. That is, the horizontal image-dividing part 41 defines a plurality of image regions (horizontal blocks) obtained by horizontally dividing the edge-enhanced frame image. In subsequent processes, processing and control is thereby carried out per horizontal block.

The image data divided in the horizontal image-dividing part 41 is input to the horizontal-block projecting part 43, and the process in the horizontal-block projecting part 43 and subsequent processes are carried out similarly to the vertical-motion-vector detecting section 4 of the first embodiment. With the above-described operations of the motion-vector detection device 1A, similar effects to the first embodiment are achieved.

Further, in the motion-vector detection device 1A, the frame image is subjected to vertical edge enhancement in the vertical-edge detection filtering part 22, and then the edge-enhanced frame image is divided in the vertical direction in the vertical image-dividing part 21, so that a divided image whose vertical edge has been enhanced can be generated simply.

Similarly, the frame image is subjected to horizontal edge enhancement in the horizontal-edge detection filtering part 42, and then the edge-enhanced frame image is divided in the horizontal direction in the horizontal image-dividing part 41, so that a divided image whose horizontal edge has been enhanced can be generated simply.

In the motion-vector detection device 1A, it is not essential to dispose the vertical-edge detection filtering part 22 and horizontal-edge detection filtering part 42 separately in the horizontal-motion-vector detecting section 2A and vertical-motion-vector detecting section 4A, respectively, but a horizontal/vertical-edge extraction filtering part which combines the functions of both the vertical-edge detection filtering part 22 and horizontal-edge detection filtering part 42 may be provided, and its output may be input to both the vertical image-dividing part 21 and horizontal image-dividing part 41.

<Variations>

The vertical-edge detection filtering part and horizontal-edge detection filtering part in the above-described first and second embodiments may be configured to perform, for example, binarization: "with edge"; and "without edge" or ternarization: "with a positive edge"; "without edge"; and "with a negative edge" by threshold processing of judging the large-and-small relation with a predetermined threshold value after the filtering process on performing edge detection. Such threshold processing allows edges having luminance variations (luminance gradient) not less than the predetermined threshold to be handled identically.

In the above-described respective embodiments, data output from the bit-number reducing part 25 may be input alternately to the first vertical-block projection line memory 26 and second vertical-block projection line memory 27 by switching per frame, for example.

Data output from the horizontal-block projecting part 43 may be input alternately to the first horizontal-block projection line memory 44 and second horizontal-block projection line memory 46 by switching per frame, for example.

Similarly, data output from the vertical (horizontal)-block projecting part may be input alternately to the first vertical (horizontal)-block projection-data maximum-value storage part and second vertical (horizontal) block projection-data maximum-value storage part by switching per frame, for example.

The "preceding frame" throughout the present invention involves not only the immediately preceding frame with respect to a succeeding frame (e.g.. current frame) but also second to the immediately preceding frame and more. For instance, in the case where an intermediate frame is skipped by frame skipping, a frame preceding to the skipped frame is involved.

Third embodiment

<Configuration of motion-vector detection device>

As shown in Fig. 1, a motion-vector detection device 1B according to a third embodiment of the present invention has similar configuration to the motion-vector detection device 1 according to the first embodiment, but is different in configuration of the horizontal motion vector detecting section and vertical motion vector detecting section.

Hereinafter, the configurations of a horizontal-motion-vector detecting section 2B and a vertical-motion-vector detecting section 4B in the motion-vector detection device 1B will be described.

Fig. 20 is a block diagram showing an essential configuration of the horizontal-motion-vector detecting section 2B. In Fig. 20, sections having similar functions as the horizontal-motion-vector detecting section 2 described in the first embodiment are indicated by the same characters, and repeated description will be omitted.

The horizontal-motion-vector detecting section 2B includes the input terminal 20, vertical image-dividing part 21, vertical-edge detection filtering part 22, vertical-block projecting part 23, first vertical-block projection-data maximum-value storage part 24, bit-number reducing part 25, first vertical-block projection line memory 26, and vertical-block projection-data smoothing part 34. Further, the horizontal-motion-vector detecting section 2B includes the second vertical-block projection line memory 27, second vertical-block projection-data maximum-value storage part 28, first-threshold intersection searching part 29, vertical-block projection-data reading part 30 vertical-block horizontal-motion-vector calculating part 31, horizontal-motion-vector determining part 32, and output terminal 33.

The horizontal-motion-vector detecting section 2B is remarkably different in including the vertical-block projection-data smoothing part 34 from the horizontal-motion-vector detecting section 2 shown in Fig. 3, and the operation of the vertical-block projection-data smoothing part 34 will be described in detail later.

Fig. 21 is a block diagram showing an essential configuration of the vertical-motion-vector detecting section 4B. In Fig. 21, sections having similar functions as the vertical-motion-vector detecting section 4 described in the first embodiment are indicated by the same characters, and repeated description will be omitted.

The vertical-motion-vector detecting section 4B includes an input terminal 40, a horizontal image-dividing part 41, a horizontal-edge detection filtering part 42, horizontal-block projecting part 43, a first horizontal-block projection line memory 44, a first horizontal-block projection-data maxinium-value storage part 45, and a horizontal-block projection-data smoothing part 53. Further, the vertical-motion-vector detecting section 4B includes a second horizontal-block projection line memory 46, a second horizontal-block projection-data maximum-value storage part 47, a third-threshold intersection searching part 48, a horizontal-block projection-data reading part 49, a horizontal-block vertical-motion-vector calculating part 50, a vertical-motion-vector determining part 51, and an output terminal 52.

The verticai-motion-vector detecting section 4B is remarkably different in including the horizontal-block projection-data smoothing part 53 from the vertical-motion-vector detecting section 4 shown in Fig. 6, and the operation of the horizontal-block projection-data smoothing part 53 will be described in detail later.

<Operation of motion-vector detection device>

<Operation of horizontal-motion-vector detecting section>

First, the operation of the horizontal-motion-vector detecting section 2B for detecting a horizontal motion vector of an image in the motion-vector detection device 1B will be described.

As described above, the operation of each configuration of the horizontal-motion-vector detecting section 2B is basically similar to the operation of each configuration of the horizontal-motion-vector detecting section 2 shown in Fig. 3 except the vertical-block projection-data smoothing part 34, which are thus omitted to explain, and hereinbelow the operation of the vertical-block projection-data smoothing part 34 will be described.

The smoothing process in the vertical-block projection-data smoothing part 34 will be explained in detail referring to Figs. 22 to 25. The vertical block projection data stored in the first vertical-block projection line memory 26 is read by the vertical-block projection-data smoothing part 34, subjected to the smoothing process, and then written back to the first vertical-block projection line memory 26. In Figs. 22 to 25, an example of performing the smoothing process using three successive arrayed elements of Pa, Pb and Pc in the horizontal direction will be explained. Each of a, b and c is a value at each point Pa, Pb and Pc.

Fig. 22 shows the smoothing process where the fluctuation pattern of projection data is "convex downward, and $a>0$, $b\geq0$, $c>0$".

It is important in detecting a motion vector that a plurality of successive points in projection data gradually increases or decreases. In contrast, concavity and convexity formed by too few points will result in degradation of the accuracy due to the relation with the threshold value, which is preferred to be removed. Accordingly, the pattern shown in Fig. 22 resolves the shape of being convex downward by changing the value b of the point Pb to the average value between the values a and c.

Similarly, Fig. 23 shows the smoothing process where the fluctuation pattern of projection data is "convex upward, and a<0, b≤0, c<0". Also in this case, the shape of being convex upward can be resolved by changing the value b of the center point Pb to the average value between the values a and c.

Meanwhile, Fig. 24 shows the smoothing process where the fluctuation pattern of projection data is "convex downward, and a>0, b<0, c>0".

In this case, it is b<-α2, and if the process is proceeded as it is, the value b is going to be defined as -1 on the basis of the second threshold value -α2 in the n-arization process (ternarization in the present embodiment) by the n-arization part 314, and if the values of the preceding point Pa and the succeeding point Pc are 1, each value of the respective points Pa, Pb and Pc is going to be 1, -1 and 1, respectively, causing vibration. The respective points Pa, Pb and Pc are added by the adder 315 with each first threshold intersection placed at its center, causing excessive vibration (amplitude). As a result, this vibration causes a large value to be shown even on a part which is not an original peak position, while one big peak should fundamentally appear at the position indicating a motion vector position.

On the other hand, the problem arises that characteristics of projection data cannot be accurately reflected on the n-arization process if the fluctuation pattern shown in Fig. 24 is also subjected to the smoothing process similarly to Figs. 22 and 23.

That is, in the case of large fluctuation where the value b of the point Pb is smaller than the second threshold value -α2 and the values of the points Pa and Pc are larger than 0, as shown in Fig. 24, the point Pa is considered to compose a part of the former fluctuation pattern constituted by the preceding points Pq, Pr...of the point Pa (...<Pr<Pq<Pa), and the point Pb is also considered to compose the former fluctuation pattern.

The point Pc is considered to compose a part of the latter fluctuation pattern constituted by the succeeding points Ps, Pt...ofthe point Pc (Pc<Ps<Pt<...), and the point Pb is also considered to compose the latter fluctuation pattern.

In the above-described case, if the value b of the point Pb is simply subjected to the smoothing process to be the average value between the values a and c, characteristics of the former and the latter fluctuation patterns are to be modified, thus cannot be accurately reflected on the n-arization process.

Therefore, in the fluctuation pattern as shown in Fig. 24, the smoothing process is performed to change the value b of the point Pb to the value (-β) which is compressed to "0" when being subjected to the n-arization process. The value which is compressed to "0" is referred to here as a value to be compressed, and the value to be compressed is set to be a fixed value lager than the second threshold value -α2 and not larger than 0. This process allows characteristic of the preceding and the succeeding fluctuation patterns to be accurately reflected on the n-arization process without damaging characteristics of the both fluctuation patterns.

Fig. 25 shows the smoothing process where the fluctuation pattern of projection data is "convex upward, and a<0, b>0, c<0".

In this case, it is b>a2, and if the process is proceeded as it is, the value b is going to be defined as 1 on the basis of the second threshold value α2 in the n-arization process (ternarization in the present embodiment) by the n-arization part 314, and if the values of the preceding point Pa and the succeeding point Pc are -1, each value of the respective points Pa, Pb and Pc is going to be -1, 1 and -1, respectively, which results in vibration. Then, each value of the respective points Pa, Pb and Pc is added by the adder 315 with each first threshold intersection placed at its center, causing excessive vibration (amplitude). As a result, this vibration causes a large value to be shown even on a part which is not an original peak position, while one big peak should fundamentally appear at the position indicating a motion vector position.

On the other hand, the problem arises that characteristics of projection data cannot be accurately reflected on the n-arization process if the fluctuation pattern shown in Fig. 25 is also subjected to the smoothing process similarly to Figs. 22 and 23.

That is, in the case of large fluctuation where the value b of the point Pb is larger than the second threshold value a2 and the values of the points Pa and Pc are not larger than 0, as shown in Fig. 25, the point Pa is considered to compose a part of the former fluctuation pattern constituted by the preceding points Pq, Pr...of the point Pa (...<Pr<Pq<Pa), and the point Pb is also considered to compose the former fluctuation pattern.

The point Pc is considered to compose a part of the latter fluctuation pattern constituted by the succeeding points Ps, Pt...of the point Pc (Pc<Ps<Pt<...), and the point Pb is also considered to compose the latter fluctuation pattern.

In the above-described case, if the value b of the point Pb is simply subjected to the smoothing process to be the average value between the values a and c, characteristics of the former and the latter fluctuation patterns are to be modified, thus cannot be accurately reflected on the n-arization process.

Therefore, in the fluctuation pattern as shown in Fig. 25, the smoothing process is performed to change the value b of the point Pb to the value (β) which is compressed to "0" when being subjected to the n-arization process. The value which is compressed to "0" is referred to here as a value to be compressed, and the value to be compressed is set to be a fixed value smaller than the second threshold value a2 and not smaller than 0. This process allows characteristics of the former and the latter fluctuation patterns to be accurately reflected on the n-arization process without damaging characteristics of the both fluctuation patterns.

In the case of setting the value to be compressed to 0, characteristic of the latter fluctuation pattern is slightly modified if the compressed value of the point Pb is used for smoothing the latter fluctuation pattern. However, if it is not a problem, the value to be compressed may be set to 0.

Next, effects of the smoothing process in the vertical-block projection-data smoothing part 34 will be explained using an example of the fluctuation patterns of projection data shown in Figs. 26 to 29.

Fig. 26 is assumed to be a part of the waveform of the vertical block projection data in the case of not performing the smoothing process. As shown in Fig. 26, the waveform fluctuates up and down with adjacent each point.

This fluctuation is considered to be caused by the process for various signals in the former circuit. In addition, in so far as the vertical direction, for example, when a level of a signal subtly varies per line with a camera signal, such a subtle variation is considered to be prominent by being added (stressed) per projection process.

Fig. 27 is a diagram schematically showing a state in which the threshold values a and -$\alpha$ to be subjected to the temarizatin process are set in the projection data shown in Fig. 26, and the threshold values are found to go up and down at each point in circled regions. Accordingly, if the ternarization process is performed as they are in the above condition, the result of ternarization is heavily affected.

Here, the result of performing the smoothing process described using Figs. 22 to 25 on the projection data shown in Fig. 26 is shown in Fig. 28.

Fig. 28 shows the waveform in which vibration superimposed on the original vertical block projection data is removed, remaining the overall characteristics of the waveform thereof.

For instance, circled regions R11 to R15 are the regions obtained by smoothing data included in the regions with threshold values going up and down in Fig. 27, and these circled regions are subjected to the smoothing process using the average value of both adjacent data, which is explained referring to Figs. 22 and 23.

The region R10 of Fig. 27 is a region having large fluctuation shown by the points 22, 23 and 24, in which the value of the point 23 is larger than the threshold value $\alpha$, and the values of the points 22 and 24 are smaller than 0. These points are subjected to the smoothing process to change the value of the center point out of three points to a value to be compressed to "0" when being subjected to the n-arization process described referring to Figs. 24 and 25.

As a result of performing the aforementioned smoothing process, the vertical block projection data not dramatically affecting the ternarized value by vibration in adjacent intersection with the threshold values can be obtained.

Fig. 29 is a diagram showing an example of vertical-block n-arized data added by the adder 315 in the motion vector detection range (aforementioned range of $\pm$ V) with each first threshold intersection placed at its center, with respect to all the first threshold intersections detected in the first threshold intersection searching part 29, after the n-arization process of the first vertical-block projection data by the n-arization part 314. Here, V is 31, and the scale 32 of abscissa shows the position of the horizontal motion vector 0.

Data shown by black rhombus is data "without the smoothing process" and data shown by black square is data "with the smoothing process".

Out of the respective waveforms represented by both data, while the waveform "without the smoothing process" fluctuates dramatically, and is convex upward and downward at various points, the waveform "with the smoothing process" does not include excessive concavity and convexity, remaining characteristics of the original waveform.

In Fig. 29, the maximum peak is located at the position of the scale 30 for both the waveforms "without the smoothing process" and "with the smoothing process", so that misjudgment does not happen when the peak detector 317 determines the maximum peak position of the entire motion vector detection range as the horizontal motion vector.

Meanwhile, for instance, in the case of adopting the method for estimating reliability to remove the result of motion-vector calculation for the periodic image by calculating the peak position per "block convex upward" in which the value changes from negative, positive to negative in this order, and estimating the size of the peak value per its "block", so as to enhance the accuracy of calculation, the waveform "without the smoothing process" of the present embodiment is estimated as "not having the reliability", but the correct horizontal motion vector can be calculated in the waveform "with the smoothing process".

That is, "blocks" are formed at many positions including the positions of the scale 28 and 32 other than the position of the scale 30 on the waveform "without the smoothing process", each block having the added value of 40, 30 and 26. Basically, only one big peak should exist other than small peaks, so that the result cannot be trusted when there are similar big peak values at many positions as described above.

On the other hand, the waveform "with the smoothing process" includes the added value of 21 at the scale 30, the added value of 5 at the scale 42 and the added value of 3 at the scale 5. The peak at the scale 30 can be determined to be only one big peak, so that the scale 30, that is, vector -2 can be determined to be the horizontal motion vector.

The horizontal motion vector calculated per vertical block by the peak detector 317 is sequentially input to the horizontal-motion-vector determining part 32 through the output terminal 318.

The horizontal-motion-vector determining part 32 determines the horizontal motion vector of the entire image on the basis of the horizontal motion vectors of the respective vertical blocks sequentially output from the vertical-block horizontal-motion-vector calculating part 31. Specifically, a histogram is created for the horizontal motion vector of the respective vertical blocks to determine the horizontal motion vector having the largest histogram value to be the horizontal motion vector of the entire image, or the like.

As described in the above, fluctuation noise superimposed on the vertical block projection data can be removed in the vertical-block projection-data smoothing part 34 without damaging the broad tendency (characteristics) of the vertical block projection data, so that excessive peaks do not appear as the result of addition by the adder 315, thereby preventing misjudgment and deterioration of the reliability in the peak detector 317. As a result, the vertical-block horizontal motion vector having high reliability can be calculated.

<Operation of vertical-motion-vector detecting section>

Next, the operation of the vertical-motion-vector detecting section 4B for detecting a vertical motion vector of the image in the motion-vector detection device 1B will be explained.

The operation of each configuration of the vertical-motion-vector detecting section 4B is basically similar to the operation of each configuration of the vertical-motion-vector detecting section 4 shown in Fig. 6 except the horizontal-block projection-data smoothing part 53, which arc thus omitted to explain, and the operations of the horizontal-block projection-data smoothing part 53 will be described.

The smoothing process in the horizontal-block projection-data smoothing part 53 will be explained in detail referring to Figs. 22 to 25. The horizontal block projection data stored in the first horizontal-block projection line memory 44 is read by the horizontal-block projection-data smoothing part 53, subjected to the smoothing process, and then written back to the first horizontal-block projection line memory 44. In Figs. 22 to 25, an example of performing the smoothing process using three successive arrayed elements of Pa, Pb and Pc in the vertical direction will be explained. Each of a, b and c is a value at each point Pa, Pb and Pc.

Fig. 22 shows the smoothing process where the fluctuation pattern of projection data is "convex downward, and a>0, b≥0, c>0".

It is important in detecting a motion vector that a plurality of successive points in projection data gradually increases or decreases. In contrast, concavity and convexity formed by too few points will result in degradation of the accuracy due to the relation with the threshold value, which is preferred to be removed. Accordingly, the pattern shown in Fig. 22 resolves the shape of being convex downward by changing the value b of the point Pb to the average value between the values a and c.

Similarly, Fig. 23 shows the smoothing process where the fluctuation pattern of projection data is "convex upward, and a<0, b≤0, c<0". Also in this case, the shape of being convex upward can be resolved by changing the value b of the center point Pb to the average value between the values a and c.

Meanwhile, Fig. 24 shows the smoothing process where the fluctuation pattern of projection data is "convex downward, and a>0, b<0, c>0".

In this case, it is b<-a2, and if the process is proceeded as it is, the value b is going to be defined as -1 on the basis of the fourth threshold value -α4 in the n-arization process (ternarization in the present embodiment) by the n-arization part 504, and if the values of the preceding point Pa and the succeeding point Pc are 1, each value of the respective points Pa, Pb and Pc is going to be 1, -1 and 1, respectively, causing vibration. The respective points Pa, Pb and Pc are added by the adder 315 with each third threshold intersection placed at its center, causing excessive vibration (amplitude). As a result, this vibration causes a large value to be shown even on a part which is not an original peak position, while one big peak should fundamentally appear at the position indicating a motion vector position.

On the other hand, the problem arises that characteristics of projection data cannot be accurately reflected on the n-arization process if the fluctuation pattern shown in Fig. 24 is also subjected to the smoothing process similarly to Figs. 22 and 23.

That is, in the case of large fluctuation where the value b of the point Pb is smaller than the fourth threshold value -α4 and the values of the points Pa and Pc are larger than 0, as shown in Fig. 24, the point Pa is considered to compose a part of the former fluctuation pattern constituted by the preceding points Pq, Pr... of the point Pa (...<Pr<Pq<Pa), and the point Pb is also considered to compose the former fluctuation pattern.

The point Pc is considered to compose a part of the latter fluctuation pattern constituted by the succeeding points Ps, Pt...of the point Pc (Pc<Ps<Pt<...), and the point Pb is also considered to compose the latter fluctuation pattern.

In the above-described case, if the value b of the point Pb is simply subjected to the smooting process to be the average value between the values a and c, characteristics of the former and the latter fluctuation patterns are to be modified, thus cannot be accurately reflected on the n-arization process.

Therefore, in the fluctuation pattern as shown in Fig. 24, the smoothing process is performed to change the value b of the point Pb to the value (-β) which is compressed to "0" when being subjected to the n-arization process. The value which is compressed to "0" is referred to here as a value to be compressed, and the value to be compressed is set to be a fixed value larger than the fourth threshold value -α4 and not larger than 0. This process allows characteristics of the preceding and the succeeding fluctuation patterns to be accurately reflected on the n-arization process without damaging characteristics of the both fluctuation patterns.

Fig. 25 shows the smoothing process where the fluctuation pattern of projection data is "convex upward, and a<0, b>0, c<0".

In this case, it is b>a4, and if the process is proceeded as it is, the value b is going to be defined as I on the basis of the fourth threshold value a4 in the n-arization process (ternarization in the present embodiment) by the n-arization part 504, and if the values of the preceding point Pa and the succeeding point Pc are -1, each value of the respective points Pa, Pb and Pc is going to be -1, 1 and -1, respectively, which results in vibration. Then, each value of the respective points Pa, Pb and Pc is added by the adder 505 with each third threshold intersection placed at its center, causing excessive vibration (amplitude). As a result, this vibration causes a large value to be shown even on a part which is not an original peak position, while one big peak should fundamentally appear at the position indicating a motion vector position.

On the other hand, the problem arises that characteristics of projection data cannot be accurately reflected on the n-arization process if the fluctuation pattern shown in Fig. 25 is also subjected to the smoothing process similarly to Figs. 22 and 23.

That is, in the case of large fluctuation where the value b of the point Pb is larger than the fourth threshold value $\alpha 4$ and the values of the points Pa and Pc are smaller than 0, as shown in Fig. 25, the point Pa is considered to compose a part of the former fluctuation pattern constituted by the preceding points Pq, Pr...of the point Pa (...<Pr<Pq<Pa), and the point Pb is also considered to compose the former fluctuation pattern.

The point Pc is considered to compose a part of the latter fluctuation pattern constituted by the succeeding points Ps, Pt...of the point Pc (Pc<Ps<Pt<...), and the point Pb is also considered to compose the latter fluctuation pattern.

In the above-described case, if the value b of the point Pb is simply subjected to the smoothing process to be the average value between the values a and c, characteristics of the former and the latter fluctuation patterns are to be modified, thus cannot be accurately reflected on the n-arization process.

Therefore, in the fluctuation pattern as shown in Fig. 25, the smoothing process is performed to change the value b of the point Pb to the value ($\beta$) which is compressed to "0" when being subjected to the n-arization process. The value which is compressed to "0" is referred to here as a value to be compressed, and the value to be compressed is set to be a fixed value smaller than the fourth threshold value $\alpha 4$ and not smaller than 0. This process allows characteristics of the former and the latter fluctuation patterns to be accurately reflected on the n-arization process without damaging characteristics of the both fluctuation patterns.

In the case of setting the value to be compressed to 0, characteristic of the latter fluctuation pattern is slightly modified if the compressed value of the point Pb is used for smoothing the latter fluctuation pattern. However, if it is not a problem, the value to be compressed may be set to 0.

Next, effects of the smoothing process in the horizontal-block projection-data smoothing part 53 will be explained using an example of the fluctuation patterns of projection data shown in Figs. 26 to 29.

Fig. 26 is assumed to be a part of the waveform of the horizontal block projection data in the case of not performing the smoothing process. As shown in Fig. 26, the waveform fluctuates up and down with adjacent each point.

This fluctuation is considered to be caused by the process for various signals in the former circuit. In addition, in so far as the horizontal direction, for example, when a level of a signal subtly varies per line with a camera signal, such a subtle variation is considered to be prominent by being added (stressed) per projection process.

Fig. 27 is a diagram schematically showing a state in which the threshold values $\alpha$ and -$\alpha$ to be subjected to the ternarizatin process are set in the projection data shown in Fig. 26, and the threshold values are found to go up and down at each point in circled regions. Accordingly, if the ternarization process is performed as they are in the above condition, the result of ternarization is heavily affected.

Here, the result of performing the smoothing process described using Figs. 22 to 25 on the projection data shown in Fig. 26 is shown in Fig. 28.

Fig. 28 shows the waveform in which vibration superimposed on the original vertical block projection data is removed, remaining the overall characteristics of the waveform thereof.

For instance, circled regions R11 to R15 are the regions obtained by smoothing data included in the regions with threshold values going up and down in Fig. 27, and these circled regions are subjected to the smoothing process using the average value of both adjacent data, which is explained referring to Figs. 22 and 23.

The region R10 of Fig. 27 is a region having large fluctuation shown by the points 22, 23 and 24, in which the value of the point 23 is larger than the threshold value $\alpha$, and the values of the points 22 and 24 are smaller than 0. These points are subjected to the smoothing process to change the value of the center point out of three points to a value to be compressed to "0" when being subjected to the n-arization process described referring to Figs. 24 and 25.

As a result of performing the aforementioned smoothing process, the horizontal block projection data not dramatically affecting the temarized value by vibration in adjacent intersection with the threshold values can be obtained.

Fig: 29 is a diagram showing an example of horizontal-block n-arized data added by the adder 505 in the motion vector detection range (aforementioned range of ± U) with each third threshold intersection placed at its center, with respect to all the third threshold intersections detected in the third threshold intersection searching part 48, after the n-arization process of the first horizontal-block projection data by the n-arization part 504. Here, U is 31, and the scale 32 of abscissa shows the position of the vertical motion vector 0.

Data shown by black rhombus is data "without the smoothing process" and data shown by black square is data "with the smoothing process".

Out of the respective waveforms represented by both data, while the waveform "without the smoothing process" fluctuates dramatically, and is convex upward and downward at various points, the waveform "with the smoothing process" does not include excessive concavity and convexity, remaining characteristics of the original waveform.

In Fig. 29, the maximum peak is located at the position of the scale 30 for both the waveforms "without the smoothing process" and "with the smoothing process", so that misjudgment does not happen when the peak detector 507 determines the maximum peak position of the entire motion vector detection range as the horizontal motion vector.

Meanwhile, for instance, in the case of adopting the method for estimating reliability to remove the result of motion-vector calculation for the periodic image by calculating the peak position per "block convex upward" in which the value changes from negative, positive to negative in this order, and estimating the size of the peak value per its "block", so as to enhance the accuracy of calculation, the waveform "without the smoothing process" of the present embodiment is estimated as "not having the reliability", but the correct vertical motion vector can be calculated in the waveform "with the smoothing process".

That is, "blocks" are formed at many positions including the positions of the scale 28 and 32 other than the position of the scale 30 on the waveform "without the smoothing process", each block having the added value of 40, 30 and 26. Basically, only one big peak should exist other than small peaks, so that the result cannot be trusted when there are similar big peak values at many positions as described above.

On the other hand, the waveform "with the smoothing process" includes the added value of 21 at the scale 30, the added value of 5 at the scale 42 and the added value of 3 at the scale 5. The peak at the scale 30 can be determined to be only one big peak, so that the scale 30, that is, vector -2 can be determined to be the vertical motion vector.

The vertical motion vector calculated per horizontal block by the peak detector 507 is sequentially input to the vertical-motion-vector determining part 51 (Fig. 21) through the output terminal 508.

The vertical-motion-vector determining part 51 determines the vertical motion vector of the entire image on the basis of the vertical motion vectors of the respective horizontal blocks sequentially output from the horizontal-block vertical-motion-vector calculating part 50. Specifically, a histogram is created for the vertical motion vector of the respective horizontal blocks to determine the vertical motion vector having the largest histogram value to be the vertical motion vector of the entire image, or the like.

As described in the above, fluctuation noise superimposed on the horizontal block projection data can be removed in the horizontal-block projection-data smoothing part 53 without damaging the broad tendency (characteristics) of the horizontal block projection data, so that excessive peaks do not appear as the result of addition by the adder 505, thereby preventing misjudgment and deterioration of the reliability in the peak detector 507. As a result, the horizontal-block vertical motion vector having high reliability can be calculated.

<Effects>

As described in the above, superimposed local fluctuation noise can be removed in the vertical-block projection-data smoothing part 34 of the horizontal-motion-vector detecting section 2B of the motion-vector detection device 1B according to the third embodiment without damaging the broad tendency (characteristics) of the vertical block projection data, so that vertical-block horizontal motion vector having reliability can be detected. As a result, the horizontal motion vector of the entire image can be determined on the basis of the vertical-block horizontal motion vector having high reliability.

Also, superimposed local fluctuation noise can be removed in the horizontal-block projection-data smoothing part 53 of the vertical-motion-vector detecting section 4B without damaging the broad tendency (characteristics) of the horizontal block projection data, so that horizontal-block vertical motion vector having reliability can be detected. As a result, the vertical motion vector of the entire image can be determined on the basis of the horizontal-block vertical motion vector having high reliability.

Since the bit-number reducing part 25 of the motion-vector detection device 1B reduces the number of bits of the current-frame vertical projection data on the basis of the current-frame vertical projection data obtained by the first vertical-block projection-data maximum-value storage part 24, the amount of calculations in the subsequent process can be suppressed, which permits more prompt detection of a motion vector.

Since the motion-vector detection device 1B obtains the second vertical-block projection-data maximum value of the preceding frame and determines the first threshold value $\alpha 1$ on the basis of this maximum value, an appropriate first threshold intersection can be determined. Similarly, since it obtains the second horizontal-block projection-data maximum value of the preceding frame and determines the third threshold value $\alpha 3$ on the basis of this maximum value, an appropriate third threshold intersection can be determined.

Since the motion-vector detection device 1B enhances the vertical edge of each divided image (vertical block) after dividing a frame image in the vertical direction by the vertical image-dividing part 21, a divided image whose vertical edge has been enhanced can be generated simply. Similarly, since it enhances the horizontal edge of each divided image (horizontal block) after dividing a frame image in the horizontal direction by the horizontal image-dividing part 41, a divided image whose horizontal edge has been enhanced can be generated simply.

Further, in the motion-vector detection device 1B, since projection data read by the vertical-block projection-data reading part 30 is n-arized in the n-arization part 314 of the vertical-block horizontal-motion-vector calculating part 31, the amount of subsequent calculations can be reduced, allowing motion vector detection to be performed more promptly. Particularly, since the n-arization part 314 performs ternarization on the basis of the second threshold value $\alpha 2$ determined on the basis of the vertical-block projection-data maximum value of the current frame, motion vector detection capable of achieving real time processing while ensuring a relatively large dynamic range can be achieved. Further, the memory can be reduced significantly.

Similarly, since projection data read in the horizontal-block projection-data reading part 49 is n-arized in the n-arization part 504 of the horizontal-block vertical-motion-vector calculating part 50, the amount of subsequent calculations can be reduced, allowing motion vector detection to be performed more promptly. Particularly, since the n-arization part 504 performs ternarization on the basis of the fourth threshold value a4 determined on the basis of the horizontal-block projection-data maximum value of the preceding frame, motion vector detection capable of achieving real time processing without losing the dynamic range greatly can be achieved. Further, the memory can be reduced significantly.

Fourth embodiment

<Configuration of motion-vector detection device>

A motion-vector detection device 1C according to a fourth embodiment of the present invention has a similar configuration to the motion-vector detection device 1B according to the third embodiment shown in Fig. 20, but is different in configuration of the horizontal-motion-vector detecting section and vertical-motion-vector detecting section. The configurations of a horizontal-motion-vector detecting section 2C and a vertical-motion-vector detecting section 4C in the motion-vector detection device 1C will be described below referring to Figs. 30 and 31.

Fig. 30 is a block diagram showing an essential configuration of the horizontal-motion-vector detecting section 2C. In Fig. 30, sections having similar functions described in the third embodiment are indicated by the same characters.

In the horizontal-motion-vector detecting section 2C, the vertical image-dividing part 21 and vertical-edge detection filtering part 22 are disposed in reverse order with respect to the horizontal-motion-vector detecting section 2B of the third embodiment. The operation of this horizontal-motion-vector detecting section 2C will be described below.

When a frame image read by sequentially repeating pixel scanning of horizontal lines in the vertical direction as shown in Fig. 2 is input to the input terminal 20 of the horizontal-motion-vector detecting section 2C, it is subjected to detection of an edge component extending in the vertical direction, in other words, a filtering process for enhancing an image portion abruptly changing in the horizontal direction, in the vertical-edge detection filtering part 22.

When the frame image whose vertical edge has been enhanced in the vertical-edge detection filtering part 22 is input to the vertical image-dividing part 21, it is divided into blocks in the vertical direction. That is, the vertical image-dividing part 21 defines a plurality of image regions (vertical blocks) obtained by vertically dividing the edge-enhanced frame image. In subsequent processes, processing and control is thereby carried out per vertical block.

The image data divided in the vertical image-dividing part 21 is input to the vertical-block projecting part 23, and the process in the vertical-block projecting part 23 and subsequent processes are carried out similarly to the horizontal-motion-vector detecting section 2B of the third embodiment.

Fig. 31 is a block diagram showing an essential configuration of the vertical-motion-vector detecting section 4C. In Fig. 31, sections having similar functions as the third embodiment are indicated by the same characters.

In the vertical-motion-vector detecting section 4C, the horizontal image-dividing part 41 and horizontal-edge detection filtering part 42 are disposed in reverse order with respect to the vertical-motion-vector detecting section 4B of the third embodiment. The operation of the vertical-motion-vector detecting section 4C will be described below.

When a frame image read by sequentially repeating pixel scanning of horizontal lines in the vertical direction as shown in Fig. 2 is input to the input terminal 40 of the vertical-motion-vector detecting section 4C, it is subjected to detection of an edge component extending in the horizontal direction, in other words, a filtering process for enhancing an image portion abruptly changing in the vertical direction, in the horizontal-edge detection filtering part 42.

When the frame image whose horizontal edge has been enhanced in the horizontal-edge detection filtering part 42 is input to the horizontal image-dividing part 41, it is divided into blocks in the horizontal direction. That is, the horizontal image-dividing part 41 defines a plurality of image regions (horizontal blocks) obtained by horizontally dividing the edge-enhanced frame image. In subsequent processes, processing and control is thereby carried out per horizontal block.

The image data divided in the horizontal image-dividing part 41 is input to the horizontal-block projecting part 43, and the process in the horizontal-block projecting part 43 and subsequent processes are carried out similarly to the vertical-motion-vector detecting section 4B of the third embodiment.

With the above-described operations of the motion-vector detection device IC, similar effects to the first embodiment are achieved. Further, in the motion-vector detection device IC, the frame image is subjected to vertical edge enhancement in the vertical-edge detection filtering part 22, and then the edge-enhanced frame image is divided in the vertical direction in the vertical image-dividing part 21, so that a divided image whose vertical edge has been enhanced can be generated simply.

Similarly, the frame image is subjected to horizontal edge enhancement in the horizontal-edge detection filtering part 42, and then the edge-enhanced frame image is divided in the horizontal direction in the horizontal image-dividing part 41, so that a divided image whose horizontal edge has been enhanced can be generated simply.

In the motion-vector detection device IC, it is not essential to dispose the vertical-edge detection filtering part 22 and horizontal-edge detection filtering part 42 separately in the horizontal-motion-vector detecting section 2C and vertical-motion-vector detecting section 4C, respectively, but a horizontal/vertical-edge extraction filtering part which combines the functions of both the vertical-edge detection filtering part 22 and horizontal-edge detection filtering part 42 may be provided, and its output may be input to both the vertical image-dividing part 21 and horizontal image-dividing part 41.

<Variations>

The vertical-edge detection filtering part and horizontal-edge detection filtering part in the above-described third and fourth embodiments may be configured to perform, for example, binarization: "with edge"; and "without edge" or ternarization: "with a positive edge"; "without edge"; and "with a negative edge" by threshold processing of judging the large-and-small relation with a predetermined threshold value after the filtering process of performing edge detection. Such threshold processing allows edges having luminance variations (luminance gradient) not less than the predetermined threshold to be handled identically.

In the above-described respective embodiments, data output from the bit-number reducing part 25 may be input alternately to the first vertical-block projection line memory 26 and second vertical-block projection line memory 27 by switching per frame, for example.

Data output from the horizontal-block projecting part 43 may be input alternately to the first horizontal-block projection line memory 44 and second horizontal-block projection line memory 46 by switching per frame, for example.

Similarly, data output from the vertical (horizontal)-block projecting part may be input alternately to the first vertical (horizontal)-block projection-data maximum-value storage part and second vertical (horizontal-block projection-data maximum-value storage part by switching per frame, for example.

The "preceding frame" throughout the present invention involves not only the immediately preceding frame with respect to a succeeding frame (e.g., current frame) but also second to the immediately preceding frame and more. For instance, in the case where an intermediate frame is skipped by frame skipping, a frame preceding to the skipped frame is involved.

The invention is defined by the appended claims.

## Claims

1. A motion-vector detection device for detecting a motion vector between frame images of a preceding frame and a succeeding frame adjacent to each other in time sequence, comprising:

   edge enhancing means (22) for enhancing a vertical edge of a predetermined vertical block in said frame image read by sequentially repeating pixel scanning of horizontal lines in the vertical direction;
   projecting means (23) for obtaining a vertical projection obtained by adding all the horizontal lines of the vertical block whose edges have been enhanced by said edge enhancing means (22), thereby generating projection data having a data array for a horizontal line;
   specifying means (29) for specifying the position of an arrayed element of each intersection at which a waveform obtained by graphing values of arrayed elements in the order of elements of said data array of projection data obtained in said projecting means for said preceding frame and a line on which the values of the arrayed elements stand at a predetermined constant value intersect; **characterized in that** it comprises extracting means (30) for extracting data arrays of a predetermined range with the position of arrayed element of said each intersection placed at its center, from the projection data obtained by said projecting means (23) for said succeeding frame;

adding means (31) for adding values of arrayed elements having the same relative position with respect to the position of arrayed element of said each intersection for each of the data arrays of predetermined range extracted by said extracting means (30); and
detecting means (32) for detecting a horizontal motion vector of a predetermined vertical block of said frame image on the basis of the result of addition obtained by said adding means (31), wherein said detecting means (32) estimates reliability of said horizontal motion vector obtained with respect to said predetermined vertical block of said frame image on the basis of said result of addition at each relative position obtained by said adding means (31)
wherein
said detecting means (32) obtains the maximum value of said result of addition by relatively comparing said result of addition of said arrayed elements having the same relative position obtained by said adding means (31), and estimates reliability of said horizontal motion vector obtained with respect to said predetermined vertical block of said frame image on the basis of said maximum value of said result of addition, and
wherein
said detecting means (32) specifies a crest of a waveform obtained by graphing said result of addition of said arrayed elements having the same relative position with respect to said relative position, in the case where there is more than one crest, relatively compares said result of addition to specify the result of addition to be a peak of each said crest from among said result of addition constituting said each crest as a peak value of each said crest, making a maximum value as a first peak value from among a plurality of said peak values as well as next maximum value as a second peak value, and said detecting means (32) compares said first peak value with said second peak value, and in the case where the proportion of said first peak value to said second peak value is not larger than a predetermined value treats said horizontal motion vector obtained with respect to said predetermined vertical block of said frame image as invalid.

**2.** The motion-vector detection device according to claim 1, wherein
in the case where said maximum value of said result of addition is not larger than a previously-determined predetermined value, said detecting means (32) treats said horizontal motion vector obtained with respect to said predetermined vertical block of said frame image as invalid.

**3.** A motion-vector detection device for detecting a motion vector between frame images of a preceding frame and a succeeding frame adjacent to each other in time sequence, comprising:

edge enhancing means (42) for enhancing a horizontal edge of a predetermined horizontal block in said frame image read by sequentially repeating pixel scanning of horizontal lines in the vertical direction;
projecting means (43) for obtaining a horizontal projection of the image whose edge has been enhanced by said edge enhancing means (42), thereby generating projection data having a data array for one vertical line;
specifying means (48) for specifying the position of an arrayed element of each intersection at which a waveform obtained by graphing values of arrayed elements in the order of elements of said data array of projection data obtained in said projecting means (43) for said preceding frame and a line on which the values of the arrayed elements stand at a predetermined constant value intersect; **characterized in that** it comprises
extracting means (49) for extracting data arrays of a predetermined range with the position of arrayed element of said each intersection placed at its center, from the projection data obtained by said projecting means for said succeeding frame;
adding means (50) for adding values of arrayed elements having the same relative position with respect to the position of arrayed element of said each intersection for each of the data arrays of predetermined range extracted by said extracting means (49); and
detecting means (51) for detecting a vertical motion vector of a predetermined horizontal block of said frame image on the basis of the result of addition obtained by said adding means (50), wherein
said detecting means (51) estimates reliability of said vertical motion vector obtained with respect to said predetermined horizontal block of said frame image on the basis of said result of addition at each relative position obtained by said adding means (50), wherein
said detecting means (51) obtains the maximum value of said result of addition by relatively comparing said result of addition of said arrayed elements having the same relative position obtained by said adding means (50), and estimates reliability of said vertical motion vector obtained with respect to said predetermined horizontal block of said frame image on the basis of said maximum value of said result of addition, and wherein

said detecting means (51) specifies a crest of a waveform obtained by graphing said result of addition of said arrayed elements having the same relative position with respect to said relative position, in the case where there is more than one crest, relatively compares said result of addition to specify the result of addition to be a peak of each said crest from among said result of addition constituting said each crest as a peak value of each said crest, making a maximum value as a first peak value from among a plurality of said peak values as well as next maximum value as a second peak value, and said detecting means (32) compares said first peak value with said second peak value, and in the case where the proportion of said first peak value to said second peak value is not larger than a predetermined value, treats said vertical motion vector obtained with respect to said predetermined horizontal block of said frame image as invalid.

**4.** The motion-vector detection device according to claim 3, wherein
in the case where said maximum value of said result of addition is not larger than a previously-determined predetermined value, said detecting means (51) treats said vertical motion vector obtained with respect to said predetermined horizontal block of said frame image as invalid.

**5.** The motion-vector detection device according to claim 1 or 3, wherein
said detecting means (51) determines a relative position to be a reference value with respect to said waveform obtained by graphing said result of addition with respect to said relative position, sequentially shifts said relative position to be a comparison target for the relative position to be a reference value, and in the case of finding said result of addition which is greater than said result of addition at said relative position to be a reference value, obtains said peak value of each said crest by repeating a process to change said reference value to said relative position to be said comparison target.

**6.** The motion-vector detection device according to claim 5, wherein
in the case where said result of addition at said relative position to be said comparison target for said peak value of each said crest is a value not larger than a value obtained by multiplying said peak value by a previously-determined second coefficient, said detecting means (51) specifies said crest by defining said relative position to be said comparison target among a plurality of said crests as an end of a crest as well as defining as a start of a next crest.

**7.** A motion-vector detection device according to claim 1, **characterized in that** it comprises
smoothing means (34) for obtaining a smoothed projection data by removing fluctuation noise superimposed on said projection data; wherein
the specifying means (29) for specifying the position of an arrayed element of each intersection at which a waveform obtained by graphing values of arrayed elements in the order of elements of said data array of said smoothed projection data for said preceding frame and a line on which the values of the arrayed elements stand at a predetermined constant value intersect; and
the extracting means (30) for extracting data arrays of a predetermined range with the position of arrayed element of said each intersection placed at its center, from said smoothed projection data for said succeeding frame, wherein
said smoothing means (34, 53) performs a smoothing process on the basis of three successive arrayed elements with respect to a waveform obtained by graphing values of arrayed elements in the order of elements of said data array of said projection data, and
said smoothing process includes a process to change the value of the center of arrayed elements to the average value between preceding and succeeding arrayed elements in the case where each of said three arrayed elements is a positive value, and forms a convex pattern downward, and a process to change said value of the center of arrayed elements to said average value between said preceding and succeeding arrayed elements in the case where each of said three arrayed elements is a negative value, and forms a convex pattern upward.

**8.** A motion-vector detection device according to claim 3, **characterized in**
**that** it comprises
smoothing means (53) for obtaining a smoothed projection data by removing fluctuation noise superimposed on said projection data; wherein
the specifying means (43) for specifying the position of an arrayed element of each intersection at which a waveform obtained by graphing values of arrayed elements in the order of elements of said data array of said smoothed projection data for said preceding frame and a line on which the values of the arrayed elements stand at a predetermined constant value intersect; and
the extracting means (49) for extracting data arrays of a predetermined range with the position of arrayed element of said each intersection placed at its center, from said smoothed projection data for said succeeding frame, wherein
said smoothing means (34, 53) performs a smoothing process on the basis of three successive arrayed elements with respect to a waveform obtained by graphing values of arrayed elements in the order of elements of said data array of said projection data, and

said smoothing process includes a process to change the value of the center of arrayed elements to the average value between preceding and succeeding arrayed elements in the case where each of said three arrayed elements is a positive value, and forms a convex pattern downward, and a process to change said value of the center of arrayed elements to said average value between said preceding and succeeding arrayed elements in the case where each of said three arrayed elements is a negative value, and forms a convex pattern upward..

**9.** The motion-vector detection device according to claim 7 or 8, further comprising:

maximum-value specifying means (28) for obtaining the maximum value of arrayed elements of projection data relating to said preceding frame, wherein

said predetermined constant value is set on the basis of the maximum value obtained by said maximum-value specifying means (28).

**10.** The motion-vector detection device according to claim 7 or 8, further comprising:

compression means (314, 504) for compressing the data length of each arrayed element of the data arrays of the predetermined range extracted by said extracting means (30, 49); and wherein

said adding means (31, 50) includes means (315, 505) for adding values of arrayed elements having the same relative position with respect to the position of arrayed element of said each intersection for each data array of the predetermined range whose data length has been compressed by said compression means (314, 504.

**11.** The motion-vector detection device according to claim 10, wherein

said compression means (314, 504) subjects the value of each arrayed element of the data arrays of the predetermined range extracted by said extracting means (30, 49), to a ternarization process, and

in said ternarization process, relating to a threshold value Th (Th>0) defined on the basis of the maximum value of the arrayed elements of projection data of said succeeding frame, or projection data of said preceding frame, ternarization is performed in three levels of: the case where the value of an arrayed element of the projection data extracted by said extracting means is smaller than (-Th); the case where it is not smaller than (-Th) and not larger than Th; and the case where it is larger than Th.

**12.** The motion-vector detection device according to claim 7 or 8, wherein said smoothing process includes a process to change the value of the center of arrayed elements to the average value between preceding and succeeding arrayed elements in the case where said three arrayed elements are values of positive, zero and positive, and form a convex pattern downward, and a process to change said value of the center of arrayed elements to said average value between said preceding and succeeding arrayed elements in the case where said three arrayed elements are values of negative, zero and negative, and form a convex pattern upward.

**13.** The motion-vector detection device according to claim 7 or 8, wherein said smoothing means (34, 53) performs a smoothing process on the basis of three successive arrayed elements with respect to a waveform obtained by graphing values of arrayed elements in the order of elements of said data array of said projection data, and

said smoothing process includes a process to change the value of the center of arrayed elements to a value compressed to zero in said compression means in the case where said three arrayed elements are values of positive, negative and positive, and forms a convex pattern downward, and a process to change said value of the center of arrayed elements to the value compressed to zero in said compression means in the case where said three arrayed elements are values of negative, positive and negative, and forms a convex pattern upward.

**Patentansprüche**

**1.** Bewegungsvektorerfassungsvorrichtung zum Erfassen eines Bewegungsvektors zwischen Frame-Bildern eines vorangehenden Frames und eines nachfolgenden Frames, die nebeneinander in einer Zeitsequenz angeordnet sind, umfassend:

Kantenverstärkungsmittel (22) zum Verstärken einer vertikalen Kante eines vorbestimmten vertikalen Blocks in dem Frame-Bild, gelesen durch ein sequenzielles Wiederholen von Pixel-Scannen von horizontalen Zeilen in der vertikalen Richtung;

Projektionsmittel (23) zum Erhalten einer vertikalen Projektion, erhalten durch ein Addieren all der horizontalen Zeilen des vertikalen Blocks, dessen Kanten von dem Kantenverstärkungsmittel (22) verstärkt wurden, wodurch Projektionsdaten mit einem Datenarray für eine horizontale Zeile erzeugt werden;

Spezifizierungsmittel (29) zum Spezifizieren der Position eines im Array angeordneten Elements jeder Kreuzung, bei welcher eine Wellenform, die erhalten wird, indem Werte von im Array angeordneten Elementen in der Reihenfolge von Elementen des Daten-Arrays von Projektionsdaten, erhalten in dem Projektionsmittel für den vorangehenden Frame, graphisch dargestellt werden, und eine Linie, auf welcher die Werte der im Array angeordneten Elemente bei einem vorbestimmten konstanten Wert stehen, sich kreuzen; **dadurch gekennzeichnet, dass** sie umfasst:

Extraktionsmittel (30) zum Extrahieren von Daten-Arrays eines vorbestimmten Bereichs, in dessen Mittelpunkt sich die Position eines im Array angeordneten Elements jeder Kreuzung befindet, aus den Projektionsdaten, die von dem Projektionsmittel (23) erhalten werden, für den nachfolgenden Frame;
Additionsmittel (31) zum Addieren von Werten von im Array angeordneten Elementen mit derselben relativen Position hinsichtlich der Position eines im Array angeordneten Elements jeder Kreuzung für jedes der Daten-Arrays eines vorbestimmten Bereichs, extrahiert von dem Extraktionsmittel (30); und
Erfassungsmittel (32) zum Erfassen eines horizontalen Bewegungsvektors eines vorbestimmten vertikalen Blocks des Frame-Bildes auf der Basis des Additionsergebnisses, erhalten von dem Additionsmittel (31), wobei das Erfassungsmittel (32) die Verlässlichkeit des horizontalen Bewegungsvektors schätzt, der hinsichtlich des vorbestimmten vertikalen Blocks des Frame-Bildes erhalten wird, auf Basis des Additionsergebnisses an jeder relativen Position, erhalten von dem Additionsmittel (31),
wobei das Erfassungsmittel (32) den Maximalwert des Additionsergebnisses erhält, indem es relativ das Additionsergebnis der im Array angeordneten Elemente mit derselben relativen Position vergleicht, erhalten von dem Additionsmittel (31), und die Verlässlichkeit des horizontalen Bewegungsvektors, erhalten hinsichtlich des vorbestimmten vertikalen Blocks des Frame-Bildes, auf der Basis des Maximalwerts des Additionsergebnisses schätzt, und
wobei
das Erfassungsmittel (32) eine Krone einer Wellenform spezifiziert, erhalten durch ein grafisches Darstellen des Additionsergebnisses der im Array angeordneten Elemente mit derselben relativen Position hinsichtlich der relativen Position, in dem Fall, in welchem es mehr als eine Krone gibt, relativ das Additionsergebnis vergleicht, um das Additionsergebnis, das eine Spitze von jeder der Krone sein soll, aus dem Additionsergebnis, das die jede Krone bildet, als einen Spitzenwert von jeder der Krone zu spezifizieren, wobei ein Maximalwert zu einem ersten Spitzenwert aus einer Vielzahl der Spitzenwerte gemacht wird, wie auch ein nächster Maximalwert zu einem zweiten Spitzenwert, und das Erfassungsmittel (32) den ersten Spitzenwert mit dem zweiten Spitzenwert vergleicht, und, in dem Fall, in welchem das Verhältnis des ersten Spitzenwerts zu dem zweiten Spitzenwert nicht größer als ein vorbestimmter Wert ist, den horizontalen Bewegungsvektor, der hinsichtlich des vorbestimmten vertikalen Blocks des Frame-Bildes erhalten wird, als ungültig behandelt.

**2.** Bewegungsvektorerfassungsvorrichtung nach Anspruch 1, wobei, in dem Fall, in welchem der Maximalwert des Additionsergebnisses nicht größer ist als ein zuvor bestimmter vorbestimmter Wert, das Erfassungsmittel (32) den horizontalen Bewegungsvektor, der hinsichtlich des vorbestimmten vertikalen Blocks des Frame-Bildes erhalten wird, als ungültig behandelt.

**3.** Bewegungsvektorerfassungsvorrichtung zum Erfassen eines Bewegungsvektors zwischen Frame-Bildern eines vorangehenden Frames und eines nachfolgenden Frames, die nebeneinander in einer Zeitsequenz angeordnet sind, umfassend:

Kantenverstärkungsmittel (42) zum Verstärken einer horizontalen Kante eines vorbestimmten horizontalen Blocks in dem Frame-Bild, gelesen durch ein sequenzielles Wiederholen von Pixel-Scannen von horizontalen Zeilen in der vertikalen Richtung;
Projektionsmittel (43) zum Erhalten einer horizontalen Projektion des Bildes, dessen Kante von dem Kantenverstärkungsmittel (42) verstärkt wurde, wodurch Projektionsdaten mit einem Datenarray für eine vertikale Zeile erzeugt werden;
Spezifizierungsmittel (48) zum Spezifizieren der Position eines im Array angeordneten Elements jeder Kreuzung, bei welcher eine Wellenform, die erhalten wird, indem Werte von im Array angeordneten Elementen in der Reihenfolge von Elementen des Daten-Arrays von Projektionsdaten, erhalten in dem Projektionsmittel (43) für den vorangehenden Frame, graphisch dargestellt werden, und eine Linie, auf welcher die Werte der im Array angeordneten Elemente bei einem vorbestimmten konstanten Wert stehen, sich kreuzen; **dadurch gekennzeichnet, dass** sie umfasst:

Extraktionsmittel (49) zum Extrahieren von Daten-Arrays eines vorbestimmten Bereichs, in dessen Mittelpunkt sich die Position eines im Array angeordneten Elements jeder Kreuzung befindet, aus den Projektionsdaten, die von dem Projektionsmittel erhalten werden, für den nachfolgenden Frame;
Additionsmittel (50) zum Addieren von Werten von im Array angeordneten Elementen mit derselben relativen Position hinsichtlich der Position eines im Array angeordneten Elements jeder Kreuzung für jedes der Daten-Arrays eines vorbestimmten Bereichs, extrahiert von dem Extraktionsmittel (49); und
Erfassungsmittel (51) zum Erfassen eines vertikalen Bewegungsvektors eines vorbestimmten horizontalen Blocks des Frame-Bildes auf der Basis des Additionsergebnisses,
erhalten von dem Additionsmittel (50), wobei
das Erfassungsmittel (51) die Verlässlichkeit des vertikalen Bewegungsvektors schätzt, der hinsichtlich des vorbestimmten horizontalen Blocks des Frame-Bildes erhalten wird, auf Basis des Additionsergebnisses jeder relativen Position, erhalten von dem Additionsmittel (50), wobei
das Erfassungsmittel (51) den Maximalwert des Additionsergebnisses erhält, indem es relativ das Additionsergebnis der im Array angeordneten Elemente mit derselben relativen Position vergleicht, erhalten von dem Additionsmittel (50), und die Verlässlichkeit des vertikalen Bewegungsvektors, erhalten hinsichtlich des vorbestimmten horizontalen Blocks des Frame-Bildes, auf der Basis des Maximalwerts des Additionsergebnisses schätzt, und
wobei
das Erfassungsmittel (51) eine Krone einer Wellenform spezifiziert, erhalten durch ein grafisches Darstellen des Additionsergebnisses der im Array angeordneten Elemente mit derselben relativen Position hinsichtlich der relativen Position, in dem Fall, in welchem es mehr als eine Krone gibt, relativ das Additionsergebnis vergleicht, um das Additionsergebnis, das eine Spitze von jeder der Krone sein soll, aus dem
Additionsergebnis, das die jede Krone bildet, als einen Spitzenwert von jeder der Krone zu spezifizieren, wobei ein Maximalwert zu einem ersten Spitzenwert aus einer Vielzahl der Spitzenwerte gemacht wird, wie auch ein nächster Maximalwert zu einem zweiten Spitzenwert, und
das Erfassungsmittel (32) den ersten Spitzenwert mit dem zweiten Spitzenwert vergleicht, und, in dem Fall, in welchem das Verhältnis des ersten Spitzenwerts zu dem zweiten Spitzenwert nicht größer als ein vorbestimmter Wert ist, den vertikalen Bewegungsvektor, der hinsichtlich des vorbestimmten horizontalen Blocks des Frame-Bildes erhalten wird, als ungültig behandelt.

**4.** Bewegungsvektorerfassungsvorrichtung nach Anspruch 3, wobei
in dem Fall, in welchem der Maximalwert des Additionsergebnisses nicht größer als ein zuvor bestimmter vorbestimmter Wert ist, das Erfassungsmittel (51) den vertikalen Bewegungsvektor, der hinsichtlich des vorbestimmten horizontalen Blocks des Frame-Bildes erhalten wird, als ungültig behandelt.

**5.** Bewegungsvektorerfassungsvorrichtung nach Anspruch 1 oder 3, wobei das Erfassungsmittel (51) eine relative Position als einen Referenzwert hinsichtlich der Wellenform bestimmt, die durch grafisches Darstellen des Additionsergebnisses hinsichtlich der relativen Position erhalten wird, sequenziell die relative Position schiebt, um ein Vergleichsziel für die relative Position zu sein, die ein Referenzwert sein soll, und, in dem Fall, in welchem das Additionsergebnis gefunden wird, welches größer ist als das Additionsergebnis bei der relativen Position, die ein Referenzwert sein soll, den Spitzenwert von jeder der Krone erhält, indem eine Verarbeitung wiederholt wird, um den Referenzwert zu der relativen Position zu ändern, die das Vergleichsziel sein soll.

**6.** Bewegungsvektorerfassungsvorrichtung nach Anspruch 5, wobei
in dem Fall, in welchem das Additionsergebnis bei der relativen Position, die das Vergleichsziel sein soll, für den Spitzenwert von jeder Krone ein Wert ist, der nicht größer ist als ein Wert, der erhalten wird durch ein Multiplizieren des Spitzenwerts mit einem zuvor bestimmten zweiten Koeffizienten, das Erfassungsmittel (51) die Krone spezifiziert durch ein Definieren der relativen Position, die das Vergleichsziel sein soll, unter einer Vielzahl der Kronen, als ein Ende einer Krone sowie Definieren als ein Start einer nächsten Krone.

**7.** Bewegungsvektorerfassungsvorrichtung nach Anspruch 1, **dadurch gekennzeichnet, dass** sie umfasst
Glättungsmittel (34) zum Erhalten von geglätteten Projektionsdaten durch ein Entfernen von Fluktuationsrauschen, das die Projektionsdaten überlagert; wobei
das Spezifizierungsmittel (29) zum Spezifizieren der Position eines im Array angeordneten Elements von jeder Kreuzung, bei welcher sich eine Wellenform, die durch ein grafisches Darstellen von Werten von im Array angeordneten Elementen in der Reihenfolge von Elementen des Daten-Arrays der geglätteten Projektionsdaten für den vorangehenden Frame erhalten wird, und eine Linie, auf welcher die Werte der im Array angeordneten Elemente bei einem vorbestimmten konstanten Wert stehen, kreuzen; und
das Extraktionsmittel (30) zum Extrahieren von Daten-Arrays eines vorbestimmten Bereichs, in dessen Mittelpunkt sich die Position eines im Array angeordneten Elements jeder Kreuzung befindet, aus den geglätteten Projektionsdaten für den nachfolgenden Frame, wobei
das Glättungsmittel (34, 53) eine Glättungsverarbeitung durchführt auf der Basis von drei sukzessive im Array angeordneten Elementen hinsichtlich einer Wellenform, die erhalten wird durch ein grafisches Darstellen von Werten von im Array angeordneten Elementen in der Reihenfolge von Elementen des Daten-Arrays der Projektionsdaten, und
die Glättungsverarbeitung eine Verarbeitung umfasst, um den Wert des Mittelpunkts von im Array angeordneten Elementen zu dem Durchschnittswert zwischen vorangehenden und nachfolgenden im Array angeordneten Elementen in dem Fall zu ändern, in welchem jedes von drei im Array angeordneten Elementen ein positiver Wert ist und ein nach unten gerichtetes konvexes Muster bildet, und eine Verarbeitung, um den Wert des Mittelpunkts von im Array angeordneten Elementen zu dem Durchschnittswert zwischen den vorangehenden und nachfolgenden im Array angeordneten Elementen zu ändern, in dem Fall, in welchem jedes der drei im Array angeordneten Elemente ein negativer Wert ist und ein nach oben gerichtets konvexes Muster bildet.

**8.** Bewegungsvektorerfassungsvorrichtung nach Anspruch 3, **dadurch gekennzeichnet, dass** sie umfasst
Glättungsmittel (53) zum Erhalten von geglätteten Projektionsdaten durch ein Entfernen von Fluktuationsrauschen, das die Projektionsdaten überlagert; wobei
das Spezifizierungsmittel (43) zum Spezifizieren der Position eines im Array angeordneten Elements von jeder Kreuzung, bei welcher sich eine Wellenform, die durch ein grafisches Darstellen von Werten von im Array angeordneten Elementen in der Reihenfolge von Elementen des Daten-Arrays der geglätteten Projektionsdaten für den vorangehenden Frame erhalten wird, und eine Linie, auf welcher die Werte der im Array angeordneten Elemente bei einem vorbestimmten konstanten Wert stehen, kreuzen; und
das Extraktionsmittel (49) zum Extrahieren von Daten-Arrays eines vorbestimmten Bereichs, in dessen Mittelpunkt sich die Position eines im Array angeordneten Elements jeder Kreuzung befindet, aus den geglätteten Projektionsdaten für den nachfolgenden Frame, wobei
das Glättungsmittel (34, 53) eine Glättungsverarbeitung durchführt auf der Basis von drei sukzessive im Array angeordneten Elementen hinsichtlich einer Wellenform, die erhalten wird durch ein grafisches Darstellen von Werten von im Array angeordneten Elementen in der Reihenfolge von Elementen des Daten-Arrays der Projektionsdaten, und
die Glättungsverarbeitung eine Verarbeitung umfasst, um den Wert des Mittelpunkts von im Array angeordneten Elementen zu dem Durchschnittswert zwischen vorangehenden und nachfolgenden im Array angeordneten Elementen in dem Fall zu ändern, in welchem jedes von drei im Array angeordneten Elementen ein positiver Wert ist und ein nach unten gerichtetes konvexes Muster bildet, und eine Verarbeitung, um den Wert des Mittelpunkts von im Array angeordneten Elementen zu dem Durchschnittswert zwischen den vorangehenden und nachfolgenden im Array angeordneten Elementen zu ändern, in dem Fall, in welchem jedes der drei im Array angeordneten Elemente ein negativer Wert ist und ein nach oben gerichtets konvexes Muster bildet.

**9.** Bewegungsvektorerfassungsvorrichtung nach Anspruch 7 oder 8, ferner umfassend:

Maximalwert-Spezifizierungsmittel (28) zum Erhalten des Maximalwerts von im Array angeordneten Elementen von Projektionsdaten in Bezug auf den vorangehenden Frame, wobei,
der vorbestimmte konstante Wert auf Basis des Maximalwerts eingestellt wird, erhalten durch das Maximalwert-Spezifizierungsmittel (28).

**10.** Bewegungsvektorerfassungsvorrichtung nach Anspruch 7 oder 8, ferner umfassend:

Komprimierungsmittel (314, 504) zum Komprimieren der Datenlänge von jedem im Array angeordneten Element der Daten-Arrays des vorbestimmten Bereichs, extrahiert von dem Extraktionsmittel (30, 49), und wobei;
das Additionsmittel (31, 50) Mittel (315, 505) umfasst, zum Addieren von Werten von im Array angeordneten Elementen mit derselben relativen Position hinsichtlich der Position eines im Array angeordneten Elements von jeder Kreuzung für jedes Daten-Array des vorbestimmten Bereichs, dessen Datenlänge von dem Komprimierungsmittel (314, 504) komprimiert wurde.

**11.** Bewegungsvektorerfassungsvorrichtung nach Anspruch 10, wobei das Komprimierungsmittel (314, 504) den Wert jedes im Array angeordneten Elements der Daten-Arrays des vorbestimmten Bereichs, extrahiert von dem Extraktionsmittel (30, 49), einem Tertiärisierungsprozess unterzieht, und bei dem Terziärisierungsprozess, bezüglich einem Schwellenwert Th(Th>0), definiert auf Basis des Maximalwerts der im Array angeordneten Elemente von Projektionsdaten von dem nachfolgenden Frame, oder Projektionsdaten von dem vorangehenden Frame, eine Tertiärisierung in drei Pegel durchgeführt wird: den Fall, in welchem der Wert eines im Array angeordneten Elements der Projektionsdaten extrahiert von dem Extraktionsmittel, kleiner als (-Th) ist; den Fall, bei welchem er nicht kleiner als (-Th) und nicht größer als Th ist; und den Fall, bei welchem er größer als Th ist.

**12.** Bewegungsvektorerfassungsvorrichtung nach Anspruch 7 oder 8, wobei die Glättungsverarbeitung eine Verarbeitung umfasst, um den Wert des Mittelpunkts von im Array angeordneten Elementen zu dem Durchschnittswert zwischen vorangehenden und nachfolgenden im Array angeordnete Elemente zu ändern, in dem Fall, in welchem drei im Array angeordnete Elemente Werte von positiv, null und positiv sind und ein nach unten gerichtetes konvexes Muster bilden, und eine Verarbeitung, um den Wert des Mittelpunkts von im Array angeordneten Elementen auf den Durchschnittswert zwischen den vorangehenden und nachfolgenden im Array angeordneten Elemente zu ändern, in dem Fall, in welchem die drei im Array angeordneten Elemente Werte von negativ, null und negativ sind und ein nach oben gerichtetes konvexes Muster bilden.

**13.** Bewegungsvektorerfassungsvorrichtung nach Anspruch 7 oder 8, wobei das Glättungsmittel (34, 53) eine Glättungsverarbeitung auf Basis von drei sukzessive im Array angeordneten Elementen hinsichtlich einer Wellenform durchführt, die erhalten wird durch ein grafisches Darstellen von Werten von im Array angeordneten Elementen in der Reihenfolge von Elementen des Daten-Arrays von Projektionsdaten, und
die Glättungsverarbeitung eine Verarbeitung umfasst, um den Wert des Mittelpunkts von im Array angeordneten Elementen auf einen Wert zu ändern, der auf null komprimiert wird, in dem Komprimierungsmittel, in dem Fall, in welchem die drei im Array angeordnete Elemente Werte von positiv, negativ und positiv sind und ein nach unten gerichtetes konvexes Muster bilden, und eine Verarbeitung, um den Wert des Mittelpunkts von im Array angeordneten Elementen auf den Wert zu ändern, der auf null komprimiert wird, in dem Komprimierungsmittel, in dem Fall, in welchem die drei im Array angeordneten Elemente Werte von negativ, positiv und negativ sind und ein nach oben gerichtetes konvexes Muster bilden.

## Revendications

**1.** Dispositif de détection de vecteur de mouvement destiné à détecter un vecteur de mouvement entre des images de trame d'une trame précédente et d'une trame suivante adjacentes l'une à l'autre dans une séquence temporelle, comprenant :

un moyen d'amélioration de bord (22) pour améliorer un bord vertical d'un bloc vertical prédéterminé dans ladite image de trame lue en répétant de manière séquentielle un balayage des pixels des lignes horizontales dans la direction verticale ;
un moyen de projection (23) pour obtenir une projection verticale obtenue en ajoutant toutes les lignes horizontales du bloc vertical dont les bords ont été améliorés par ledit moyen d'amélioration de bord (22), générant de ce fait des données de projection présentant un réseau de données pour une ligne horizontale ;
un moyen de spécification (29) pour spécifier la position d'un élément en réseau de chaque intersection au niveau de laquelle se croisent une forme d'onde obtenue en mettant en graphique les valeurs des éléments en réseau dans l'ordre des éléments dudit réseau de données des données de projection obtenues dans ledit moyen de projection pour ladite trame précédente, et une ligne sur laquelle les valeurs des éléments en réseau indiquent une valeur constante prédéterminée ; **caractérisé en ce qu'**il comprend
un moyen d'extraction (30) pour extraire des réseaux de données d'une plage prédéterminée, la position de l'élément en réseau de chaque dite intersection étant placée en son centre, à partir des données de projection obtenues par ledit moyen de projection (23) de ladite trame suivante ;
un moyen de sommation (31) pour sommer les valeurs des éléments en réseau présentant la même position relative par rapport à la position de l'élément en réseau de chaque dite intersection pour chacun des réseaux de données de plage prédéterminée extraits par ledit moyen d'extraction (30) ; et
un moyen de détection (32) pour détecter un vecteur de mouvement horizontal d'un bloc vertical prédéterminé de ladite image de trame sur la base du résultat de sommation obtenu par ledit moyen de sommation (31), dans lequel ledit moyen de détection (32) estime la fiabilité dudit vecteur de mouvement horizontal obtenu par rapport audit bloc vertical prédéterminé de ladite image de trame sur la base dudit résultat de sommation au niveau de chaque position relative obtenu par ledit moyen de sommation (31) ; dans lequel :

ledit moyen de détection (32) obtient la valeur maximale dudit résultat de sommation en comparant de manière relative ledit résultat de sommation desdits éléments en réseau présentant la même position relative, obtenu par ledit moyen de sommation (31), et estime la fiabilité dudit vecteur de mouvement horizontal obtenu par rapport audit bloc vertical prédéterminé de ladite image de trame sur la base de ladite valeur maximale dudit résultat de sommation ; et

dans lequel :

ledit moyen de détection (32) spécifie une crête d'une forme d'onde obtenue en mettant en graphique ledit résultat de sommation desdits éléments en réseau présentant la même position relative par rapport à ladite position relative, dans le cas où il y a plusieurs crêtes, compare de manière relative ledit résultat de sommation afin de spécifier si le résultat de sommation est une pointe de chaque dite crête à partir dudit résultat de sommation constituant chaque dite crête en tant que valeur de pointe de chaque dite crête, désignant une valeur maximale en tant que première valeur de pointe à partir d'une pluralité des dites valeurs de pointe ainsi que la valeur maximale suivante en tant que deuxième valeur de pointe, et ledit moyen de détection (32) compare ladite première valeur de pointe et ladite deuxième valeur de pointe, et dans le cas où la proportion de ladite première valeur de pointe par rapport à ladite deuxième valeur de pointe n'est pas supérieure à une valeur prédéterminée, traite ledit vecteur de mouvement horizontal obtenu par rapport audit bloc vertical prédéterminé de ladite image de trame comme étant non valide.

**2.** Dispositif de détection de vecteur de mouvement selon la revendication 1, dans lequel :

dans le cas où ladite valeur maximale dudit résultat de sommation n'est pas supérieure à une valeur prédéterminée déterminée précédemment, ledit moyen de détection (32) traite ledit vecteur de mouvement horizontal obtenu par rapport audit bloc vertical prédéterminé de ladite image de trame comme étant non valide.

**3.** Dispositif de détection de vecteur de mouvement destiné à détecter un vecteur de mouvement entre des images de trame d'une trame précédente et d'une trame suivante adjacentes l'une à l'autre dans une séquence temporelle, comprenant :

un moyen d'amélioration de bord (42) pour améliorer un bord horizontal d'un bloc horizontal prédéterminé dans ladite image de trame lue en répétant de manière séquentielle un balayage des pixels des lignes horizontales dans la direction verticale ;
un moyen de projection (43) pour obtenir une projection horizontale de l'image dont le bord a été amélioré par ledit moyen d'amélioration de bord (42), générant de ce fait des données de projection présentant un réseau de données pour une ligne verticale ;
un moyen de spécification (48) pour spécifier la position d'un élément en réseau de chaque intersection au niveau de laquelle se croisent une forme d'onde obtenue en mettant en graphique les valeurs des éléments en réseau dans l'ordre des éléments dudit réseau de données des données de projection obtenues dans ledit moyen de projection (43) pour ladite trame précédente, et une ligne sur laquelle les valeurs des éléments en réseau indiquent une valeur constante prédéterminée ; **caractérisé en ce qu'**il comprend :

un moyen d'extraction (49) pour extraire des réseaux de données d'une plage prédéterminée, la position de l'élément en réseau de chaque dite intersection étant placée en son centre, à partir des données de projection obtenues par ledit moyen de projection de ladite trame suivante ;
un moyen de sommation (50) pour sommer les valeurs des éléments en réseau présentant la même position relative par rapport à la position de l'élément en réseau de chaque dite intersection pour chacun des réseaux de données de la plage prédéterminée extraits par ledit moyen d'extraction (49) ; et
un moyen de détection (51) pour détecter un vecteur de mouvement vertical d'un bloc horizontal prédéterminé de ladite image de trame sur la base du résultat de sommation obtenu par ledit moyen de sommation (50), dans lequel
ledit moyen de détection (51) estime la fiabilité dudit vecteur de mouvement vertical obtenu par rapport audit bloc horizontal prédéterminé de ladite image de trame sur la base dudit résultat de sommation au niveau de chaque position relative obtenu par ledit moyen de sommation (50), dans lequel :

ledit moyen de détection (51) obtient la valeur maximale dudit résultat de sommation en comparant de manière relative ledit résultat de sommation desdits éléments en réseau présentant la même position relative, obtenu par ledit moyen de sommation (50), et estime la fiabilité dudit vecteur de mouvement vertical obtenu par rapport audit bloc horizontal prédéterminé de ladite image de trame sur la base de ladite valeur maximale dudit résultat de sommation, et dans lequel :

ledit moyen de détection (51) spécifie une crête d'une forme d'onde obtenue en mettant en graphique ledit résultat de sommation desdits éléments en réseau présentant la même position relative par rapport à ladite position relative, dans le cas où il y a plusieurs crêtes, compare de manière relative ledit résultat de sommation afin de spécifier si le résultat de sommation est une pointe de chaque dite crête à partir dudit résultat de sommation constituant chaque dite crête en tant que valeur de pointe de chaque dite crête, désignant une valeur maximale en tant que première valeur de pointe à partir d'une pluralité des dites valeurs de pointe ainsi que la valeur maximale suivante en tant que deuxième valeur de pointe, et ledit moyen de détection (32) compare ladite première valeur de pointe et ladite deuxième valeur de pointe, et dans le cas où la proportion de ladite première valeur de pointe par rapport à ladite deuxième valeur de pointe n'est pas supérieure à une valeur prédéterminée, traite ledit vecteur de mouvement vertical obtenu par rapport au bloc horizontal prédéterminé de ladite image de trame comme étant non valide.

**4.** Dispositif de détection de vecteur de mouvement selon la revendication 3, dans lequel
dans le cas où ladite valeur maximale dudit résultat de sommation n'est pas supérieure à une valeur prédéterminée déterminée précédemment, ledit moyen de détection (51) traite ledit vecteur de mouvement vertical obtenu par rapport audit bloc horizontal prédéterminé de ladite image de trame comme étant non valide.

**5.** Dispositif de détection de vecteur de mouvement selon la revendication 1 ou 3, dans lequel
ledit moyen de détection (51) détermine une position relative en tant que valeur de référence par rapport à ladite forme d'onde obtenue en mettant en graphique ledit résultat de sommation par rapport à ladite position relative, décale de manière séquentielle ladite position relative pour qu'elle devienne une cible de comparaison afin que la position relative soit une valeur de référence, et dans le cas où l'on constate que ledit résultat de sommation, qui est supérieur audit résultat de sommation au niveau de ladite position relative, est une valeur de référence, obtient ladite valeur de pointe de chaque dite crête en répétant un processus visant à remplacer ladite valeur de référence par ladite position relative pour devenir ladite cible de comparaison.

**6.** Dispositif de détection de vecteur de mouvement selon la revendication 5, dans lequel :

dans le cas où ledit résultat de sommation au niveau de ladite position relative comme étant ladite cible de comparaison pour ladite valeur de pointe de chaque dite crête, est une valeur inférieure à une valeur obtenue en multipliant ladite valeur de pointe par un deuxième coefficient déterminé précédemment, ledit moyen de détection (51) spécifie ladite crête en définissant ladite position relative comme étant ladite cible de comparaison parmi une pluralité de dites crêtes comme étant une extrémité d'une crête et en la définissant aussi comme étant le début d'une crête suivante.

**7.** Dispositif de détection de vecteur de mouvement selon la revendication 1, **caractérisé en ce qu'**il comprend
un moyen de lissage (34) pour obtenir une donnée de projection lissée en éliminant le bruit fluctuant superposé à ladite donnée de projection, dans lequel
un moyen de spécification (29) pour spécifier la position d'un élément en réseau de chaque intersection au niveau de laquelle se croisent une forme d'onde obtenue en mettant en graphique les valeurs des éléments en réseau dans l'ordre des éléments dudit réseau de données de ladite donnée de projection lissée pour ladite trame précédente, et une ligne sur laquelle les valeurs des éléments en réseau indiquent une valeur constante prédéterminée ; et
un moyen d'extraction (30) pour extraire des réseaux de données d'une plage prédéterminée, la position de l'élément en réseau de chaque dite intersection étant placée en son centre, à partir de ladite donnée de projection lissée pour ladite trame suivante ; dans lequel
lesdits moyens de lissage (34, 53) exécutent un processus de lissage sur la base de trois éléments en réseau successifs par rapport à une forme d'onde obtenue en mettant en graphique les valeurs des éléments en réseau dans l'ordre des éléments dudit réseau de données de ladite donnée de projection ; et
ledit processus de lissage comprend un processus consistant à remplacer la valeur du centre des éléments en réseau par une valeur moyenne située entre les éléments en réseau précédents et suivants dans le cas où chacun desdits trois éléments en réseau est une valeur positive et forme un motif convexe vers le bas, et un processus consistant à remplacer ladite valeur du centre des éléments en réseau par ladite valeur moyenne située entre lesdits éléments en réseau précédents et suivants dans le cas où chacun desdits trois éléments en réseau est une valeur négative et forme un motif convexe vers le haut.

**8.** Dispositif de détection de vecteur de mouvement selon la revendication 3, **caractérisé en ce qu'**il comprend
un moyen de lissage (53) pour obtenir une donnée de projection lissée en éliminant le bruit fluctuant superposé à ladite donnée de projection, dans lequel
le moyen de spécification (43) pour spécifier la position d'un élément en réseau de chaque intersection au niveau de laquelle se croisent une forme d'onde obtenue en mettant en graphique les valeurs des éléments en réseau dans l'ordre des éléments dudit réseau de données de ladite donnée de projection lissée pour ladite trame précédente, et une ligne sur laquelle les valeurs des éléments en réseau indiquent une valeur constante prédéterminée ; et
le moyen d'extraction (49) pour extraire des réseaux de données d'une plage prédéterminée, la position de l'élément en réseau de chaque dite intersection étant placée en son centre, à partir de ladite donnée de projection lissée pour ladite trame suivante, dans lequel
lesdits moyens de lissage (34, 53) exécutent un processus de lissage sur la base de trois éléments en réseau successifs par rapport à une forme d'onde obtenue en mettant en graphique les valeurs des éléments en réseau dans l'ordre des éléments dudit réseau de données de ladite donnée de projection ; et
ledit processus de lissage comprend un processus consistant à remplacer la valeur du centre des éléments en réseau par une valeur moyenne située entre les éléments en réseau précédents et suivants dans le cas où chacun desdits trois éléments en réseau est une valeur positive et forme un motif convexe vers le bas, et un processus consistant à remplacer ladite valeur du centre des éléments en réseau par ladite valeur moyenne située entre lesdits éléments en réseau précédents et suivants dans le cas où chacun desdits trois éléments en réseau est une valeur négative et forme un motif convexe vers le haut.

**9.** Dispositif de détection de vecteur de mouvement selon la revendication 7 ou 8, comprenant en outre :

un moyen de spécification de valeur maximale (28) pour obtenir la valeur maximale des éléments en réseau des données de projection par rapport à ladite trame précédente, dans lequel ladite valeur constante prédéterminée est fixée sur la base de la valeur maximale obtenue par ledit moyen de spécification de valeur maximale (28).

**10.** Dispositif de détection de vecteur de mouvement selon la revendication 7 ou 8, comprenant en outre :

des moyens de compression (314, 504) pour compresser la longueur des données de chaque élément en réseau des réseaux de données de la plage prédéterminée extraits par lesdits moyens d'extraction (30, 49), et dans lequel lesdits moyens de sommation (31, 50) comprennent des moyens (315, 505) pour sommer les valeurs des éléments en réseau présentant la même position relative par rapport à la position de l'élément en réseau de chaque dite intersection pour chaque réseau de données de la plage prédéterminée dont la longueur des données a été compressée par lesdits moyens de compression (314, 504).

**11.** Dispositif de détection de vecteur de mouvement selon la revendication 10, dans lequel
lesdits moyens de compression (314, 504) soumettent la valeur de chaque élément en réseau des réseaux de données de la plage prédéterminée extrait par lesdits moyens d'extraction (30, 49), à un processus de temarisation : et
dans ledit processus de ternarisation, en ce qui concerne une valeur de seuil Th (Th > 0) définie sur la base de la valeur maximale des éléments en réseau de la donnée de projection de ladite trame suivante, ou de la donnée de projection de ladite trame précédente, une ternarisation est exécutée à trois niveaux : dans le cas où la valeur d'un élément en réseau de la donnée de projection extrait par lesdits moyens d'extraction est inférieure à (- Th) ; dans le cas où elle n'est pas inférieure à (- Th) et n'est pas supérieure à Th ; et dans le cas où elle est supérieure à Th.

**12.** Dispositif de détection de vecteur de mouvement selon la revendication 7 ou 8, dans lequel
ledit processus de lissage comprend un processus consistant à remplacer la valeur du centre des éléments en réseau par une valeur moyenne située entre les éléments en réseau précédents et suivants dans le cas où lesdits trois éléments en réseau sont des valeurs positive, nulle et positive, et forment un motif convexe vers le bas, et un traitement consistant à remplacer ladite valeur du centre des éléments en réseau par ladite valeur moyenne située entre lesdits éléments en réseau précédents et suivants dans le cas où lesdits trois éléments en réseau sont une valeur négative, nulle et négative, et forment un motif convexe vers le haut.

**13.** Dispositif de détection de vecteur de mouvement selon la revendication 7 ou 8, dans lequel :

lesdits moyens de lissage (34, 53) exécutent un processus de lissage sur la base de trois éléments en réseau successifs par rapport à une forme d'onde obtenue en mettant en graphique les valeurs des éléments en réseau dans l'ordre des éléments dudit réseau de données de ladite donnée de projection ; et
ledit processus de lissage comprend un processus consistant à remplacer la valeur du centre des éléments en réseau par une valeur compressée à zéro dans lesdits moyens de compression dans le cas où lesdits trois éléments en réseau sont des valeurs positive, négative et positive, et forment un motif convexe vers le bas, et un processus consistant à remplacer ladite valeur du centre des éléments en réseau par la valeur compressée à zéro dans lesdits moyens de compression dans le cas où lesdits trois éléments en réseau sont des valeurs négative, positive et négative, et forment un motif convexe vers le haut.

FIG. 1

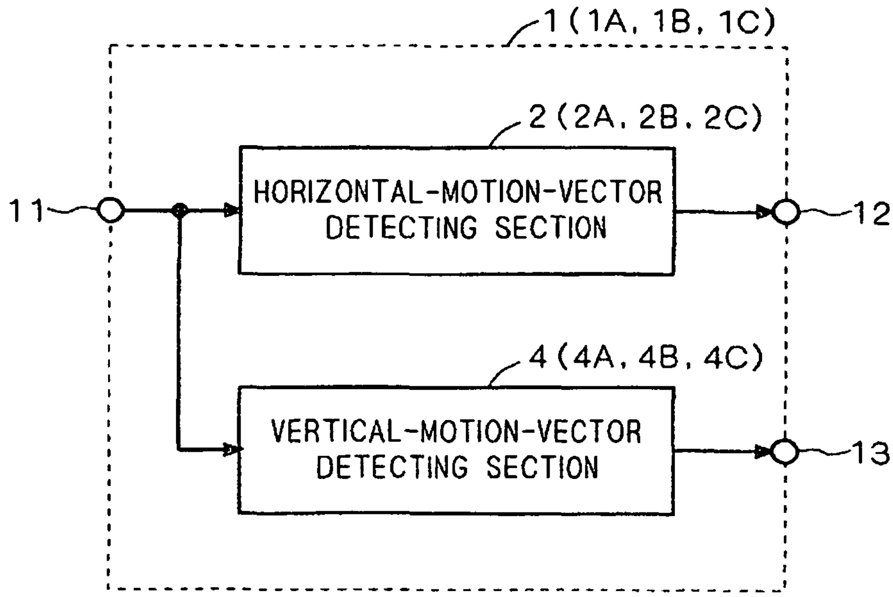
1 (1A, 1B, 1C)
2 (2A, 2B, 2C)
11
HORIZONTAL-MOTION-VECTOR DETECTING SECTION
12
4 (4A, 4B, 4C)
VERTICAL-MOTION-VECTOR DETECTING SECTION
13

FIG. 2

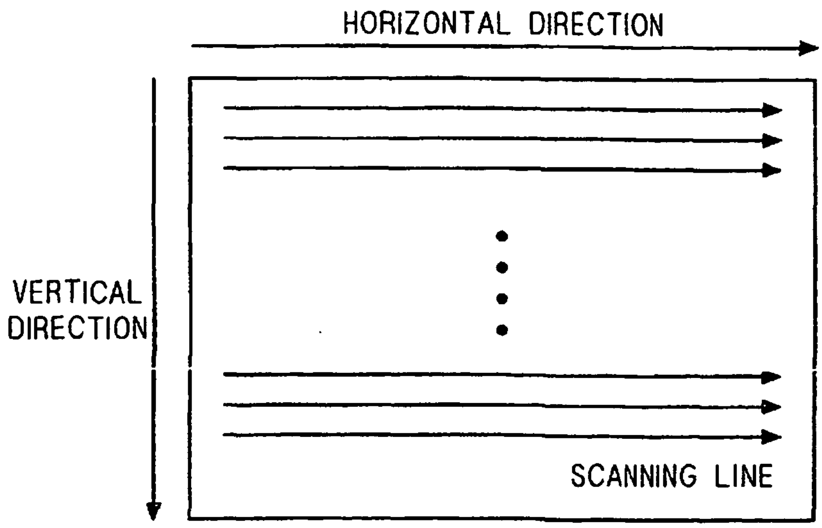
HORIZONTAL DIRECTION
VERTICAL DIRECTION
SCANNING LINE

FIG. 3

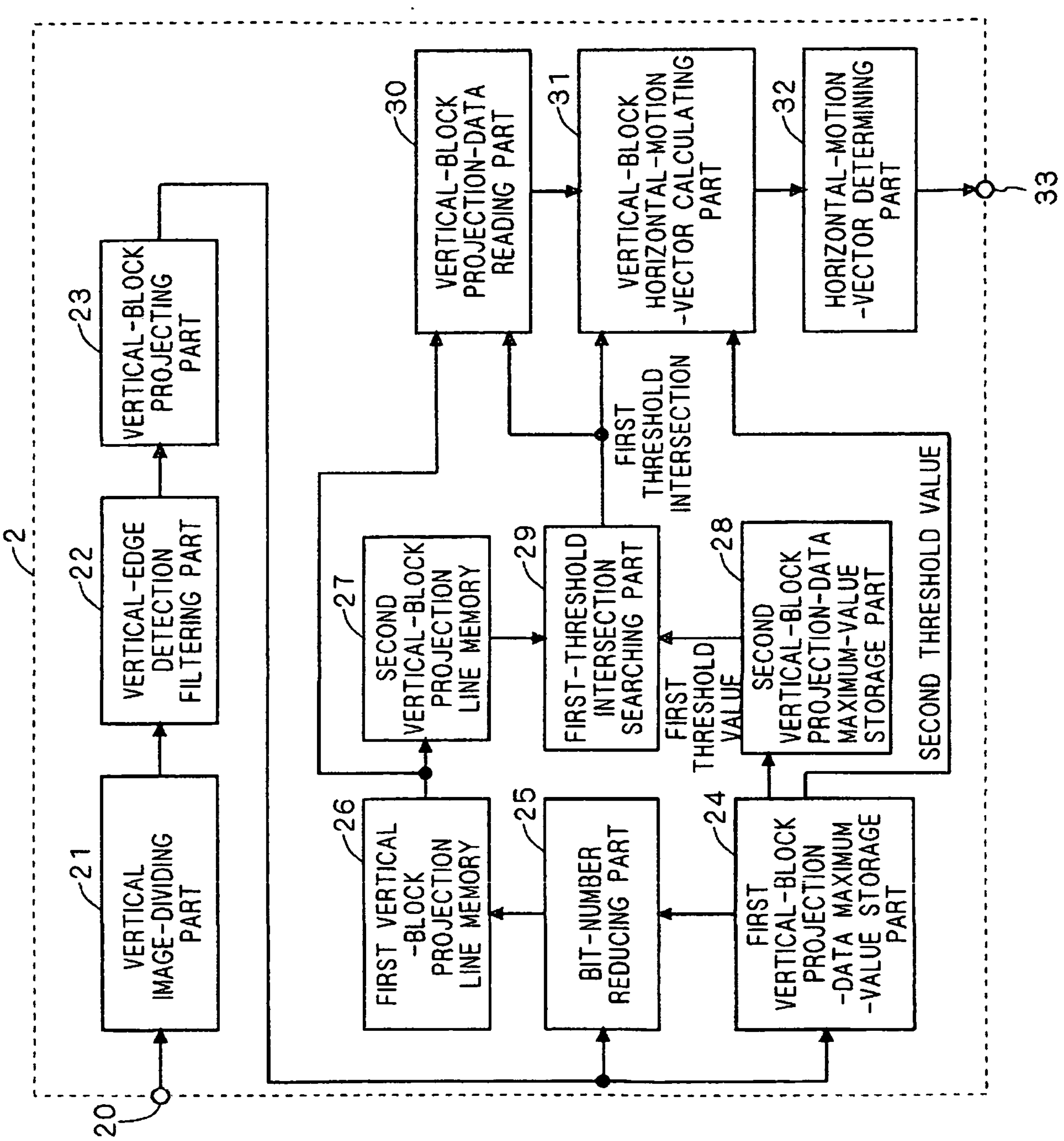
2
20
21 VERTICAL IMAGE-DIVIDING PART
22 VERTICAL-EDGE DETECTION FILTERING PART
23 VERTICAL-BLOCK PROJECTING PART
24 FIRST VERTICAL-BLOCK PROJECTION -DATA MAXIMUM -VALUE STORAGE PART
25 BIT-NUMBER REDUCING PART
26 FIRST VERTICAL -BLOCK PROJECTION LINE MEMORY
27 SECOND VERTICAL-BLOCK PROJECTION LINE MEMORY
28 SECOND VERTICAL-BLOCK PROJECTION-DATA MAXIMUM-VALUE STORAGE PART
29 FIRST-THRESHOLD INTERSECTION SEARCHING PART
30 VERTICAL-BLOCK PROJECTION-DATA READING PART
31 VERTICAL-BLOCK HORIZONTAL-MOTION -VECTOR CALCULATING PART
32 HORIZONTAL-MOTION -VECTOR DETERMINING PART
33
FIRST THRESHOLD VALUE
FIRST THRESHOLD INTERSECTION
SECOND THRESHOLD VALUE

F I G . 4

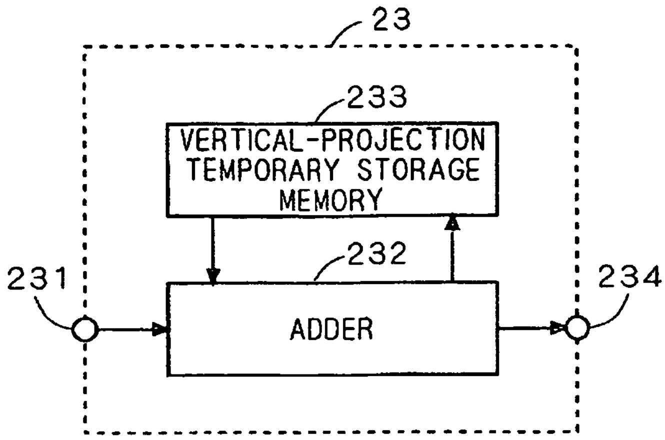
23
233
VERTICAL-PROJECTION TEMPORARY STORAGE MEMORY
232
231
ADDER
234

F I G . 5

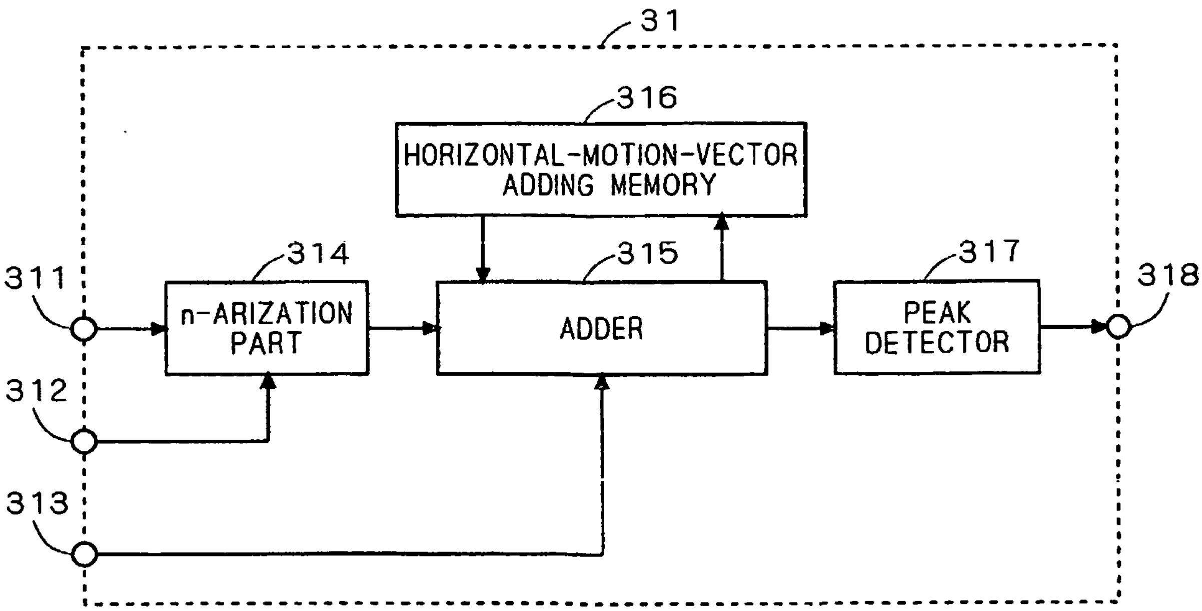
31
316
HORIZONTAL-MOTION-VECTOR ADDING MEMORY
314
315
317
311
n-ARIZATION PART
ADDER
PEAK DETECTOR
318
312
313

FIG. 6

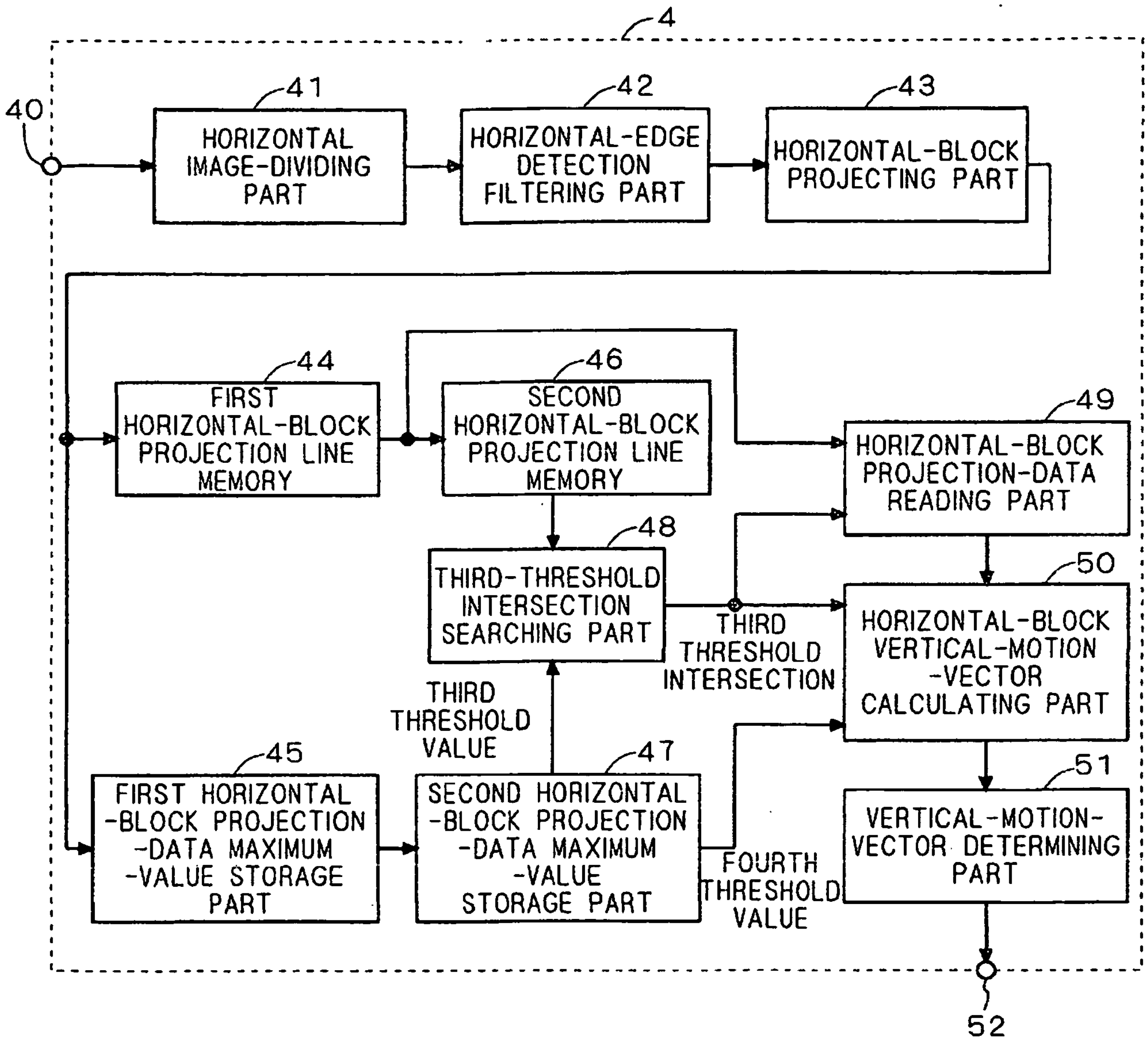

4
40
41
HORIZONTAL IMAGE-DIVIDING PART
42
HORIZONTAL-EDGE DETECTION FILTERING PART
43
HORIZONTAL-BLOCK PROJECTING PART
44
FIRST HORIZONTAL-BLOCK PROJECTION LINE MEMORY
46
SECOND HORIZONTAL-BLOCK PROJECTION LINE MEMORY
49
HORIZONTAL-BLOCK PROJECTION-DATA READING PART
48
THIRD-THRESHOLD INTERSECTION SEARCHING PART
THIRD THRESHOLD INTERSECTION
50
HORIZONTAL-BLOCK VERTICAL-MOTION -VECTOR CALCULATING PART
THIRD THRESHOLD VALUE
45
FIRST HORIZONTAL -BLOCK PROJECTION -DATA MAXIMUM -VALUE STORAGE PART
47
SECOND HORIZONTAL -BLOCK PROJECTION -DATA MAXIMUM -VALUE STORAGE PART
FOURTH THRESHOLD VALUE
51
VERTICAL-MOTION-VECTOR DETERMINING PART
52


FIG. 7

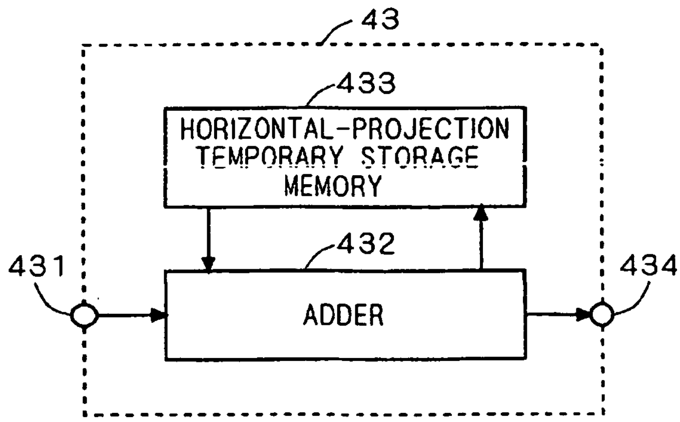

43
433
HORIZONTAL-PROJECTION TEMPORARY STORAGE MEMORY
432
431
ADDER
434

F I G . 8

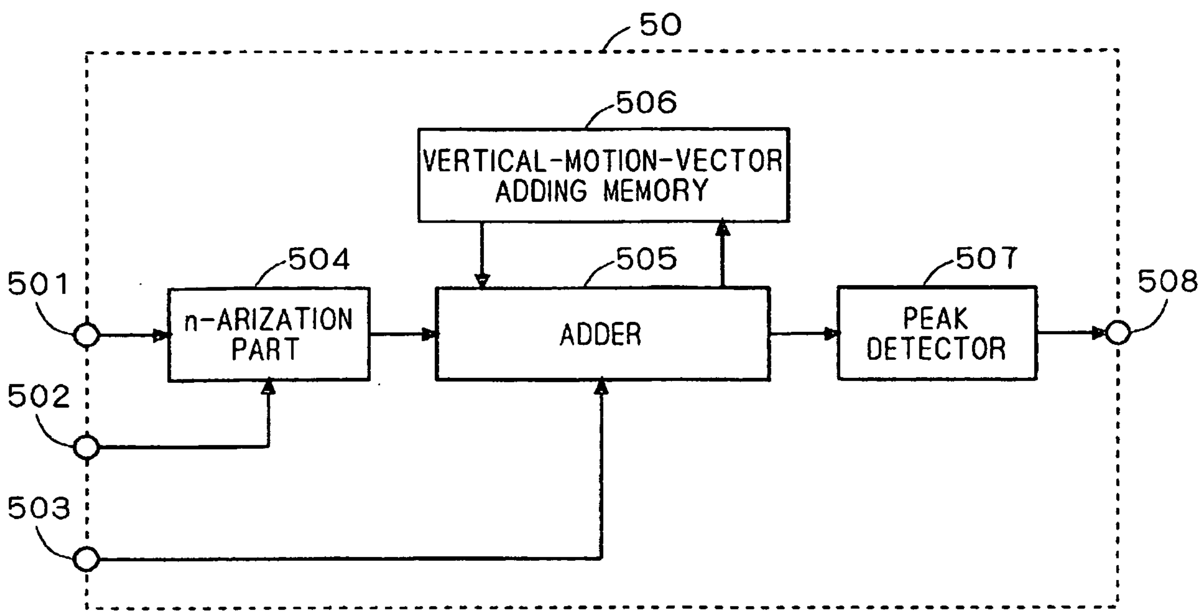
50
506
VERTICAL-MOTION-VECTOR ADDING MEMORY
501
504
n-ARIZATION PART
505
ADDER
507
PEAK DETECTOR
508
502
503

FIG. 9

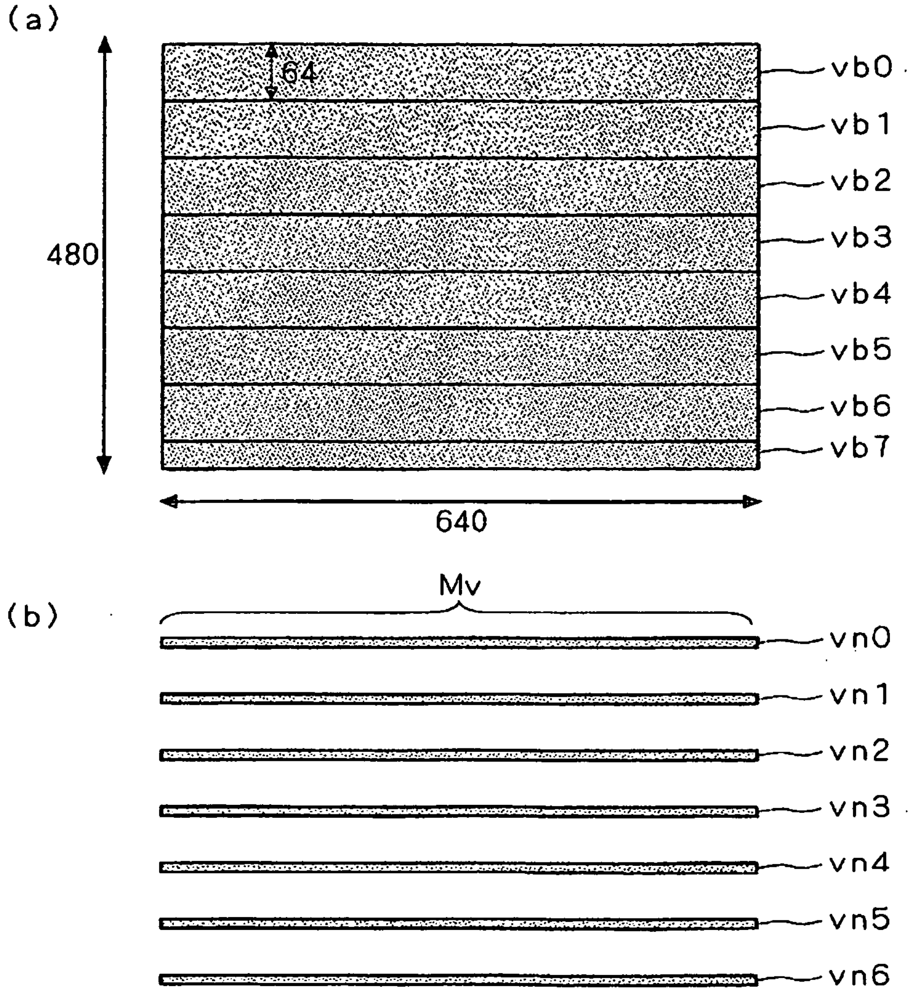
(a)
64
480
640
vb0
vb1
vb2
vb3
vb4
vb5
vb6
vb7
(b)
Mv
vn0
vn1
vn2
vn3
vn4
vn5
vn6

FIG. 10

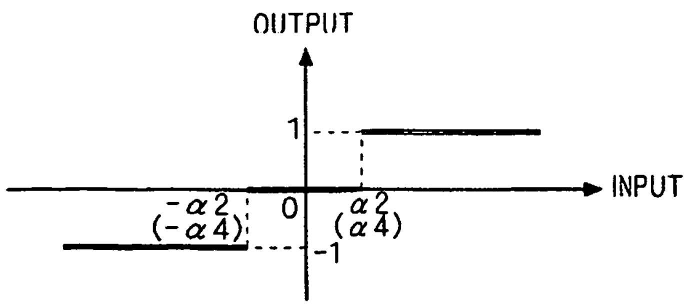
OUTPUT
INPUT
1
0
-1
-α2
(-α4)
α2
(α4)

F I G . 1 1

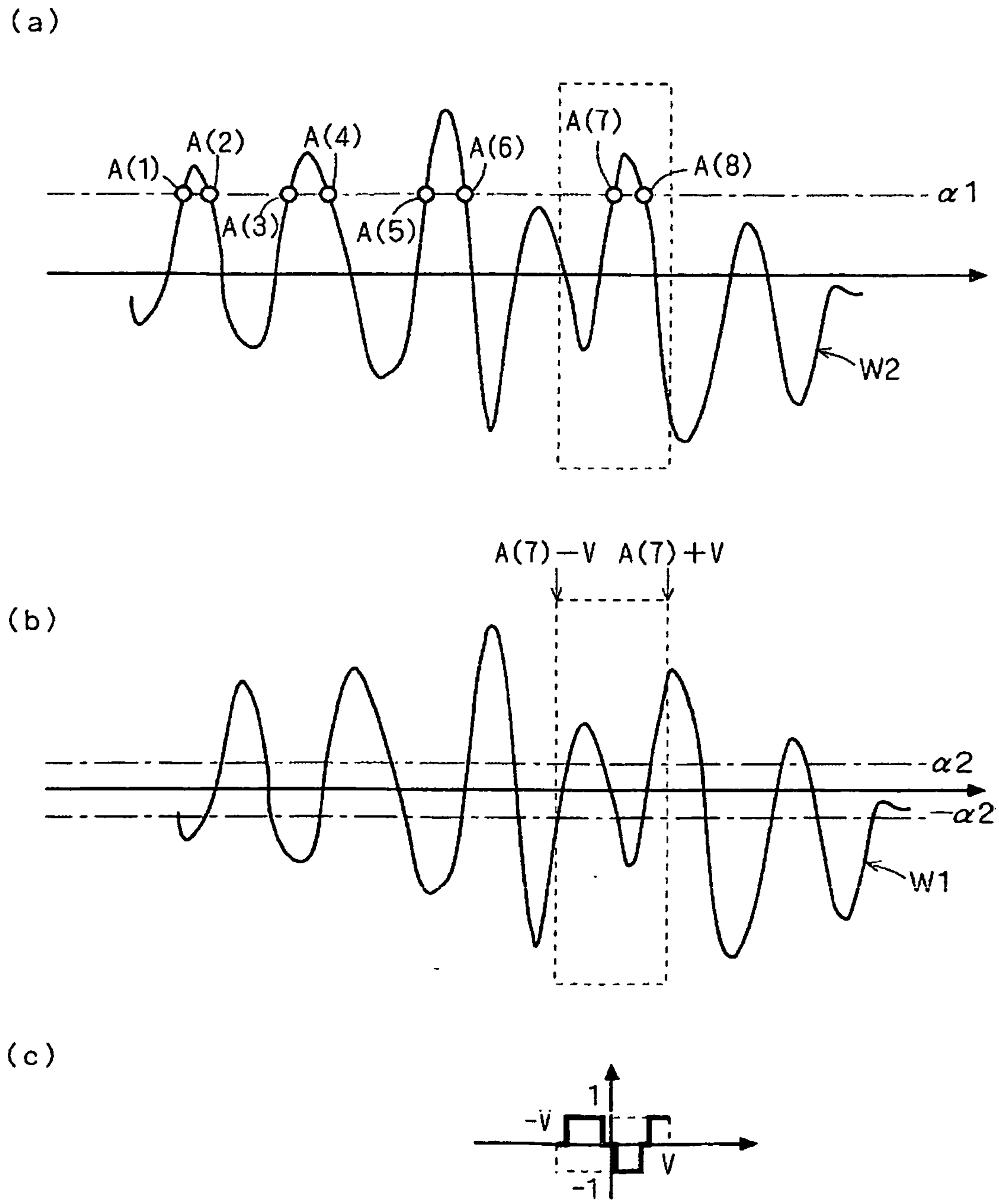

F I G . 1 2

(a)

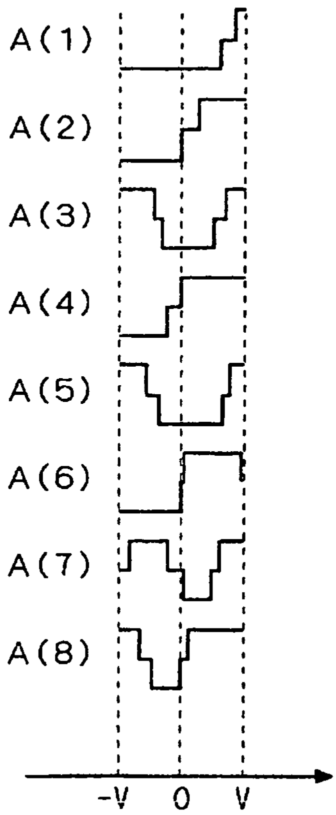


(b)

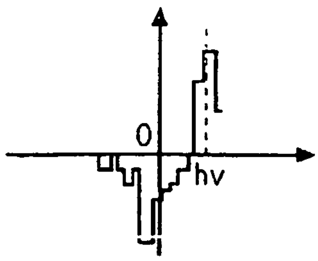

F I G . 1 3

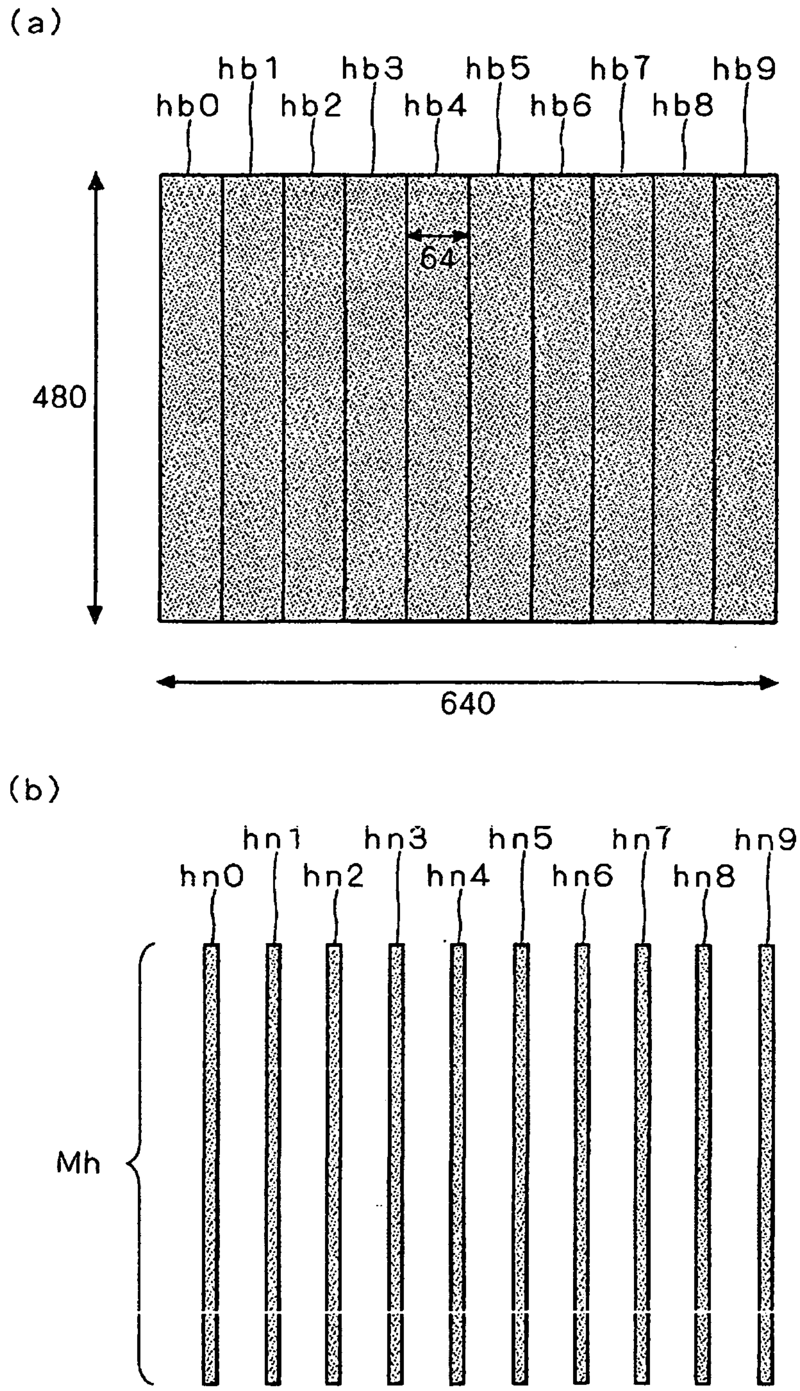
(a)
hb0
hb1
hb2
hb3
hb4
hb5
hb6
hb7
hb8
hb9
64
480
640
(b)
hn0
hn1
hn2
hn3
hn4
hn5
hn6
hn7
hn8
hn9
Mh

F I G . 1 4

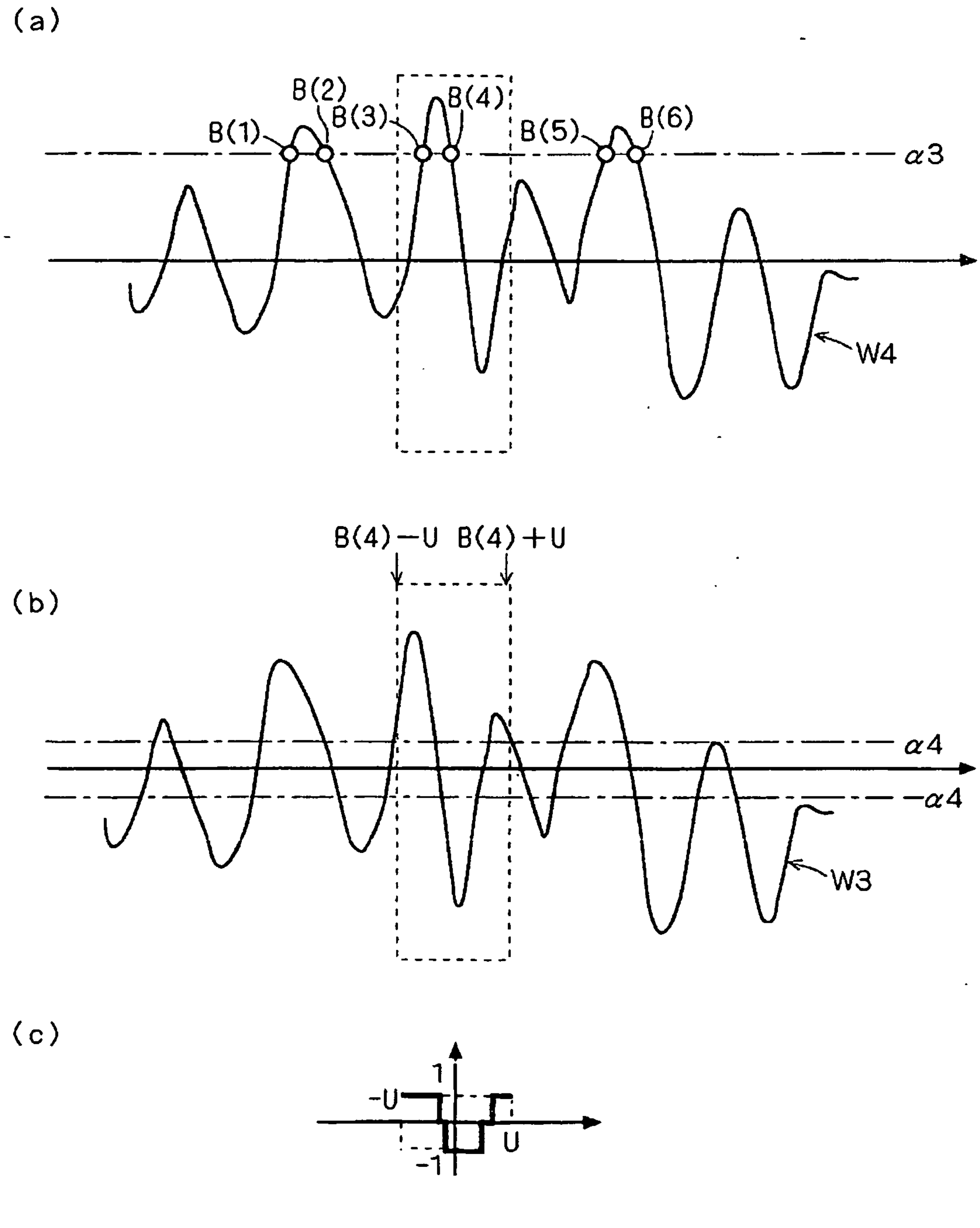

FIG. 15

(a)

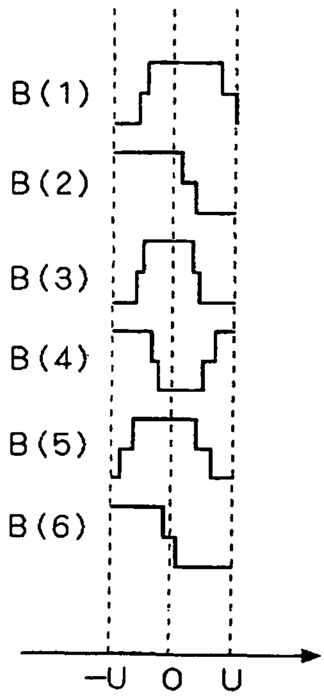


(b)

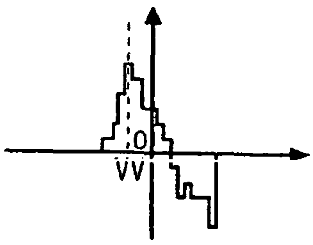

FIG. 16

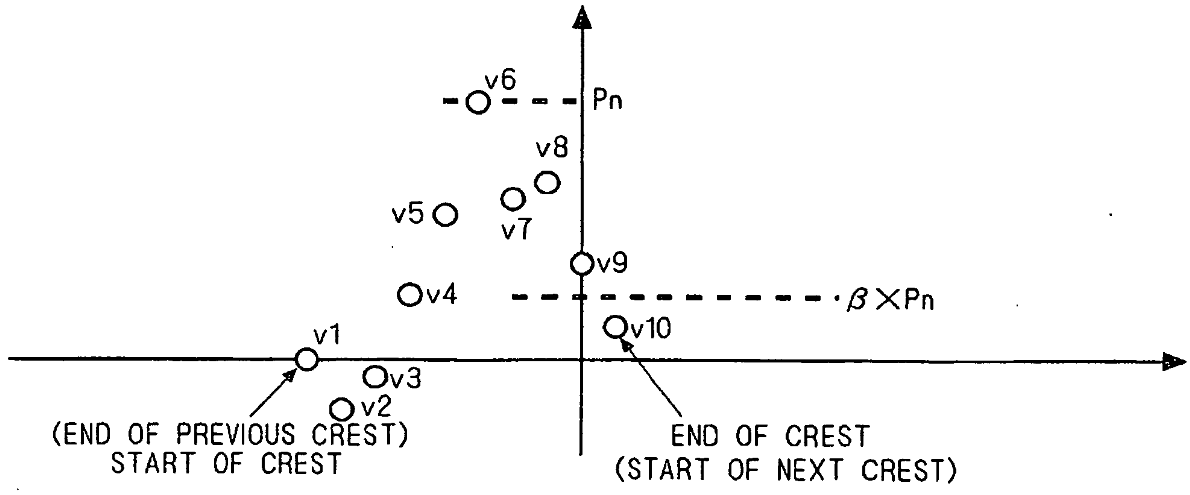
v6
Pn
v8
v5
v7
v9
v4
β×Pn
v1
v10
v3
v2
(END OF PREVIOUS CREST)
START OF CREST
END OF CREST
(START OF NEXT CREST)

FIG. 17

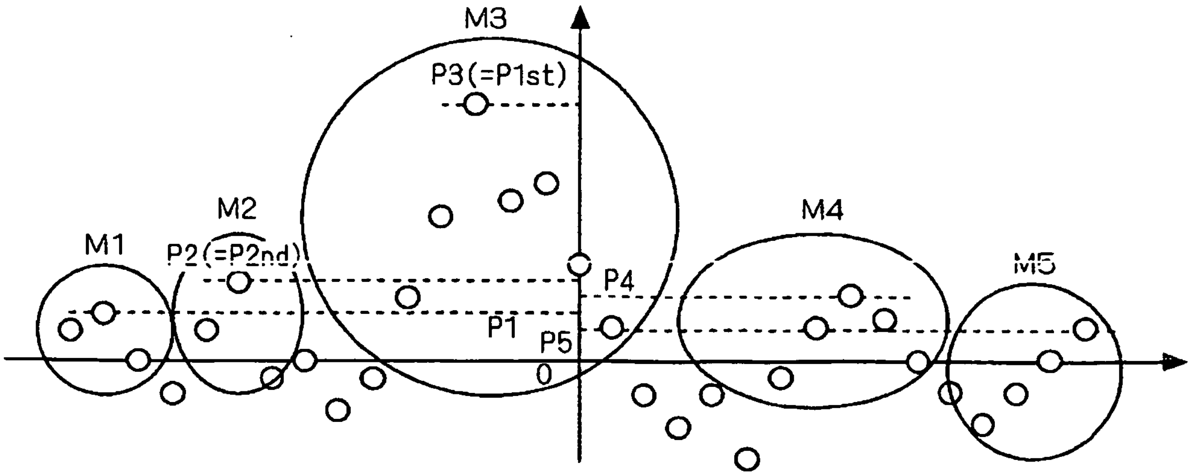
M3
P3(=P1st)
M2
M1
P2(=P2nd)
M4
M5
P4
P1
P5
0

F I G . 1 8

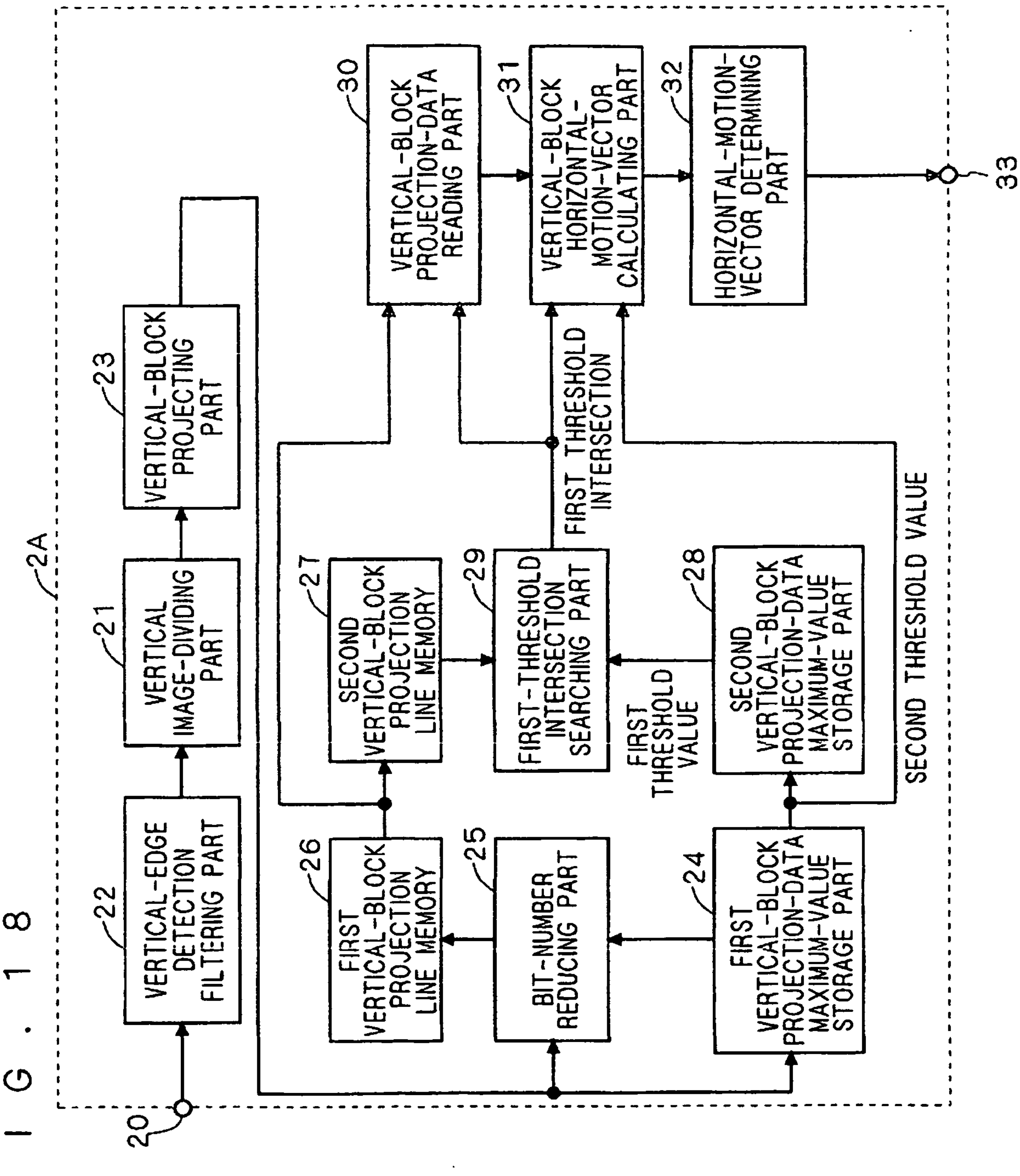
2A
20
VERTICAL-EDGE DETECTION FILTERING PART
22
VERTICAL IMAGE-DIVIDING PART
21
VERTICAL-BLOCK PROJECTING PART
23
FIRST VERTICAL-BLOCK PROJECTION LINE MEMORY
26
BIT-NUMBER REDUCING PART
25
FIRST VERTICAL-BLOCK PROJECTION-DATA MAXIMUM-VALUE STORAGE PART
24
SECOND VERTICAL-BLOCK PROJECTION LINE MEMORY
27
FIRST-THRESHOLD INTERSECTION SEARCHING PART
29
FIRST THRESHOLD VALUE
SECOND VERTICAL-BLOCK PROJECTION-DATA MAXIMUM-VALUE STORAGE PART
28
SECOND THRESHOLD VALUE
FIRST THRESHOLD INTERSECTION
VERTICAL-BLOCK PROJECTION-DATA READING PART
30
VERTICAL-BLOCK HORIZONTAL-MOTION-VECTOR CALCULATING PART
31
HORIZONTAL-MOTION-VECTOR DETERMINING PART
32
33

FIG. 19

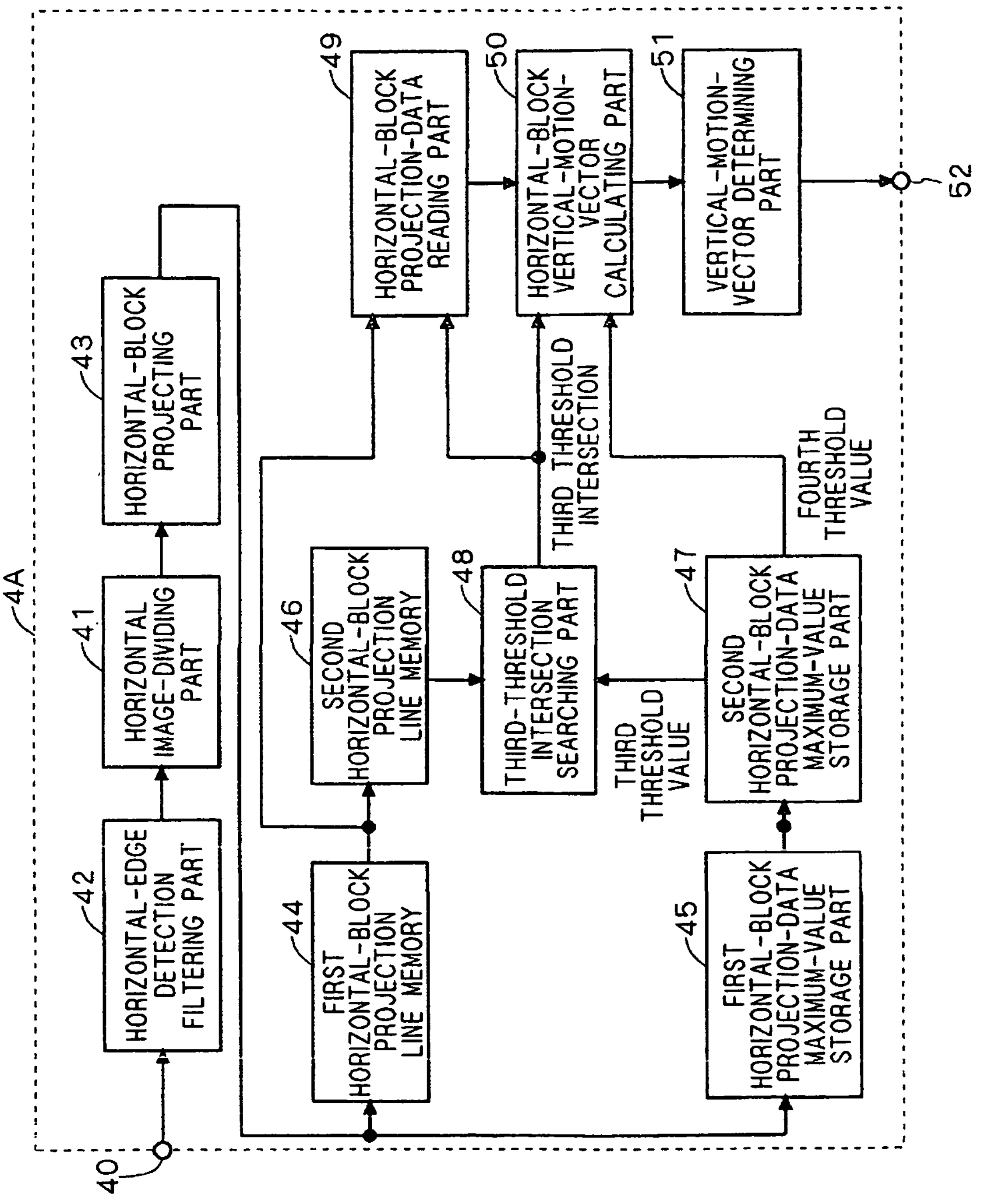
4A
40
42 HORIZONTAL-EDGE DETECTION FILTERING PART
41 HORIZONTAL IMAGE-DIVIDING PART
43 HORIZONTAL-BLOCK PROJECTING PART
44 FIRST HORIZONTAL-BLOCK PROJECTION LINE MEMORY
46 SECOND HORIZONTAL-BLOCK PROJECTION LINE MEMORY
48 THIRD-THRESHOLD INTERSECTION SEARCHING PART
45 FIRST HORIZONTAL-BLOCK PROJECTION-DATA MAXIMUM-VALUE STORAGE PART
47 SECOND HORIZONTAL-BLOCK PROJECTION-DATA MAXIMUM-VALUE STORAGE PART
THIRD THRESHOLD VALUE
THIRD THRESHOLD INTERSECTION
FOURTH THRESHOLD VALUE
49 HORIZONTAL-BLOCK PROJECTION-DATA READING PART
50 HORIZONTAL-BLOCK VERTICAL-MOTION-VECTOR CALCULATING PART
51 VERTICAL-MOTION-VECTOR DETERMINING PART
52

FIG. 20

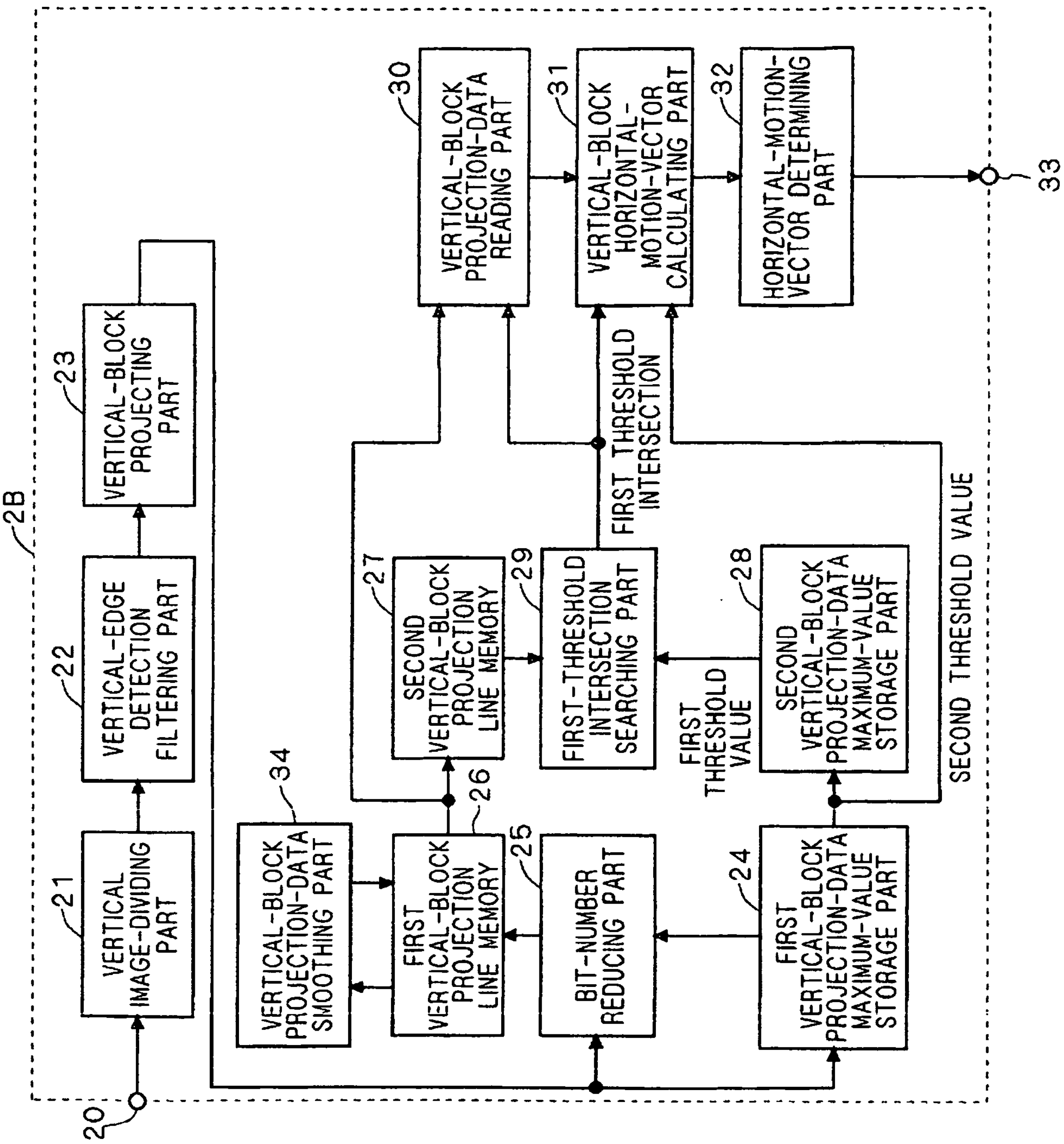
2B
20
21 VERTICAL IMAGE-DIVIDING PART
22 VERTICAL-EDGE DETECTION FILTERING PART
23 VERTICAL-BLOCK PROJECTING PART
34 VERTICAL-BLOCK PROJECTION-DATA SMOOTHING PART
25
26
FIRST VERTICAL-BLOCK PROJECTION LINE MEMORY
27 SECOND VERTICAL-BLOCK PROJECTION LINE MEMORY
BIT-NUMBER REDUCING PART
29 FIRST-THRESHOLD INTERSECTION SEARCHING PART
24 FIRST VERTICAL-BLOCK PROJECTION-DATA MAXIMUM-VALUE STORAGE PART
28 SECOND VERTICAL-BLOCK PROJECTION-DATA MAXIMUM-VALUE STORAGE PART
FIRST THRESHOLD VALUE
SECOND THRESHOLD VALUE
FIRST THRESHOLD INTERSECTION
30 VERTICAL-BLOCK PROJECTION-DATA READING PART
31 VERTICAL-BLOCK HORIZONTAL-MOTION-VECTOR CALCULATING PART
32 HORIZONTAL-MOTION-VECTOR DETERMINING PART
33

FIG. 21

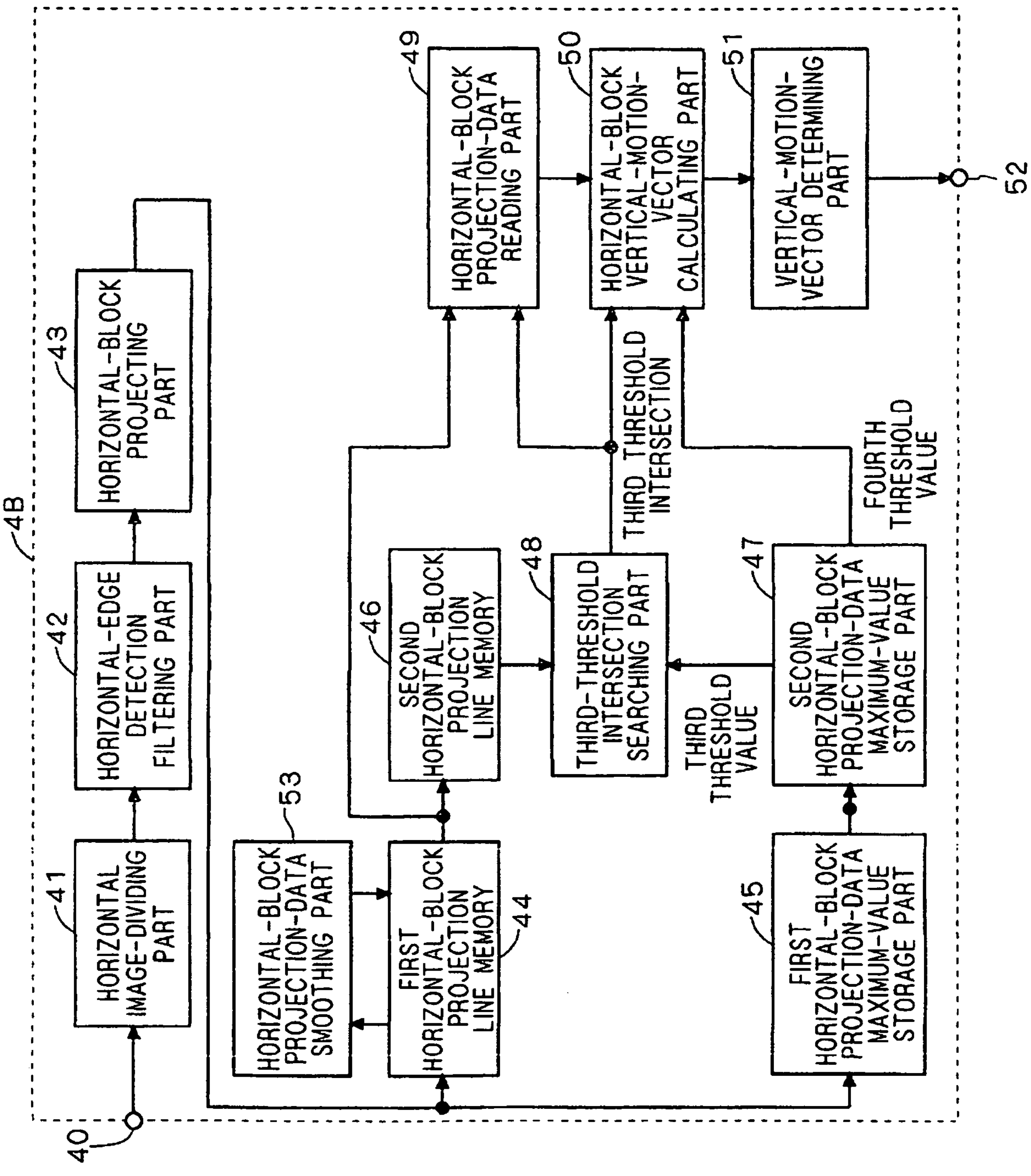
4B
40
41
HORIZONTAL IMAGE-DIVIDING PART
42
HORIZONTAL-EDGE DETECTION FILTERING PART
43
HORIZONTAL-BLOCK PROJECTING PART
53
HORIZONTAL-BLOCK PROJECTION-DATA SMOOTHING PART
44
FIRST HORIZONTAL-BLOCK PROJECTION LINE MEMORY
46
SECOND HORIZONTAL-BLOCK PROJECTION LINE MEMORY
48
THIRD-THRESHOLD INTERSECTION SEARCHING PART
THIRD THRESHOLD INTERSECTION
THIRD THRESHOLD VALUE
45
FIRST HORIZONTAL-BLOCK PROJECTION-DATA MAXIMUM-VALUE STORAGE PART
47
SECOND HORIZONTAL-BLOCK PROJECTION-DATA MAXIMUM-VALUE STORAGE PART
FOURTH THRESHOLD VALUE
49
HORIZONTAL-BLOCK PROJECTION-DATA READING PART
50
HORIZONTAL-BLOCK VERTICAL-MOTION-VECTOR CALCULATING PART
51
VERTICAL-MOTION-VECTOR DETERMINING PART
52

FIG. 22

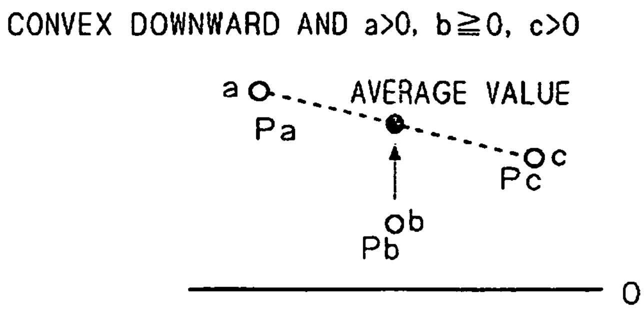


FIG. 23

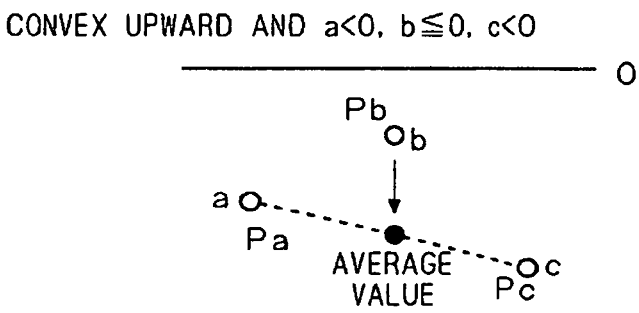


FIG. 24

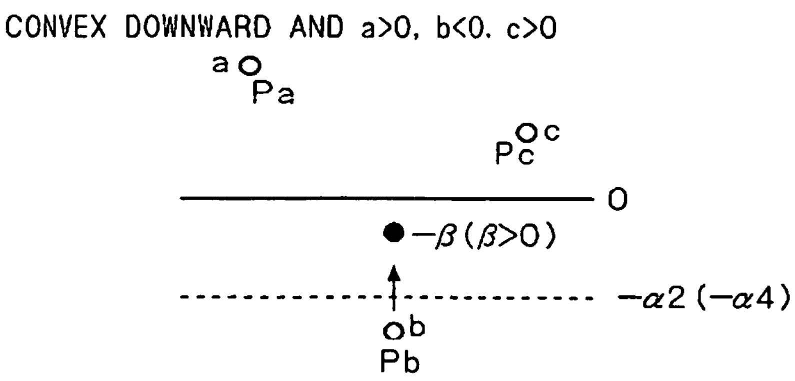

FIG. 25

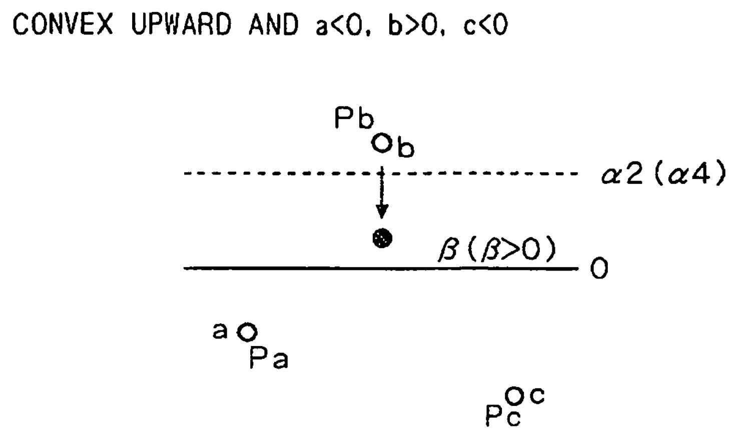
CONVEX UPWARD AND a<0, b>0, c<0
Pb
b
α2 (α4)
β (β>0)
0
a
Pa
c
Pc

FIG. 26

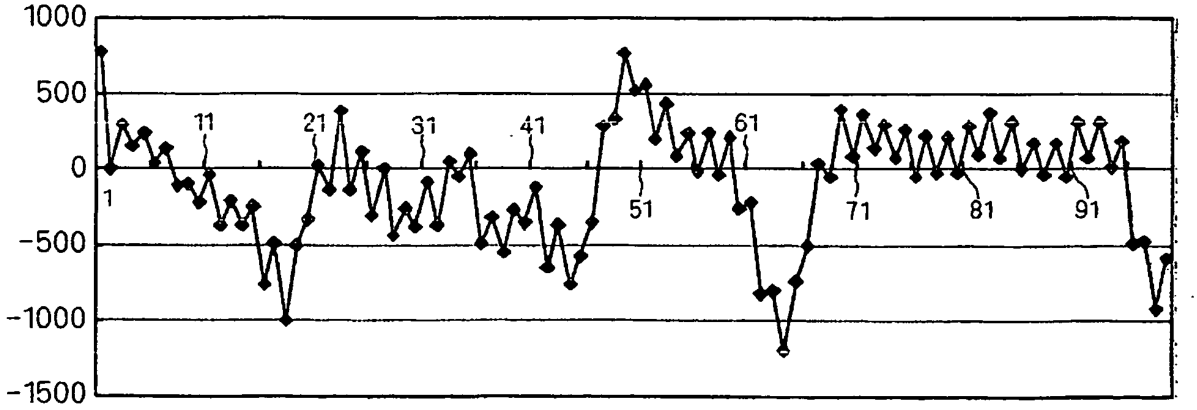
1000
500
0
-500
-1000
-1500
1
11
21
31
41
51
61
71
81
91

F I G . 2 7

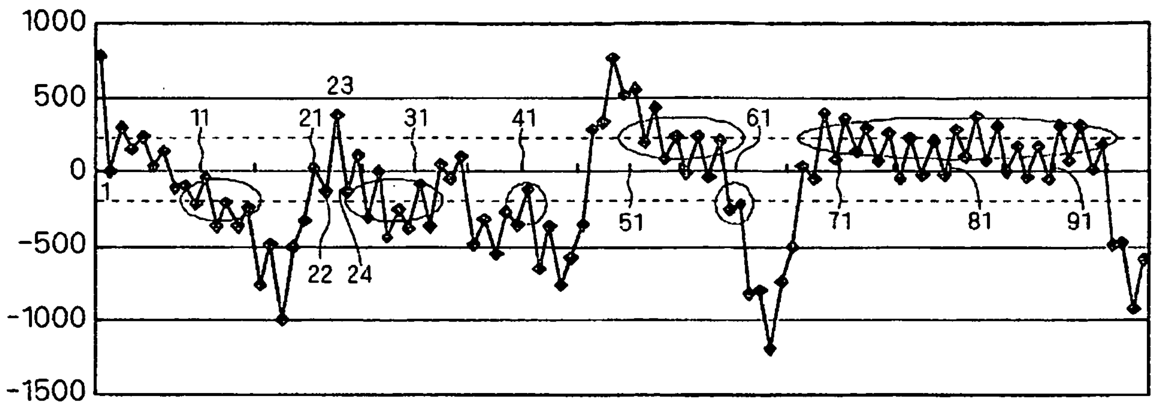
1000
500
0
-500
-1000
-1500
1
11
21
22
23
24
31
41
51
61
71
81
91

F I G . 2 8

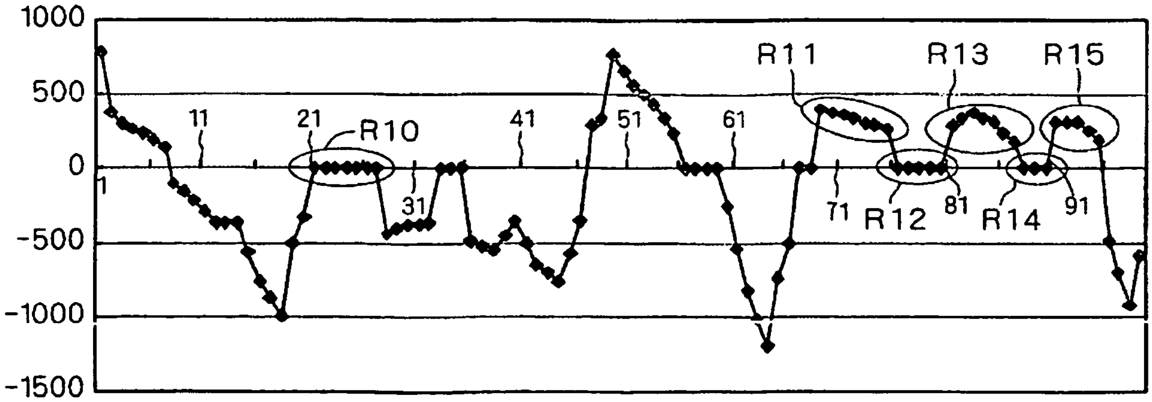
1000
500
0
-500
-1000
-1500
1
11
21
R10
31
41
51
61
71
R11
R12
81
R13
R14
91
R15

FIG. 29

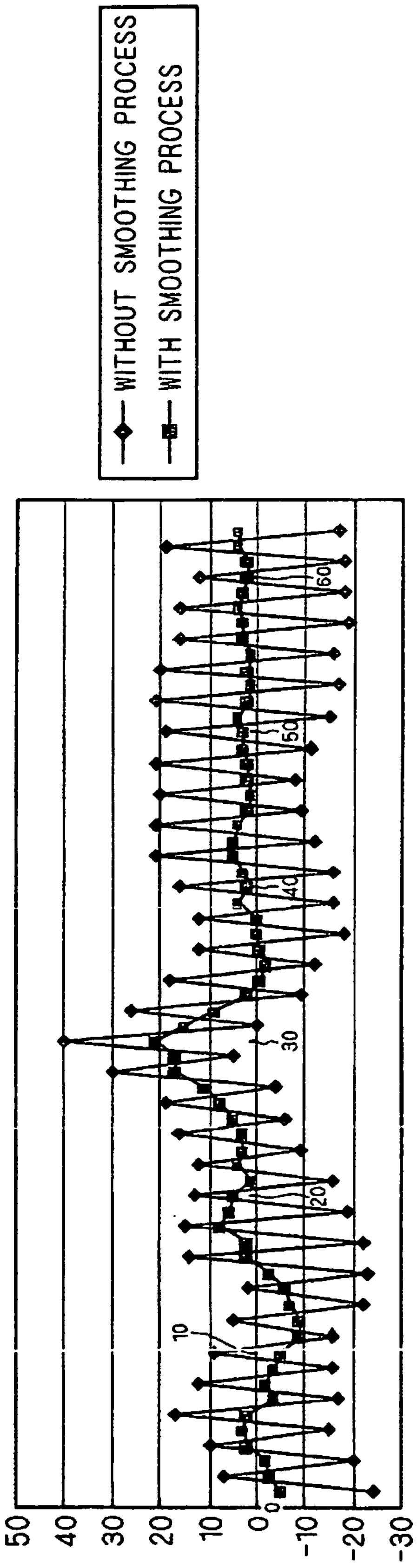
WITHOUT SMOOTHING PROCESS
WITH SMOOTHING PROCESS
50
40
30
20
10
0
-10
-20
-30
0
10
20
30
40
50
60

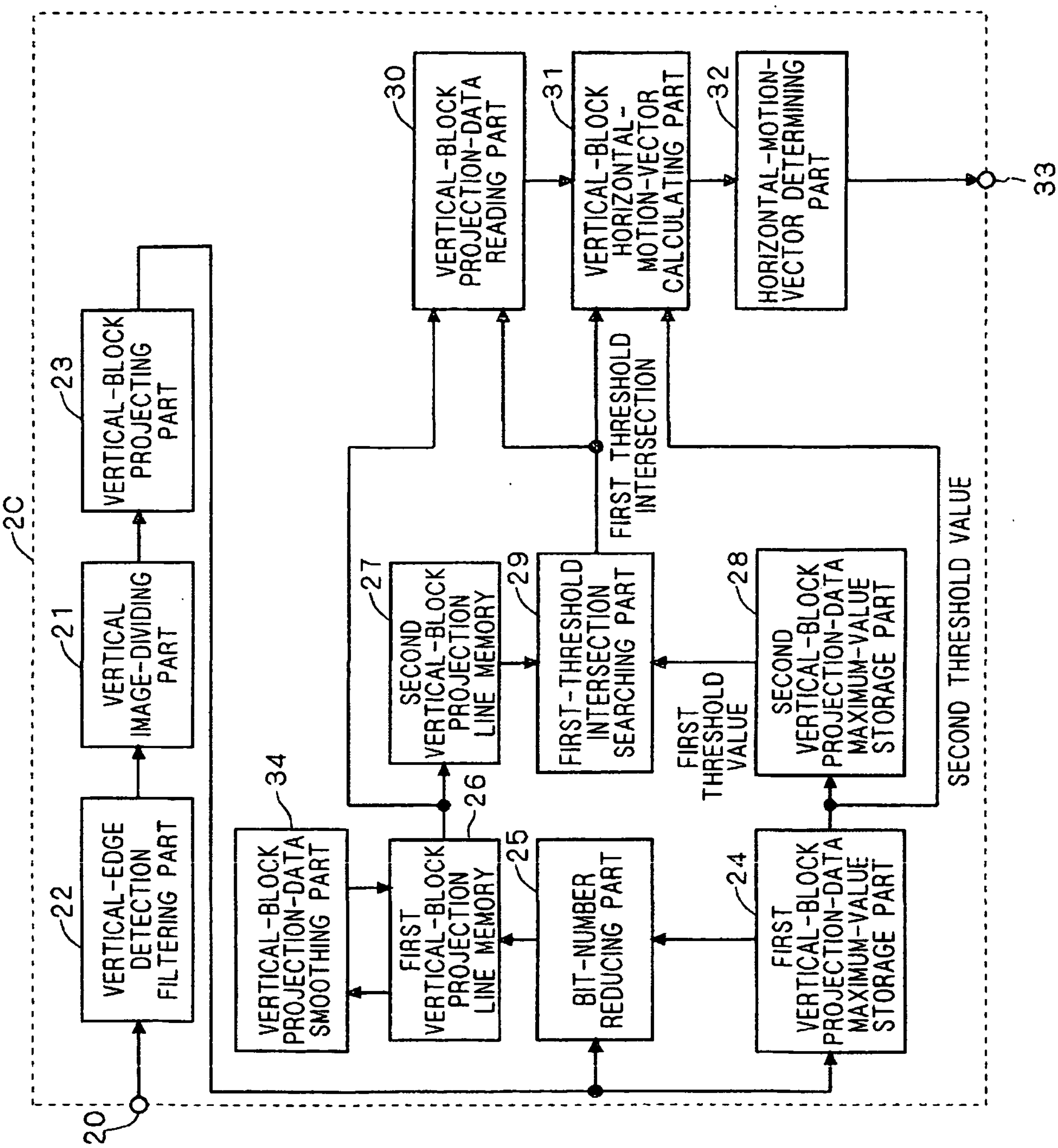
2C
20
VERTICAL-EDGE DETECTION FILTERING PART
22
VERTICAL IMAGE-DIVIDING PART
21
VERTICAL-BLOCK PROJECTING PART
23
VERTICAL-BLOCK PROJECTION-DATA SMOOTHING PART
34
FIRST VERTICAL-BLOCK PROJECTION LINE MEMORY
26
SECOND VERTICAL-BLOCK PROJECTION LINE MEMORY
27
BIT-NUMBER REDUCING PART
25
FIRST-THRESHOLD INTERSECTION SEARCHING PART
29
FIRST VERTICAL-BLOCK PROJECTION-DATA MAXIMUM-VALUE STORAGE PART
24
SECOND VERTICAL-BLOCK PROJECTION-DATA MAXIMUM-VALUE STORAGE PART
28
FIRST THRESHOLD VALUE
FIRST THRESHOLD INTERSECTION
SECOND THRESHOLD VALUE
VERTICAL-BLOCK PROJECTION-DATA READING PART
30
VERTICAL-BLOCK HORIZONTAL-MOTION-VECTOR CALCULATING PART
31
HORIZONTAL-MOTION-VECTOR DETERMINING PART
32
33

F I G . 3 0

FIG. 31

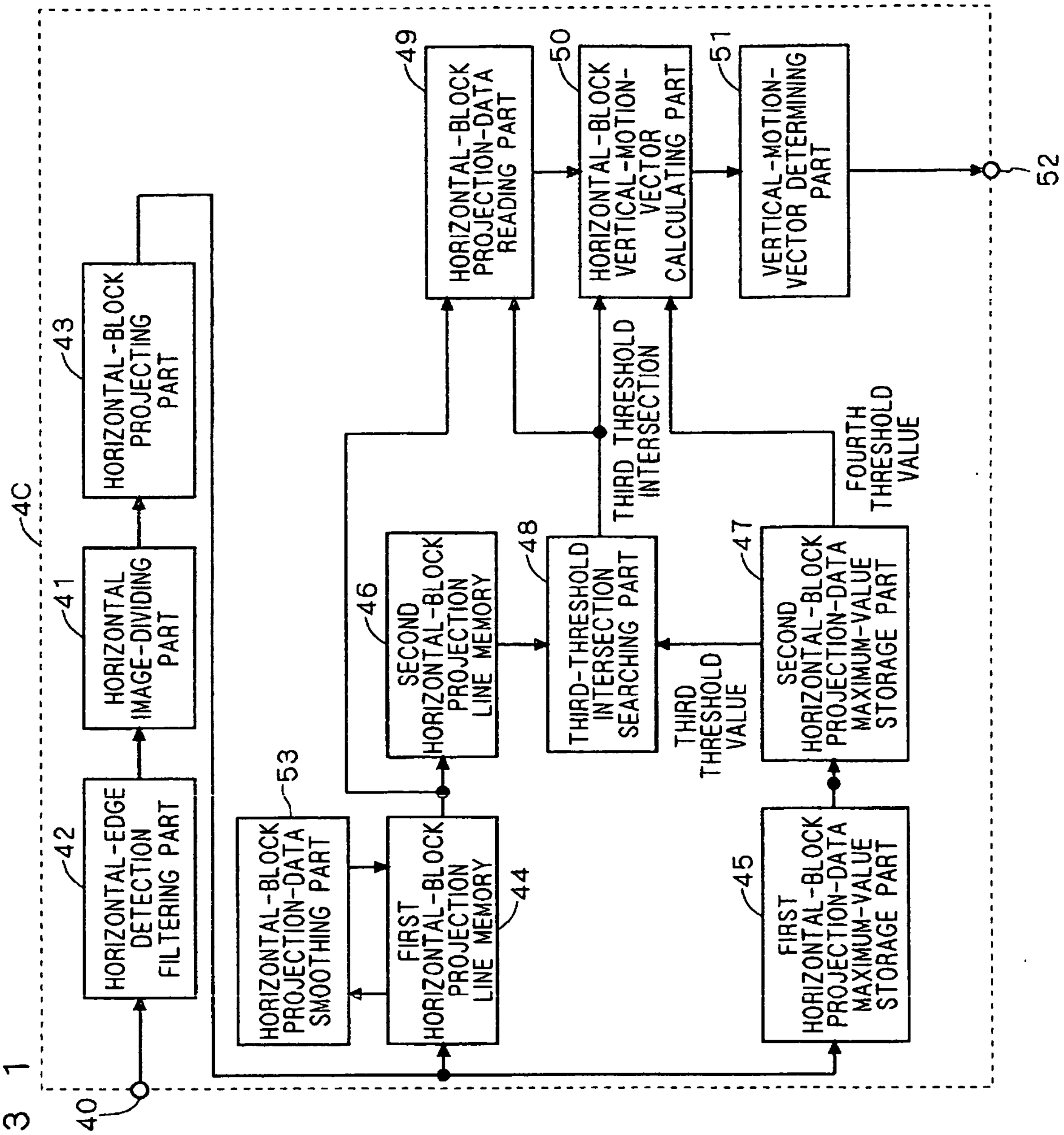

4C
40
42
HORIZONTAL-EDGE DETECTION FILTERING PART
41
HORIZONTAL IMAGE-DIVIDING PART
43
HORIZONTAL-BLOCK PROJECTING PART
53
HORIZONTAL-BLOCK PROJECTION-DATA SMOOTHING PART
44
FIRST HORIZONTAL-BLOCK PROJECTION LINE MEMORY
46
SECOND HORIZONTAL-BLOCK PROJECTION LINE MEMORY
45
FIRST HORIZONTAL-BLOCK PROJECTION-DATA MAXIMUM-VALUE STORAGE PART
47
SECOND HORIZONTAL-BLOCK PROJECTION-DATA MAXIMUM-VALUE STORAGE PART
THIRD THRESHOLD VALUE
48
THIRD-THRESHOLD INTERSECTION SEARCHING PART
THIRD THRESHOLD INTERSECTION
FOURTH THRESHOLD VALUE
49
HORIZONTAL-BLOCK PROJECTION-DATA READING PART
50
HORIZONTAL-BLOCK VERTICAL-MOTION-VECTOR CALCULATING PART
51
VERTICAL-MOTION-VECTOR DETERMINING PART
52

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 3164121 A
- JP H10240945 B
- JP 2002063578 A
- JP 3314556 B
- WO 2006101032 A1


### Non-patent literature cited in the description


- **JOON KI PAIK et al.** An adaptive motion decision system for digital image stabilizer based on edge pattern matching. *IEEE Transactions on consume electronics,* 01 August 1992
- **SEKINE M et al.** *Motion Vector Detecting System for Video Image Stabilizers,* 21 June 1994